# EUROPEAN PATENT SPECIFICATION

(11) **EP 2 610 315 B1**
(45) Date of publication and mention of the grant of the patent: **31.08.2016**
(21) Application number: 13161164.2
(22) Date of filing: 06.12.2004
(51) Int. Cl.: C09B 23/06, G01N 33/58

(54) **Methine-substituted cyanine dye compounds**
Methinsubstituierte Cyaninfarbstoffverbindungen
Colorants cyanine à groupes méthines substitués

(30) Priority: 05.12.2003 US 527234 P; 18.03.2004 US 554452 P
(43) Date of publication of application: 03.07.2013
(62) Divisional of application: 04813231.0
(73) Proprietor: Life Technologies Corporation, Carlsbad, CA 92008 (US)
(72) Inventor: Dalwig, Jason, Eugene, OR Oregon 97402 (US); Hagen, David, Eugene, OR 97405 (US); Huang, Timothy, Eugene, OR Oregon 97402 (US); Thomas, Jerry, Eugene, OR Oregon 97402 (US); Yue, Stephen, Eugene, OR 97405 (US)
(74) Representative: Selby, David Sean

(56) References cited:
- EP-A- 0 805 376
- EP-A- 0 985 964
- WO-A-00/66664
- US-A- 5 578 439
- US-A- 6 153 370

## Description

### INTRODUCTION

### Field of the Invention

The present invention relates to cyanine compounds useful for staining nucleic acids, including RNA. The invention has applications in the fields of molecular biology, particularly with respect to fluorescence-based assays.

### Background of the Invention

In selected fields of life sciences research, including for example biological, biomedical, genetic, fermentation, aquaculture, agricultural, forensic and environmental research, there may often occur the need to identify nucleic acids, qualitatively and quantitatively, in pure solutions and in biological samples. Such applications may benefit from fast, sensitive, and selective methodologies for detecting and/or quantifying nucleic acids of interest.

WO 00/66664 discloses unsymmetrical cyanine dyes that incorporate an aza-benzazolium ring moiety, including cyanine dyes substituted by a cationic side chain, monomeric and dimeric cyanine dyes, chemically reactive cyanine dyes, and conjugates of cyanine dyes. The dyes of WO 00/66664 are virtually non-fluorescent when diluted in aqueous solution, but exhibit bright fluorescence when associated with nucleic acid polymers such as DNA or RNA, or when associated with detergent-complexed proteins. A variety of applications are described in WO 00/66664 for detection and quantitation of nucleic acids and detergent-complexed proteins in a variety of samples, including solutions, electrophoretic gels, cells, and microorganisms.

EP0985964 describes photographic material having enhanced light absorption. The photographic material comprises a silver halide photographic material comprising at least one silver halide emulsion comprising tabular silver halide grains having associated therewith at least two dye layers comprising (a) an inner dye layer adjacent to the silver halide grain and comprising at least one dye that is capable of spectrally sensitizing silver halide and (b) an outer dye layer adjacent to the inner dye layer and comprising at least one dye. A number of the dyes that are disclosed comprise two substituted benzothiazole structures.

US 6153370 discloses a light-sensitive silver halide photographic emulsion, which comprises light-sensitive silver halide grains mainly composed of (100) planes and (111) planes, at least one compound that is adsorbed selectively on the (100) planes of the silver halide grains, and at least one spectrally sensitizing dye. A number of the dyes that are disclosed comprise at least one substituted benzothiazole structure.

EP 0805376 discloses photothermographic material comprising an organic silver salt, a silver halide, and a reducing agent, a hydrazine compound of a specified structure and a sensitizing dye of a specified structure. A number of the sensitizing dyes that are disclosed comprise two substituted benzothiazole structures connected by a linker.

US 5578439 describes a silver halide photographic material, which contains a methane compound represented by a specified formula. A number of the methine compounds comprise two substituted benzothiazole structures.

In particular, it may be helpful in some research venues to provide molecular species that at least somewhat selectively stain RNA even in the presence of DNA. That is, the probe or reagent may permit the researcher to distinguish RNA present in a sample from DNA in the same sample.

### SUMMARY

The present invention relates to nucleic acid reporter compounds, which are cyanine dyes that comprise at substituted methine bridge. These reporter compounds find use as nucleic acid stains, particularly for the fluorescent detection/quantitation of DNA.

The compounds of the invention have the formula: 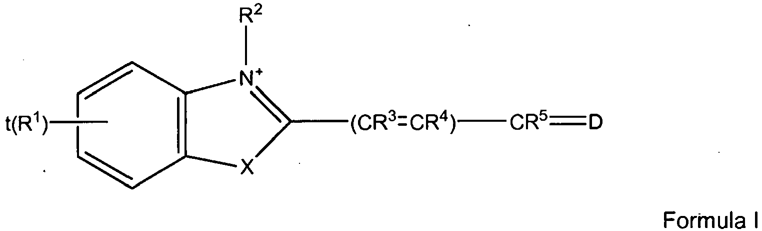 each R¹ is independently hydrogen, carboxy, sulfo, phosphate, phosphonate, amino, hydroxyl, trifluoromethyl, halogen, alkyl, substituted alkyl, alkoxy, substituted alkoxy, alkylamino, substituted alkylamino, dialkylamino, substituted dialkylamino, aminoalkyl, substituted aminoalkyl, fused benzene, substituted fused benzene, reactive group, solid support or carrier molecule;
wherein the reactive group is an acrylamide, a carboxylic acid, an activated ester of a carboxylic acid, a succinimidyl ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group;
wherein the carrier molecule is an amino acid, an antibody or fragment thereof, an avidin, streptavidin, a biotin, a blood component protein, a dextran, a drug, an enzyme, an enzyme inhibitor, a hapten, a hormone, an IgG binding protein, a fluorescent protein, a growth factor, a lectin, a lipid, a lipid assembly, a lipopolysaccharide, a microorganism, a metal binding protein, a metal chelating moiety, a non-biological microparticle, a polymeric microparticle, a nucleoside, a nucleotide, a nucleic acid polymer, an oligonucleotide, a peptide, a peptide toxin, a phosphotidylserine-binding protein, a protein, a polysaccharide, a psoralen, a structural protein, a small-molecule drug, a synthetic polymer, a tyramide, a biological cell or a virus;
wherein the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, superparamagnetic bead, sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch;
t is an integer from 1 to 4;
wherein R² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium;
at least one of R³ and R⁵ is an alkyl, substituted alkyl, a 5-, 6- or 7- membered heterocycloalkyl, a substituted 5-, 6- or 7- membered heterocycloalkyl, a 5-, 6- or 7-membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl; and the remaining R³ or R⁵ is hydrogen; or R³ and R⁵ are both hydrogen;
R⁴ is a phenyl substituent, substituted by one or more of F, Cl, CF₃, -CO₂CH₃, NO₂, amino, C₁-C₆ alkoxy, phenoxy, and C₁-C₆alkyl that is itself optionally further substituted by amino, sulfo, or carboxy;
X is S, O, or Se; and
D is a substituted pyridinium, unsubstituted pyridinium, substituted quinolinium, unsubstituted quinolinium, substituted benzazolium or unsubstituted benzazolium moiety.

These nucleic acid reporter molecules exhibit a fluorescence enhancement when non-covalently associated with a nucleic acid molecule. In one aspect, the fluorescence enhancement is greater when the nucleic acid is RNA than when the nucleic acid is DNA

In one aspect R¹ is alkoxy or halogen. In another aspect R¹ is methoxy, Br, Cl, or F.

In an exemplary embodiment, D has the formula: 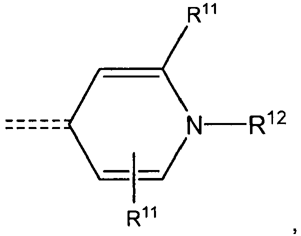 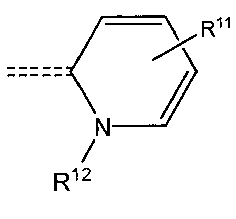 or 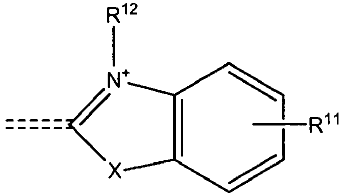 wherein R¹¹ is hydrogen, substituted alkyl, unsubstituted alkyl, substituted heteroalkyl, unsubstituted heteroalkyl, substituted aryl, unsubstituted aryl, substituted arylalkyl, unsubstituted arylalkyl, substituted heteroarylalkyl; unsubstituted heteroarylalkyl, substituted heteroaryl, unsubstituted heteroaryl substituted cycloalkyl, unsubstituted cycloalkyl, substituted heterocycloalkyl, unsubstituted heterocycloalkyl, halogen, alkoxy, substituted alkylamino, unsubstituted alkylamino, substituted alkylthio, unsubstituted alkylthio, reactive group, solid support, or carrier molecule and R¹² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium. Alternatively, R¹¹ in combination with an adjacent R¹¹ or R¹², together with the atoms to which they are joined, form a ring which is a 5-, 6- or 7-membered heterocycloalkyl, a substituted 5-, 6- or 7- membered heterocycloalkyl, a 5-, 6- or 7- membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl.

In an exemplary embodiment of the kits, the nucleic acid reporter molecule has the formula: 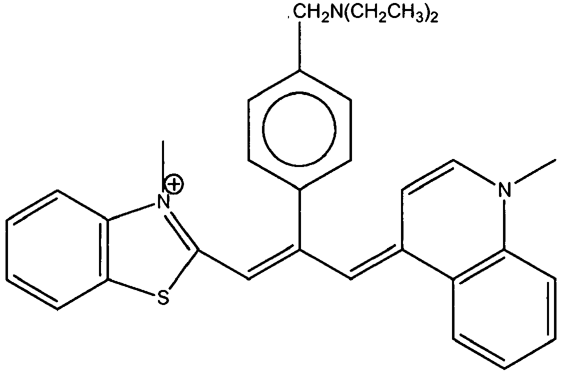 or the formula

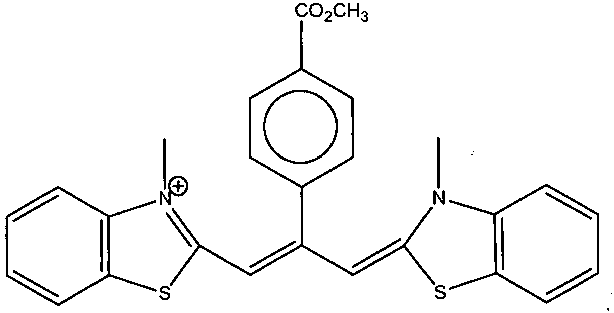

Additional embodiments of the present invention provide methods of detecting the presence or absence of nucleic acid, including method for detecting the presence or absence of RNA in the presence of DNA. The present methods comprise:
a. combining a present nucleic acid reporter molecule that is a compound of the invention with the sample to prepare a labeling mixture;
b. incubating the labeling mixture for a sufficient amount of time for the nucleic acid reporter molecule to associate with nucleic acid in the sample to form an incubated mixture;
c. illuminating the incubated sample with an appropriate wavelength to form an illuminated mixture; and,
d. observing the illuminated mixture whereby the presence or absence of the nucleic acid in a sample is detected.

In one aspect, the nucleic acid reporter molecule has a RNA/DNA ratio of fluorescence enhancement greater than about one.

Also provided is a staining solution comprising a present nucleic acid reporter molecule that is a compound of the invention and a detergent. The detergent is typically present in an aqueous solution at a concentration from about .0001 % to about 0.05%. Detergents include 3-[(3-cholamidopropyl)dimethylammonio]-propanesulfate CHAPS, Triton™-X,sodium dodecyl sulfate (SDS) and Tween 20^{®}. In a further aspect, the staining solution contains a low concentration of DNA, a low concentration being about 0.1 µg/ml to about 0.5 µg/ml.

Further embodiments provide complexes of the compounds of the present invention non-covalently associated with nucleic acid and compositions comprising a present compound and a sample. In one aspect the sample comprises biological fluids, buffer solutions, live cells, fixed cells, eukaryotic cells, prokaryotic cells, nucleic acid polymers, nucleotides, nucleosides, a polymeric gel or tissue sections. In a further aspect the sample is present in an aqueous solution, in or on a microarray or a microwell plate.

Additional embodiments of the present invention provide kits for the detection of nucleic acid, wherein the kit comprises any compound of the present invention. In a further embodiment, the kits comprise instructions for the detection of nucleic acid, particularly instructions for the detection of RNA in the presence of DNA. In yet another further embodiment, the kits comprises at least one component that is a sample preparation reagent, a buffering agent, an organic solvent, an aqueous nucleic acid reporter molecule dilution buffer, nucleic acid control, or an additional detection reagent.

Additional embodiments provide a composition comprising a nucleic acid reporter molecule that is a compound of the invention and a sample.

### BRIEF DESCRIPTION OF THE FIGURES

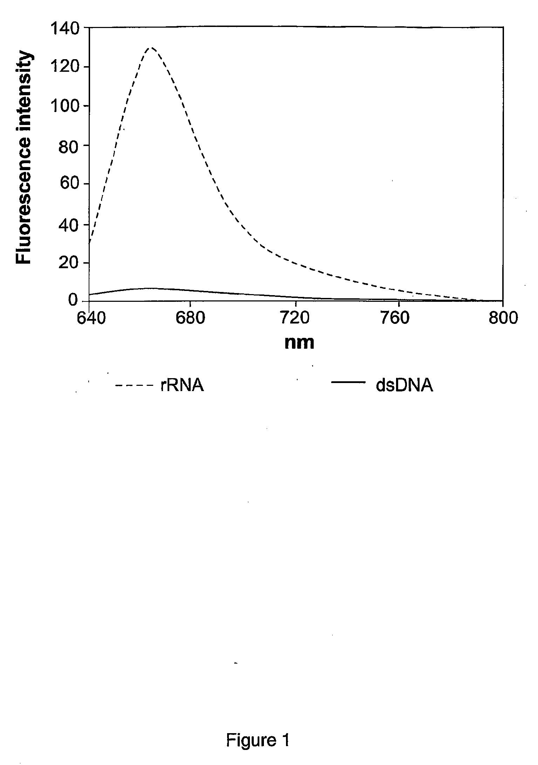

**Figure 1****:** A plot showing the intensity and emission spectra of the fluorescent signal from Compound **20** when associated with either rRNA or DNA (calf thymus) in solution, with excitation at 630 nm, as described in Example 7. Compound **20** demonstrates a 12 to 13-fold increase in signal when bound to RNA when compared to DNA.

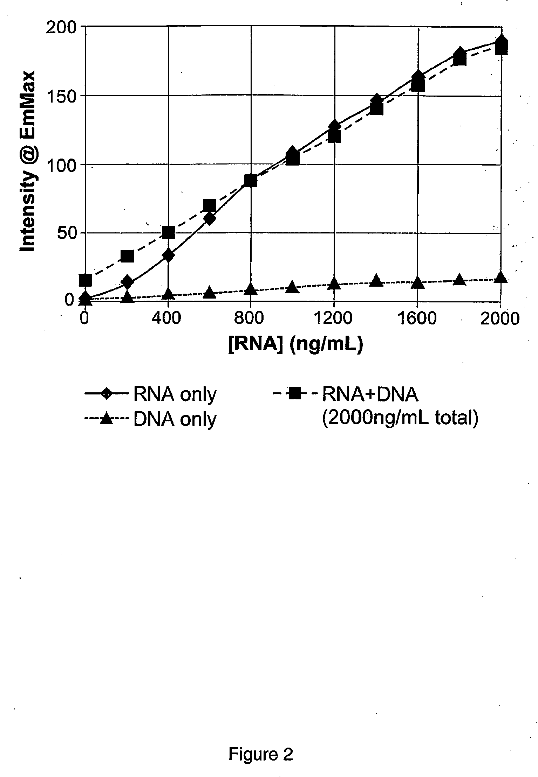

**Figure 2****:** A plot showing the intensity of the fluorescent signal from Compound **20** in the presence of rRNA, DNA (calf thymus) and a mixture of RNA and DNA in solution. The results indicate that Compound **20,** in solution, demonstrates selectivity for rRNA in the presence of 1000 ng/ml of DNA, as described in Example 9.

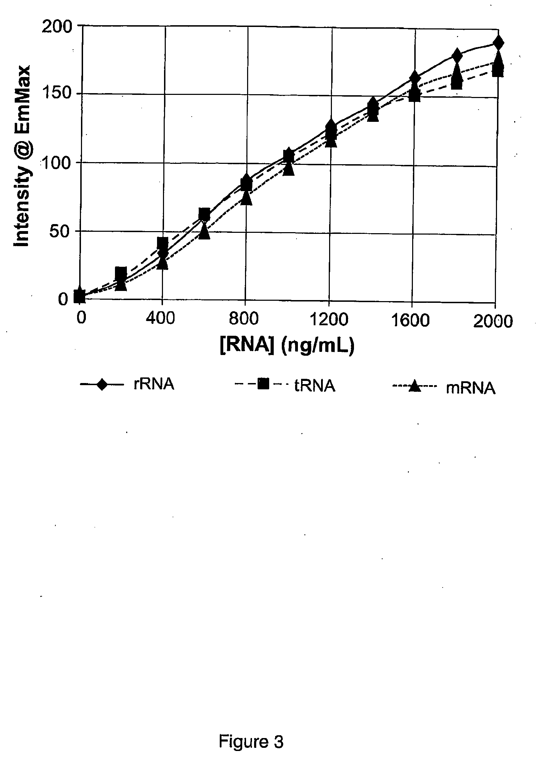

**Figure 3****:** A plot showing the fluorescence intensity of Compound **20** when associated with rRNA, tRNA and mRNA, respectively, in increasing concentrations of the RNA. Compound **20** demonstrates an equal affinity for the three different species of RNA, as described in Example 8.

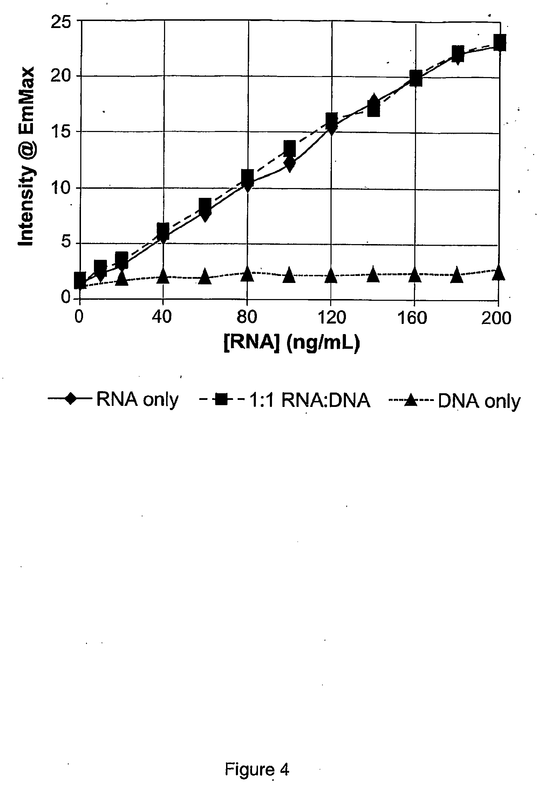

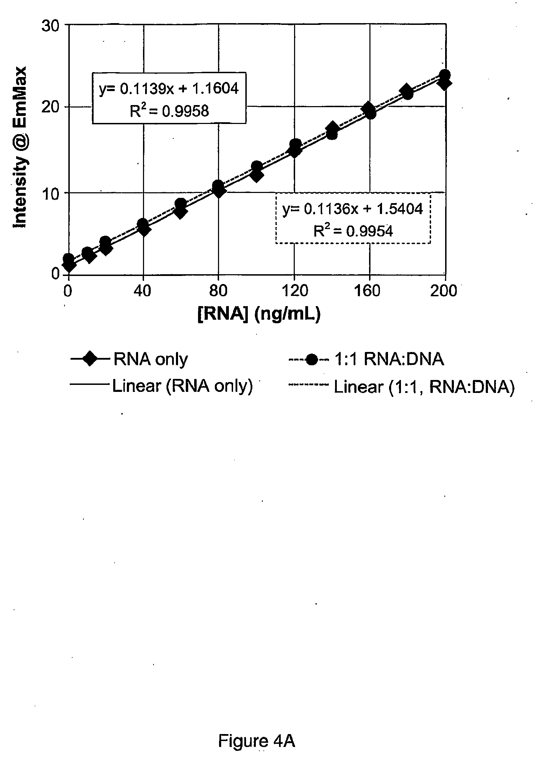

**Figure 4****:** A plot showing the intensity of the fluorescent signal from Compound **20** at 0.025 µM when bound to varying concentrations of rRNA, or a 1:1 mixture of RNA and DNA in solution. Figure 4 is an overlay of two graphs with concentration of RNA 0-200 ng/mL, as described in Example 10.
Figure 4A: A plot showing the linear correlations of the plots of Fig. 4. The similarity of the relationship between fluorescence emission intensity and RNA concentration, even in the presence of varying amounts of DNA, show the selectivity of Compound 20 for RNA., as described in Example 10.

### DETAILED DESCRIPTION

### Definitions

Before describing the present invention in detail, it is to be understood that this invention is not limited to specific compositions or process steps, as such may vary. It must be noted that, as used in this specification and the appended claims, the singular form "a", "an" and "the" include plural referents unless the context clearly dictates otherwise. Thus, for example, reference to "a compound" includes a plurality of compounds and reference to "a nucleic acid" includes a plurality of nucleic acids and the like.

Unless defined otherwise, all technical and scientific terms used herein have the same meaning as commonly understood by one of ordinary skill in the art to which this invention is related. The following terms are defined for the purposes of understanding the present disclosure.

Certain compounds of the present invention can exist in unsolvated forms as well as solvated forms, including hydrated forms. In general, the solvated forms are equivalent to unsolvated forms and are encompassed within the scope of the present invention. Certain compounds of the present invention may exist in multiple crystalline or amorphous forms. In general, all physical forms are equivalent for the uses contemplated by the present invention and are intended to be within the scope of the present invention.

Certain compounds of the present invention possess asymmetric carbon atoms (optical centers) or double bonds; the racemates, diastereomers, geometric isomers and individual isomers are encompassed within the scope of the present invention.

The compounds described herein may be prepared as a single isomer (e.g., enantiomer, *cis-trans,* positional, diastereomer) or as a mixture of isomers. In a preferred embodiment, the compounds are prepared as substantially a single isomer. Methods of preparing substantially isomerically pure compounds are known in the art. For example, enantiomerically enriched mixtures and pure enantiomeric compounds can be prepared by using synthetic intermediates that are enantiomerically pure in combination with reactions that either leave the stereochemistry at a chiral center unchanged or result in its complete inversion. Alternatively, the final product or intermediates along the synthetic route can be resolved into a single stereoisomer. Techniques for inverting or leaving unchanged a particular stereocenter, and those for resolving mixtures of stereoisomers are well known in the art and it is well within the ability of one of skill in the art to choose and appropriate method for a particular situation. *See,* generally, Furniss et al. (eds.),VOGEL'S ENCYCLOPEDIA OF PRACTICAL ORGANIC CHEMISTRY 5TH ED., Longman Scientific and Technical Ltd., Essex, 1991, pp. 809-816; and Heller, Acc. Chem. Res. 23: 128 (1990).

The compounds disclosed herein may also contain unnatural proportions of atomic isotopes at one or more of the atoms that constitute such compounds. For example, the compounds may be radiolabeled with radioactive isotopes, such as for example tritium (³H), iodine-125 (¹²⁵I) or carbon-14 (¹⁴C). All isotopic variations of the compounds of the present invention, whether radioactive or not, are intended to be encompassed within the scope of the present invention.

Where a disclosed compound includes a conjugated ring system, resonance stabilization may permit a formal electronic charge to be distributed over the entire molecule. While a particular charge may be depicted as localized on a particular ring system, or a particular heteroatom, it is commonly understood that a comparable resonance structure can be drawn in which the charge may be formally localized on an alternative portion of the compound.

Selected compounds having a formal electronic charge may be shown without an appropriate biologically compatible counterion. Such a counterion serves to balance the positive or negative charge present on the compound. As used herein, a substance that is biologically compatible is not toxic as used, and does not have a substantially deleterious effect on biomolecules. Examples of negatively charged counterions include, among others, chloride, bromide, iodide, sulfate, alkanesulfonate, arylsulfonate, phosphate, perchlorate, tetrafluoroborate, tetraarylboride, nitrate and anions of aromatic or aliphatic carboxylic acids. Preferred counterions may include chloride, iodide, perchlorate and various sulfonates. Examples of positively charged counterions include, among others, alkali metal, or alkaline earth metal ions, ammonium, or alkylammonium ions.

Where substituent groups are specified by their conventional chemical formulae, written from left to right, they equally encompass the chemically identical substituents, which would result from writing the structure from right to left, e.g., -CH₂O- is intended to also recite -OCH₂-.

The term "acyl" or "alkanoyl" by itself or in combination with another term, means, unless otherwise stated, a stable straight or branched chain, or cyclic hydrocarbon radical, or combinations thereof, consisting of the stated number of carbon atoms and an acyl radical on at least one terminus of the alkane radical. The "acyl radical" is the group derived from a carboxylic acid by removing the -OH moiety therefrom.

The term "affinity" as used herein refers to the strength of the binding interaction of two molecules, such as a nucleic acid polymer and an intercalating agent or a positively charged moiety and a negatively charged moiety.

The term "alkyl," by itself or as part of another substituent means, unless otherwise stated, a straight or branched chain, hydrocarbon radical, or combination thereof, which may include divalent ("alkylene") and multivalent radicals, having the number of carbon atoms designated *(i.e.* C₁-C₁₀ means one to ten carbons). Examples of saturated hydrocarbon radicals include, but are not limited to, groups such as methyl, ethyl, n-propyl, isopropyl, n-butyl, t-butyl, isobutyl, sec-butyl, cyclohexyl, (cyclohexyl)methyl, cyclopropylmethyl, homologs and isomers of, for example, n-pentyl, n-hexyl, n-heptyl, n-octyl, and the like.

Exemplary alkyl groups of use in the present invention contain between one and twenty five carbon atoms (e.g. methyl, ethyl and the like). Straight or branched hydrocarbon chains having eight or fewer carbon atoms will also be referred to herein as "lower alkyl". In addition, the term "alkyl" as used herein further includes one or more substitutions at one or more carbon atoms of the hydrocarbon chain fragment.

The term "aryl" as used herein refers to cyclic aromatic carbon chain having twenty or fewer carbon atoms, e.g., phenyl, naphthyl, biphenyl, and anthracenyl. One or more carbon atoms of the aryl group may also be substituted with, e.g., alkyl; aryl; heteroaryl; a halogen; nitro; cyano; hydroxyl, alkoxyl or aryloxyl; thio or mercapto, alkyl-, or arylthio; amino, alkylamino, arylamino, dialkyl-, diaryl-, or arylalkylamino; aminocarbonyl, alkylaminocarbonyl, arylaminocarbonyl, dialkylaminocarbonyl, diarylaminocarbonyl, or arylalkylaminocarbonyl; carboxyl, or alkyl- or aryloxycarbonyl; aldehyde; aryl- or alkylcarbonyl; iminyl, or aryl- or alkyliminyl; sulfo; alkyl- or alkylcarbonyl; iminyl, or aryl- or alkyliminyl; sulfo; alkyl- or arylsufonyl; hydroximinyl, or aryl- or alkoximinyl. In addition, two or more alkyl or heteroalkyl substituents of an aryl group may be combined to form fused aryl-alkyl or aryl-heteroalkyl ring systems (e.g., tetrahydronaphthyl). Substituents including heterocyclic groups (e.g., heteroaryloxy, and heteroaralkylthio) are defined by analogy to the above-described terms.

The terms "alkoxy," "alkylamino" and "alkylthio" (or thioalkoxy) are used in their conventional sense, and refer to those alkyl groups attached to the remainder of the molecule via an oxygen atom, an amino group, or a sulfur atom, respectively.

The term "heteroalkyl," by itself or in combination with another term, means, unless otherwise stated, a straight or branched chain, or cyclic carbon-containing radical, or combinations thereof, consisting of the stated number of carbon atoms and at least one heteroatom selected from the group consisting of O, N, Si, P, Se, and S, and wherein the nitrogen, phosphorous and sulfur atoms are optionally oxidized, and the nitrogen heteroatom is optionally be quaternized. The heteroatom(s) O, N, P, S, Se, and Si may be placed at any interior position of the heteroalkyl group or at the position at which the alkyl group is attached to the remainder of the molecule. Examples include, but are not limited to, -CH2-CH₂-O-CH₃, -CH₂-CH₂-NH-CH₃, -CH₂-CH₂-N(CH₃)-CH₃, -CH₂-S-CH₂-CH₃, -CH₂-CH₂,-S(O)-CH₃, -CH₂-CH₂-S(O)₂-CH₃, -CH=CH-O-CH₃, -Si(CH₃)₃, -CH₂-CH=N-OCH₃, and -CH=CH-N(CH₃)-CH₃. Up to two heteroatoms may be consecutive, such as, for example, -CH₂-NH-OCH₃ and -CH₂-O-Si(CH₃)₃. Similarly, the term "heteroalkylene" by itself or as part of another substituent means a divalent radical derived from heteroalkyl, as exemplified, but not limited by, -CH₂-CH₂-S-CH₂-CH₂- and -CH₂-S-CH₂-CH₂-NH-CH₂-. For heteroalkylene groups, heteroatoms can also occupy either or both of the chain termini (e.g., alkyleneoxy, alkylenedioxy, alkyleneamino, alkylenediamino, and the like). Still further, for alkylene and heteroalkylene linking groups, no orientation of the linking group is implied by the direction in which the formula of the linking group is written. For example, the formula -C(O)₂R'-represents both -C(O)₂R'- and -R'C(O)₂-.

The terms "cycloalkyl" and "heterocycloalkyl", by themselves or in combination with other terms, represent, unless otherwise stated, cyclic versions of "alkyl" and "heteroalkyl", respectively. Additionally, for heterocycloalkyl, a heteroatom can occupy the position at which the heterocycle is attached to the remainder of the molecule. Examples of cycloalkyl include, but are not limited to, cyclopentyl, cyclohexyl, 1-cyclohexenyl, 3-cyclohexenyl, cycloheptyl, and the like. Examples of heterocycloalkyl include, but are not limited to, 1 - (1,2,5,6-tetrahydropyridyl), 1-piperidinyl, 2-piperidinyl, 3-piperidinyl, 4-morpholinyl, 3-morpholinyl, tetrahydrofuran-2-yl, tetrahydrofuran-3-yl, tetrahydrothien-2-yl, tetrahydrothien-3-yl, 1 -piperazinyl, 2-piperazinyl, and the like.

The term "heteroaryl" refers to aryl groups (or rings) that contain from one to four heteroatoms selected from N, O, S, and Se wherein the nitrogen and sulfur atoms are optionally oxidized, and the nitrogen atom(s) are optionally quaternized. A heteroaryl group can be attached to the remainder of the molecule through a heteroatom. Non-limiting examples of aryl and heteroaryl groups include phenyl, 1-naphthyl, 2-naphthyl, 4-biphenyl, 1-pyrrolyl, 2-pyrrolyl, 3-pyrrolyl, 3-pyrazolyl, 2-imidazolyl, 4-imidazolyl, pyrazinyl, 2-oxazolyl, 4-oxazolyl, 2-phenyl-4-oxazolyl, 5-oxazolyl, 3-isoxazolyl, 4-isoxazolyl, 5-isoxazolyl, 2-thiazolyl, 4-thiazolyl, 5-thiazolyl, 2-furyl, 3-furyl, 2-thienyl, 3-thienyl, 2-pyridyl, 3-pyridyl, 4-pyridyl, 2-pyrimidyl, 4-pyrimidyl, 5-benzothiazolyl, purinyl, 2-benzimidazolyl, 5-indolyl, 1-isoquinolyl, 5-isoquinolyl, 2-quinoxalinyl, 5-quinoxalinyl, 3-quinolyl, tetrazolyl, benzo[b]furanyl, benzo[b]thienyl, 2,3-dihydrobenzo[1,4]dioxin-6-yl, benzo[1,3]dioxol-5-yl and 6-quinolyl. Substituents for each of the above noted aryl and heteroaryl ring systems are selected from the group of acceptable substituents described below.

For brevity, the term "aryl" when used in combination with other terms (*e.g*., aryloxy, arylthioxy, arylalkyl) includes both aryl and heteroaryl rings as defined above. Thus, the term "arylalkyl" is meant to include those radicals in which an aryl group is attached to an alkyl group (*e.g*., benzyl, phenethyl, pyridylmethyl and the like) including those alkyl groups in which a carbon atom (*e.g*., a methylene group) has been replaced by, for example, an oxygen atom (*e.g*., phenoxymethyl, 2-pyridyloxymethyl, 3-(1-naphthyloxy)propyl, and the like).

Each of the above terms (*e.g*., "alkyl," "heteroalkyl," "aryl" and "heteroaryl") includes both substituted and unsubstituted forms of the indicated radical. Preferred substituents for each type of radical are provided below.

Substituents for the alkyl and heteroalkyl radicals (including those groups often referred to as alkylene, alkenyl, heteroalkylene, heteroalkenyl, alkynyl, cycloalkyl, heterocycloalkyl, cycloalkenyl, and heterocycloalkenyl) are generically referred to as "alkyl group substituents," and they can be one or more of a variety of groups selected from, but not limited to: -OR', =O, =NR', =N-OR', -NR'R", -SR', -halogen, -SiR'R"R"', -OC(O)R', -C(O)R',-CO₂R', -CONR'R", -OC(O)NR'R", -NR"C(O)R', -NR'-C(O)NR"R"', -NR"C(O)₂R', -NR-C(NR'R"R"')=NR"", -NR-C(NR'R")=NR"', -S(O)R', -S(O)₂R', -S(O)₂NR'R", -NRSO₂R', -CN and -NO₂ in a number ranging from zero to (2m'+1), where m' is the total number of carbon atoms in such radical. R', R", R"' and R"" each preferably independently refer to hydrogen, substituted or unsubstituted heteroalkyl, substituted or unsubstituted aryl, e.g., aryl substituted with 1-3 halogens, substituted or unsubstituted alkyl, alkoxy or thioalkoxy groups, or arylalkyl groups. When a compound includes more than one R group, for example, each of the R groups is independently selected as are each R', R", R'" and R"" groups when more than one of these groups is present. When R' and R" are attached to the same nitrogen atom, they can be combined with the nitrogen atom to form a 5-, 6-, or 7-membered ring. For example, -NR'R" is meant to include, but not be limited to, 1-pyrrolidinyl and 4-morpholinyl. From the above discussion of substituents, one of skill in the art will understand that the term "alkyl" is meant to include groups including carbon atoms bound to groups other than hydrogen groups, such as haloalkyl (*e.g*., -CF₃ and -CH₂CF₃) and acyl (*e.g.,* -C(O)CH₃,-C(O)CF₃, -C(O)CH₂OCH₃, and the like).

Similar to the substituents described for the alkyl radical, substituents for the aryl and heteroaryl groups are generically referred to as "aryl group substituents." The substituents are selected from, for example: halogen, -OR', =O, =NR', =N-OR', -NR'R", -SR', -halogen,-SiR'R"R"', -OC(O)R', -C(O)R', -CO₂R', -CONR'R", -OC(O)NR'R", -NR"C(O)R', -NR'-C(O)NR"R"', -NR"C(O)₂R', -NR-C(NR'R"R"')=NR"", -NR-C(NR'R")=NR"', -S(O)R',-S(O)₂R', -S(O)₂NR'R", -NRSO₂R', -CN and -NO₂, -R', -N₃, -CH(Ph)₂, fluoro(C₁-C₄)alkoxy, and fluoro(C₁-C₄) alkyl, in a number ranging from zero to the total number of open valences on the aromatic ring system; and where R', R", R"' and R"" are preferably independently selected from hydrogen, substituted or unsubstituted alkyl, substituted or unsubstituted heteroalkyl, substituted or unsubstituted aryl and substituted or unsubstituted heteroaryl. When a compound includes more than one R group, for example, each of the R groups is independently selected as are each R', R", R'" and R"" groups when more than one of these groups is present. In the schemes that follow, the symbol X represents "R" as described above.

Two of the substituents on adjacent atoms of the aryl or heteroaryl ring may optionally be replaced with a substituent of the formula -T-C(O)-(CRR')_{q}-U-, wherein T and U are independently -NR-, -O-, -CRR'- or a single bond, and q is an integer of from 0 to 3. Alternatively, two of the substituents on adjacent atoms of the aryl or heteroaryl ring may optionally be replaced with a substituent of the formula -A-(CH₂)ᵣ-B-, wherein A and B are independently -CRR'-, -O-, -NR-, -S-, -S(O)-, -S(O)₂-, -S(O)₂NR'- or a single bond, and r is an integer of from 1 to 4. One of the single bonds of the new ring so formed may optionally be replaced with a double bond. Alternatively, two of the substituents on adjacent atoms of the aryl or heteroaryl ring may optionally be replaced with a substituent of the formula-(CRR')ₛ-X-(CR"R"')_{d}-, where s and d are independently integers of from 0 to 3, and X is -0-, -NR'-, -S-, -S(O)-, -S(O)₂-, or -S(O)₂NR'-. The substituents R, R', R" and R'" are preferably independently selected from hydrogen or substituted or unsubstituted (C₁-C₆)alkyl.

As used herein, the term "heteroatom" includes oxygen (O), nitrogen (N), sulfur (S), phosphorus (P), selenium (Se), and silicon (Si), among others.

The term "amino" or "amine group" refers to the group -NR'R" (or N⁺RR'R") where R, R' and R" are independently selected from the group consisting of hydrogen, alkyl, substituted alkyl, aryl, substituted aryl, aryl alkyl, substituted aryl alkyl, heteroaryl, and substituted heteroaryl. A substituted amine being an amine group wherein R' or R" is other than hydrogen. In a primary amino group, both R' and R" are hydrogen, whereas in a secondary amino group, either, but not both, R' or R" is hydrogen. In addition, the terms "amine" and "amino" can include protonated and quaternized versions of nitrogen, comprising the group -N⁺RR'R" and its biologically compatible anionic counterions.

The term "attachment site" as used herein refers to a site on a moiety or a molecule, e.g. a quencher, or a fluorescent dye, to which is covalently attached, or capable of being covalently attached, to a linker or another moiety.

The term "aqueous solution" as used herein refers to a solution that is predominantly water and retains the solution characteristics of water. Where the aqueous solution contains solvents in addition to water, water is typically the predominant solvent.

The term "Carboxyalkyl" as used herein refers to a group having the general formula-(CH₂)ₙCOOH wherein n is 1-18.

The term "carrier molecule" as used herein refers to a biological or a non-biological component that is covalently bonded to a compound. Such components include, but are not limited to, an amino acid, a peptide, a protein, a polysaccharide, a nucleoside, a nucleotide, an oligonucleotide, a nucleic acid, a hapten, a psoralen, a drug, a hormone, a lipid, a lipid assembly, a synthetic polymer, a polymeric microparticle, a biological cell, a virus and combinations thereof.

The term "complex" as used herein refers to the association of two or more molecules, usually by non-covalent bonding.

The term "cyanine dye" as used herein refers to a fluorogenic compound that comprises 1) a substituted or unsubstituted benzazolium moiety, 2) a polymethine bridge and 3) a substituted or unsubstituted benzazolium, pyridinium or quinolinium moiety. These monomer or dye moieties are capable of forming a non-covalent complex with nucleic acids and demonstrating an increased fluorescent signal after formation of the nucleic acid-dye complex.

The term "detectable response" as used herein refers to a change in or an occurrence of, a signal that is directly or indirectly detectable either by observation or by instrumentation. Typically, the detectable response is an optical response resulting in a change in the wavelength distribution patterns or intensity of absorbance or fluorescence or a change in light scatter, fluorescence lifetime, fluorescence polarization, or a combination of the above parameters.

The term "kit" as used refers to a packaged set of related components, typically one or more compounds or compositions.

The term "Linker" or "L", as used herein, refers to a single covalent bond or a series of stable covalent bonds incorporating 1-20 nonhydrogen atoms selected from the group consisting of C, N, O, S and P that covalently attach the fluorogenic or fluorescent compounds to another moiety such as a chemically reactive group or a biological and non-biological component. Exemplary linking members include a moiety that includes -C(O)NH-, -C(O)O-, -NH-, -S-, -O-, and the like. A "cleavable linker" is a linker that has one or more cleavable groups that may be broken by the result of a reaction or condition. The term "cleavable group" refers to a moiety that allows for release of a portion, e.g., a fluorogenic or fluorescent moiety, of a conjugate from the remainder of the conjugate by cleaving a bond linking the released moiety to the remainder of the conjugate. Such cleavage is either chemical in nature, or enzymatically mediated. Exemplary enzymatically cleavable groups include natural amino acids or peptide sequences that end with a natural amino acid.

In addition to enzymatically cleavable groups, it is within the scope of the present invention to include one or more sites that are cleaved by the action of an agent other than an enzyme. Exemplary non-enzymatic cleavage agents include, but are not limited to, acids, bases, hydroxylamine, light (e.g., nitrobenzyl derivatives, phenacyl groups, benzoin esters), and heat. Many cleavable groups are known in the art. See, for example, Jung et al., Biochim. Biophys. Acta, 761: 152-162 (1983); Joshi et al., J. Biol. Chem., 265: 14518-14525 (1990); Zarling et al., J. Immunol., 124: 913-920 (1980); Bouizar et al., Eur. J. Biochem., 155:141-147 (1986); Park et al., J. Biol. Chem., 261: 205-210 (1986); Browning et al., J. Immunol., 143: 1859-1867 (1989). Moreover, a broad range of cleavable, bifunctional (both homo- and hetero-bifunctional) spacer arms are commercially available.

An exemplary cleavable group, an ester, is cleavable group that may be cleaved by a reagent, e.g. sodium hydroxide or hydroxylamine, resulting in a carboxylate-containing fragment and a hydroxyl-containing product.

The linker can be used to attach the compound to another component of a conjugate, such as a targeting moiety (e.g., antibody, ligand, non-covalent protein-binding group, etc.), an analyte, a biomolecule, a drug and the like.

As used herein, "nucleic acid" or "nucleic acid polymer" means DNA, RNA, single-stranded, double-stranded, or more highly aggregated hybridization motifs, and any chemical modifications thereof. Modifications include, but are not limited to, those providing chemical groups that incorporate additional charge, polarizability, hydrogen bonding, and electrostatic interaction to the nucleic acid ligand bases or to the nucleic acid ligand as a whole. Such modifications include, but are not limited to, peptide nucleic acids (PNAs), phosphodiester group modifications (*e.g.,* phosphorothioates, methylphosphonates), 2'-position sugar modifications, 5-position pyrimidine modifications, 8-position purine modifications, modifications at exocyclic amines, substitution of 4-thiouridine, substitution of 5-bromo or 5-iodo-uracil; backbone modifications, methylations, unusual base-pairing combinations such as the isobases, isocytidine and isoguanidine and the like. Nucleic acids can also include non-natural bases, such as, for example, nitroindole. Modifications can also include 3' and 5' modifications such as capping with a quencher, a fluorophore, a reactive group or another moiety.

The term "nucleic acid reporter molecule" as used herein refers to the present cyanine compounds wherein the methine bridge is substituted by at least one aryl, heteroaryl or substituted alkyl group.

The term "reactive group" as used herein refers to a group that is capable of reacting with another chemical group to form a covalent bond, i.e. is covalently reactive under suitable reaction conditions, and generally represents a point of attachment for another substance. The reactive group is a moiety, such as carboxylic acid, amine, alcohol or succinimidyl ester, on a compound that is capable of chemically reacting with a functional group on a different compound to form a covalent linkage resulting in a fluorescent or fluorogenic labeled component. Reactive groups generally include nucleophiles, electrophiles and photoactivatable groups.

Exemplary reactive groups include, but not limited to, olefins, acetylenes, alcohols, phenols, ethers, oxides, halides, aldehydes, ketones, carboxylic acids, esters, amides, cyanates, isocyanates, thiocyanates, isothiocyanates, amines, hydrazines, hydrazones, hydrazides, diazo, diazonium, nitro, nitriles, mercaptans, sulfides, disulfides, sulfoxides, sulfones, sulfonic acids, sulfinic acids, acetals, ketals, anhydrides, sulfates, thiosulfates, sulfenic acids isonitriles, amidines, imides, imidates, nitrones, hydroxylamines, oximes, hydroxamic acids thiohydroxamic acids, allenes, ortho esters, sulfites, enamines, ynamines, ureas, pseudoureas, semicarbazides, carbodiimides, carbamates, imines, azides, azo compounds, azoxy compounds, and nitroso compounds. Reactive functional groups also include those used to prepare bioconjugates, e.g., N-hydroxysuccinimide esters, maleimides and the like. Methods to prepare each of these functional groups are well known in the art and their application to or modification for a particular purpose is within the ability of one of skill in the art (see, for example, Sandler and Karo, eds. ORGANIC FUNCTIONAL GROUP PREPARATIONS, Academic Press, San Diego, 1989).

The term "reporter molecule" as used herein refers to any luminescent molecule that is capable of associating with a nucleic acid polymer and producing a detectable signal. Typically, reporter molecules include unsymmetrical cyanine dyes, homo- or heterodimers or oligomers of cyanine dyes, ethidium bromide, DAPI, Hoechst, acridine and styryl dyes that are capable of producing a detectable signal upon appropriate wavelength excitation.

The term "salt thereof," as used herein includes salts of the agents of the invention and their conjugates, which are preferably prepared with relatively nontoxic acids or bases, depending on the particular substituents found on the compounds described herein. When compounds of the present invention contain relatively acidic functionalities, base addition salts can be obtained by contacting the neutral form of such compounds with a sufficient amount of the desired base, either neat or in a suitable inert solvent. Examples of base addition salts include sodium, potassium, calcium, ammonium, organic amino, or magnesium, or a similar salt. When compounds of the present invention contain relatively basic functionalities, acid addition salts can be obtained by contacting the neutral form of such compounds with a sufficient amount of the desired acid, either neat or in a suitable inert solvent. Examples of addition salts include those derived from inorganic acids like hydrochloric, hydrobromic, nitric, carbonic, monohydrogencarbonic, phosphoric, monohydrogenphosphoric, dihydrogenphosphoric, sulfuric, monohydrogensulfuric, hydriodic, or phosphorous acids and the like, as well as the salts derived from relatively nontoxic organic acids like acetic, propionic, isobutyric, maleic, malonic, benzoic, succinic, suberic, fumaric, lactic, mandelic, phthalic, benzenesulfonic, p-tolylsulfonic, citric, tartaric, methanesulfonic, and the like. Also included are salts of amino acids such as arginate and the like, and salts of organic acids like glucuronic or galacturonic acids and the like (see, for example, Berge et al., "Pharmaceutical Salts", Journal ofPharmaceutical Science, 1977, 66, 1-19). Certain specific compounds of the present invention contain both basic and acidic functionalities that allow the compounds to be converted into either base or acid addition salts.

The term "sample" as used herein refers to any material that may contain nucleic acid. The sample may also include diluents, buffers, detergents, and contaminating species, debris and the like that are found mixed with the target. Illustrative examples include urine, sera, blood plasma, total blood, saliva, tear fluid, cerebrospinal fluid, secretory fluids and the like. Also included are solid, gel or substances such as mucus, body tissues, cells and the like suspended or dissolved in liquid materials such as buffers, extractants, solvents and the like. Typically, the sample is a live cell, a biological fluid that comprises endogenous host cell proteins, nucleic acid polymers, nucleotides, oligonucleotides, peptides and buffer solutions. The sample may be dissolved or suspended in an aqueous solution, a viable cell culture or immobilized on a solid or semi solid surface such as a polyacrylamide gel, membrane blot or on a microarray.

The term "solid support," as used herein, refers to a material that is substantially insoluble in a selected solvent system, or which can be readily separated *(e.g.,* by precipitation) from a selected solvent system in which it is soluble. Solid supports useful in practicing the present invention can include groups that are activated or capable of activation to allow selected species to be bound to the solid support. Solid supports may be present in a variety of forms, including a chip, wafer or well, onto which an individual, or more than one compound, of the invention is bound such as a polymeric bead or particle.

The term "sulfoalkyl," as used herein refers to a group having the general formula -(CH₂)ₙSO⁻₃ wherein n is 1-18.

### The Compounds

In general, for ease of understanding the present invention, the nucleic acid reporter molecules and corresponding substituents will first be described in detail, followed by the many and varied methods in which the compounds find uses, which is followed by exemplified methods of use and synthesis of novel compounds that are particularly advantageous for use with the methods of the present invention.

The compounds of the present disclosure typically exhibit a fluorescence enhancement when non-covalently associated with a nucleic acid. For selected compounds, the fluorescence enhancement is greater when the nucleic acid is RNA than when the nucleic acid is DNA.

In one embodiment the present invention provides nucleic acid complexing compounds that comprise at substituted methine bridge. Without wishing to be bound by theory, it is believed that the selection of a nonhydrogen methine substituent (e.g. R⁴) may permit the tuning of selectivity and affinity of the resulting compound for particular nucleic acids. In particular, it is believed that the presence of a nonhydrogen methine substituent increases the selectivity and affinity of the resulting compound for RNA, when compared to the same compound when binding to DNA. The fluorescence enhancement of the resulting RNA complex may be greater than that of the corresponding DNA complex.

The methine substituents is typically bulky such that is affects the association with DNA.

The present nucleic acid reporter molecules may be described by the formula: 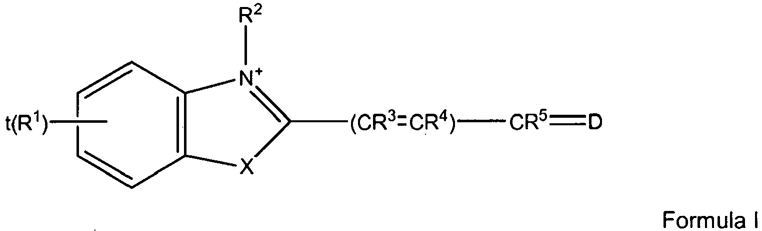 wherein each R¹ is independently hydrogen, carboxy, sulfo, phosphate, phosphonate, amino, hydroxyl, trifluoromethyl, halogen, alkyl, substituted alkyl, alkoxy, substituted alkoxy, alkylamino, substituted alkylamino, dialkylamino, substituted dialkylamino, aminoalkyl, substituted aminoalkyl, fused benzene, substituted fused benzene, reactive group, solid support or carrier molecule;
wherein the reactive group is an acrylamide, a carboxylic acid, an activated ester of a carboxylic acid, a succinimidyl ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group;
wherein the carrier molecule is an amino acid, an antibody or fragment thereof, an avidin, streptavidin, a biotin, a blood component protein, a dextran, a drug, an enzyme, an enzyme inhibitor, a hapten, a hormone, an IgG binding protein, a fluorescent protein, a growth factor, a lectin, a lipid, a lipid assembly, a lipopolysaccharide, a microorganism, a metal binding protein, a metal chelating moiety, a non-biological microparticle, a polymeric microparticle, a nucleoside, a nucleotide, a nucleic acid polymer, an oligonucleotide, a peptide, a peptide toxin, a phosphotidylserine-binding protein, a protein, a polysaccharide, a psoralen, a structural protein, a small-molecule drug, a synthetic polymer, a tyramide, a biological cell or a virus;
wherein the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, superparamagnetic bead, sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch;
t is an integer from 1 to 4;
wherein R² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium;
at least one of R³ and R⁵ is an alkyl, substituted alkyl, a 5-, 6- or 7- membered heterocycloalkyl, a substituted 5-, 6- or 7- membered heterocycloalkyl, a 5-, 6- or 7-membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl; and the remaining R³ or R⁵ is hydrogen; or R³ and R⁵ are both hydrogen;
R⁴ is a phenyl substituent, substituted by one or more of F, Cl, CF₃, -CO₂CH₃, NO₂, amino, C₁-C₆ alkoxy, phenoxy, and C₁-C₆ alkyl that is itself optionally further substituted by amino, sulfo, or carboxy;
X is S, O, or Se; and
D is a substituted pyridinium, unsubstituted pyridinium, substituted quinolinium, unsubstituted quinolinium, substituted benzazolium or unsubstituted benzazolium moiety.

Typically one or two of R³, R⁴, and R⁵ is nonhydrogen.

In particular, where at least one of R³ and R⁵ is an alkyl, aryl, heteroaryl, cyclic, or heterocyclic moiety, the moiety may include 3-20 non-hydrogen atoms selected from the group consisting of O, N, S, P and C, and be optionally further substituted by C₁-C₆ alkyl, -NR⁶R⁷; -COOR⁸, NO₂, or halogen, wherein R⁶, R⁷, and R⁸ are independently hydrogen, C₁-C₆ alkyl, C₁-C₆ alkoxy, sulfoalkyl or aminoalkyl.

The R¹ substituents may include any aryl group substituent, including additional fused 5- or 6-membered rings. Where each R¹ is independently hydrogen, carboxy, sulfo, phosphate, phosphonate, amino, hydroxyl, trifluoromethyl, halogen, alkyl, substituted alkyl, alkoxy, alkylamino, substituted alkylamino, dialkylamino, substituted dialkylamino, aminoalkyl, substituted aminoalkyl, fused benzene, substituted fused benzene, reactive group, solid support or carrier molecule, wherein t is an integer from 1 to 4. Each alkyl portion of which is optionally substituted by alkyl group substituents, as described above. In particular, the alkyl groups substituents may be selected from the group consisting of carboxy, sulfo, phosphate, phosphonate, amino, and hydroxy. Where R¹ is nonhydrogen, R¹ may be an alkoxy substituent, or a halogen substituent, more preferably at least one R¹ is methoxy, Br, Cl, or F.

In particular, R² may be selected from lower alkyl or sulfoalkyl, more preferably methyl, ethyl, propyl, or -(CH₂)₃SO₃⁻.

The X moiety is selected from S, O, or Se, forming a benzothiazole, benzoxazole, or benzoselenazole heterocyclic ring system, respectively. Typically, X is S or O, and more typically, X is S.

The D moiety is a substituted or unsubstituted ring system, including pyridinium, quinolinium or benzazolium ring systems. For example, the D moiety may include the following ring systems (additional substituents omitted for clarity):

| | |
|---|---|
| 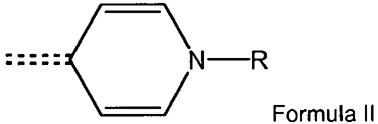 | 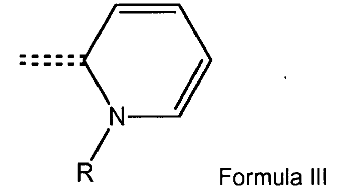 |
| 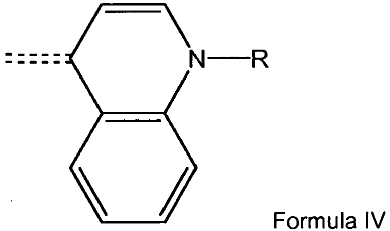 | 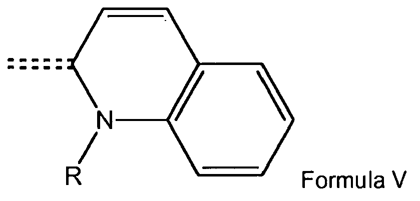 |
| 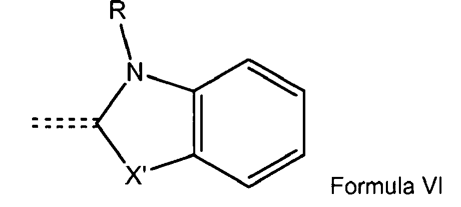 | |
| where X' may be the same or different than X as described above | |

The D ring system is optionally further substituted by any aryl group substituent, as described above.

In an exemplary embodiment, the D moiety has the formula: 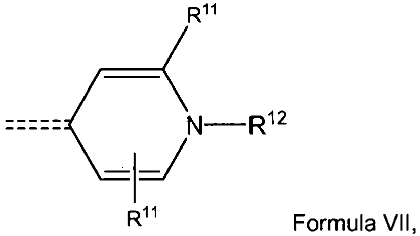 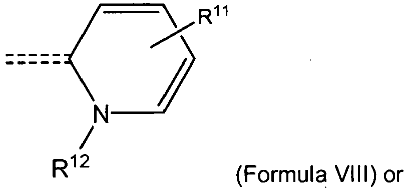 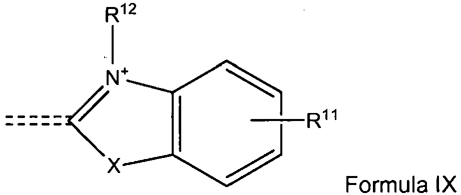 wherein R¹¹ is hydrogen, substituted alkyl, unsubstituted alkyl, substituted heteroalkyl, unsubstituted heteroalkyl, substituted aryl, unsubstituted aryl, substituted arylalkyl, unsubstituted arylalkyl, substituted heteroarylalkyl; unsubstituted heteroarylalkyl, substituted heteroaryl, unsubstituted heteroaryl, substituted cycloalkyl, unsubstituted cycloalkyl, substituted heterocycloalkyl, unsubstituted heterocycloalkyl, halogen, alkoxy, substituted alkylamino, unsubstituted alkylamino, substituted alkylthio, unsubstituted alkylthio, reactive group, solid support, or carrier molecule.

The R¹² substituent is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium; or R¹¹ in combination with an adjacent R¹¹ or R¹², together with the atoms to which they are joined, form a ring which is a 5-, 6- or 7- membered heterocycloalkyl, a substituted 5-, 6- or 7- membered heterocycloalkyl, a 5-, 6- or 7- membered cycloalkyl, a substituted 5-, 6- or 7- membered cycloalkyl, a 5-, 6- or 7- membered heteroaryl, a substituted 5-, 6- or 7- membered heteroaryl, a 5-, 6- or 7- membered aryl or a substituted 5-, 6- or 7- membered aryl.

In an exemplary embodiment, the present compounds have the formula: 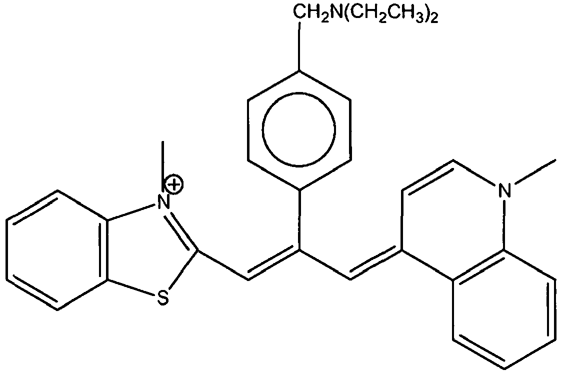 or the formula

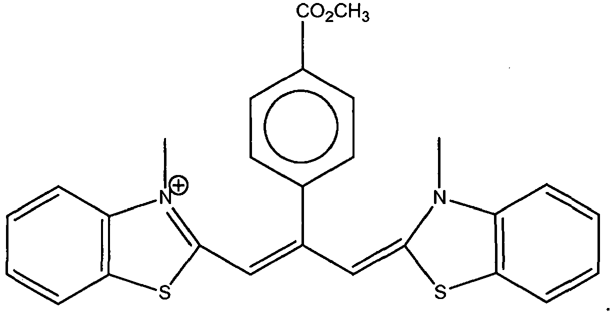

The compounds disclosed herein are readily modified to permit selectable alteration of the permeability, affinity, absorption, and emission properties (for example, see U.S. Patent no. 5,658,751). The resulting compounds may be tailored to cover most of the visible and near-infrared spectrum.

### Synthesis

The reporter compounds disclosed herein may be prepared using a two-part synthetic strategy: First, the preparation of an benzazolium moiety containing a methine substituent, followed by addition of the appropriate pyridinium, quinolinium or benzazolium moiety. Typically each component is selected so as to incorporate the desired and/or appropriate chemical substituents, or functional groups that may be converted to the desired and/or appropriate chemical substituents. The synthetic strategies and procedures that may be used to prepare and combine these precursors so as to yield the disclosed compounds is generally well understood by one skilled in the art, including a variety of modifications and variations thereof. Herein are some useful general methods for the synthesis of selected compounds, including the incorporation of some chemical modifications.

Synthesis of the disclosed compounds, including the desired substituent on the trimethine bridge, may be facilitated by the initial preparation of selected intermediate compounds. For example, the intermediate benzazole moiety may be described using one of the following general structures. For the sake of simplicity, most of the substituents are shown as hydrogen, however this should not be considered limiting the breadth of the following disclosure. 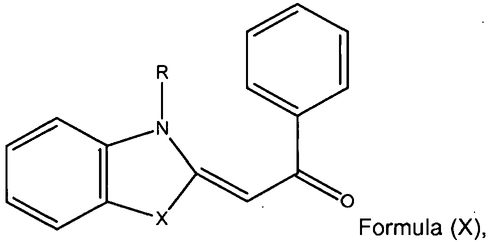 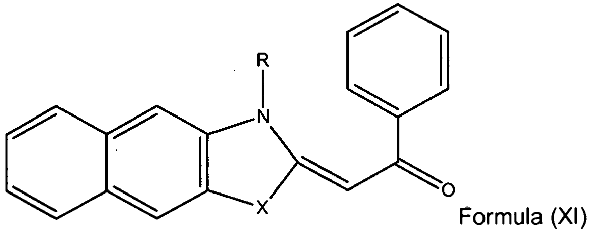 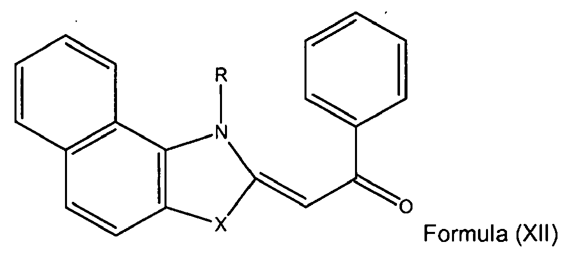 and

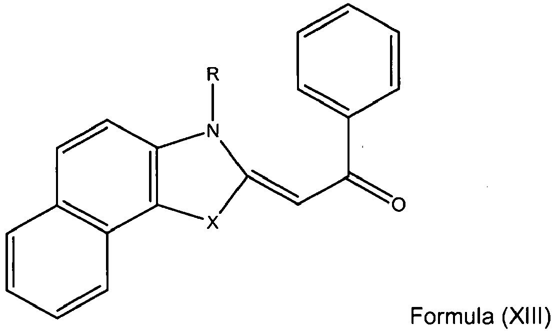

If X is O, the precursor compound is a benzoxazolium; if X is S it is a benzothiazolium; if X is Se it is a benzoselenazolium. The commercial availability of suitable starting materials and relative ease of synthesis may make compounds where X is O or S more attractive.

The desired R¹ substituents are typically incorporated in the parent benzazole molecule prior to quaternization with an alkylating agent. R² is typically incorporated by quaternization of the parent heterocycle with an alkylating agent, typically a source of (R²)⁺. The alkylating reagent may be an alkyl halide such as ethyl iodide, an alkylsulfonate such as methyl p-toluenesulfonate or a cyclic sulfonate such as propanesultone or butanesultone. The benzazolium moiety may then be subsequently reacted with an aromatic acid chloride to generate the desired benzoketone key intermediate which can be activated by phosphorous oxychloride followed by the addition of the desired pyridinium, quinolinium or benzazolium moiety, or "D" moiety.

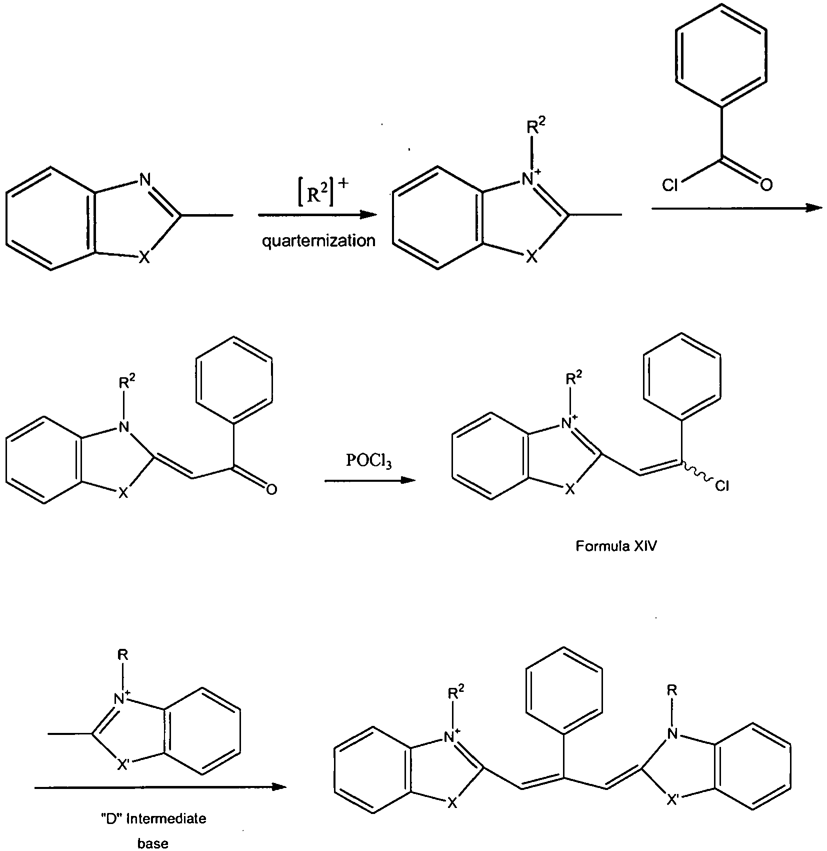

Although the above reaction scheme depicts the use of a benzoyl chloride reagent, it should be appreciated that the selection of reagent is dependent upon the nature of the methine substituent desired, and that a variety of reagents may be used, as shown in Example 1.

Similarly, although the D moiety depicted above is a benzazole, a variety of D intermediates, including pyridinium, quinolinium and benzazolium intermediates, may be used to complete the synthesis as described above. Selected examples of such variations are described in Examples 1-3.

Specific examples of D moieties appropriate for the above synthetic scheme may be found in, for example, U.S. Patent Nos. 5,436,134. The pyridinium, quinolinium or benzazolium moiety may be fused to additional rings, resulting in dyes that absorb and emit at longer wavelengths (for example, see U.S. 6,027,709).

### Reactive groups, carrier molecules and solid supports

Compounds in accordance with the disclosure, are chemically reactive wherein the compounds comprise a reactive group. Other compounds in accordance with the disclosure comprise a carrier molecule or solid support. These substituents, reactive groups, carrier molecules, and solid supports, comprise a linker that is used to covalently attach the substituents to any of the moieties of the present compounds. The solid support, carrier molecule or reactive group may be directly attached (where linker is a single bond) to the moieties or attached through a series of stable bonds, as disclosed above.

Any combination of linkers may be used to attach the carrier molecule, solid support or reactive group and the present compounds together. The linker may also be substituted to alter the physical properties of the reporter moiety or chelating moiety, such as spectral properties of the dye. Examples of L include substituted or unsubstituted polyalkylene, arylene, alkylarylene, arylenealkyl, or arylthio moieties.

The linker typically incorporates 1-30 nonhydrogen atoms selected from the group consisting of C, N, O, S and P. The linker may be any combination of stable chemical bonds, optionally including, single, double, triple or aromatic carbon-carbon bonds, as well as carbon-nitrogen bonds, nitrogen-nitrogen bonds, carbon-oxygen bonds, sulfur-sulfur bonds, carbon-sulfur bonds, phosphorus-oxygen bonds, phosphorus-nitrogen bonds, and nitrogen-platinum bonds. Typically the linker incorporates less than 15 nonhydrogen atoms and are composed of any combination of ether, thioether, thiourea, amine, ester, carboxamide, sulfonamide, hydrazide bonds and aromatic or heteroaromatic bonds. Typically the linker is a combination of single carbon-carbon bonds and carboxamide, sulfonamide or thioether bonds. The bonds of the linker typically result in the following moieties that can be found in the linker: ether, thioether, carboxamide, thiourea, sulfonamide, urea, urethane, hydrazine, alkyl, aryl, heteroaryl, alkoxy, cycloalkyl and amine moieties. Examples of a linker include substituted or unsubstituted polymethylene, arylene, alkylarylene, arylenealkyl, and arylthio.

The linker may contain 1-6 carbon atoms; ina variant the linker may comprise a thioether linkage. Exemplary linking members include a moiety that includes -C(O)NH-, -C(O)O-, -NH-, -S-, -O-, and the like. The linker may be or incorporate the formula -(CH₂)_{d}(CONH(CH₂)ₑ)_{z}- or where d is an integer from 0-5, e is an integer from 1-5 and z is 0 or 1. The linker may be or incorporate the formula -O-(CH₂)-. The linker may be or incorporate a phenylene or a 2-carboxy-substituted phenylene.

An important feature of the linker is to provide an adequate space between the carrier molecule, reactive group or solid support and the dye so as to prevent steric hindrance. Therefore, the linker of the present compound is important for (1) attaching the carrier molecule, reactive group or solid support to the compound, (2) providing an adequate space between the carrier molecule, reactive group or solid support and the compound so as not to sterically hinder the action of the compound and (3) for altering the physical properties of the present compounds.

In another variant of the disclosure, the present compounds are chemically reactive, and are substituted by at least one reactive group. The reactive group functions as the site of attachment for another moiety, such as a carrier molecule or a solid support, wherein the reactive group chemically reacts with an appropriate reactive or functional group on the carrier molecule or solid support.

Reactive groups or reactive group precursors may be positioned during the formation of the present compounds. Thus, compounds incorporating a reactive group can be reacted with and attached to a wide variety of biomolecules or non-biomolecules that contain or are modified to contain functional groups with suitable reactivity. When a labeled component includes a compound as disclosed herein, then this conjugate typically possesses the nucleic acid staining abilities of the parent compound, particularly RNA staining. However, the present fluorescent compounds can also function as reporter molecules for the labeled components wherein the nucleic acid binding properties of the reagents may not employed.

Preferred reactive groups for incorporation into the disclosed compounds may be selected to react with an amine, a thiol or an alcohol. In an exemplary embodiment, the compounds of the invention further comprise a reactive group that is an acrylamide, an activated ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a photoactivatable group, a reactive platinum complex, a silyl halide, a sulfonyl halide, and a thiol. In a particular embodiment the reactive group is selected from the group consisting of carboxylic acid, succinimidyl ester of a carboxylic acid, hydrazide, amine and a maleimide. In exemplary embodiment, at least one member selected from R¹, R², R¹¹, or R¹² comprises a reactive group. Preferably, at least one of R¹ or R¹¹ comprises a reactive group or is attached to a reactive group. Alternatively, if the present compound comprises a carrier molecule or solid support a reactive group may be covalently attached independently to those substituents, allowing for further conjugation to a another dye, carrier molecule or solid support.

The compound may comprise at least one reactive group that selectively reacts with an amine group. This amine-reactive group is selected from the group consisting of succinimidyl ester, sulfonyl halide, tetrafluorophenyl ester and iosothiocyanates. Thus, the present compounds may form a covalent bond with an amine-containing molecule in a sample. The compound may comprise at least one reactive group that selectively reacts with a thiol group. This thiol-reactive group is selected from the group consisting of maleimide, haloalkyl and haloacetamide (including any reactive groups disclosed in US Patent Nos. 5,362,628; 5,352,803 and 5,573,904).

The pro-reactive groups are synthesized during the formation of the monomer moieties and carrier molecule and solid support containing compounds to provide chemically reactive compounds. In this way, compounds incorporating a reactive group can be covalently attached to a wide variety of carrier molecules or solid supports that contain or are modified to contain functional groups with suitable reactivity, resulting in chemical attachment of the components. The reactive group of the compounds of the invention and the functional group of the carrier molecule or solid support comprise electrophiles and nucleophiles that can generate a covalent linkage between them. Alternatively, the reactive group comprises a photoactivatable group, which becomes chemically reactive only after illumination with light of an appropriate wavelength. Typically, the conjugation reaction between the reactive group and the carrier molecule or solid support results in one or more atoms of the reactive group being incorporated into a new linkage attaching the present compound to the carrier molecule or solid support. Selected examples of functional groups and linkages are shown in Table 1, where the reaction of an electrophilic group and a nucleophilic group yields a covalent linkage.

**Table 1: Examples of some routes to useful covalent linkages**

| Electrophilic Group | Nucleophilic Group | Resulting Covalent Linkage |
|---|---|---|
| activated esters* | amines/anilines | carboxamides |
| acrylamides | thiols | thioethers |
| acyl azides** | amines/anilines | carboxamides |
| acyl halides | amines/anilines | carboxamides |
| acyl halides | alcohols/phenols | esters |
| acyl nitriles | alcohols/phenols | esters |
| acyl nitriles | amines/anilines | carboxamides |
| aldehydes | amines/anilines | imines |
| aldehydes or ketones | hydrazines | hydrazones |
| aldehydes or ketones | hydroxylamines | oximes |
| alkyl halides | amines/anilines | alkyl amines |
| alkyl halides | carboxylic acids | esters |
| alkyl halides | thiols | thioethers |
| alkyl halides | alcohols/phenols | ethers |
| alkyl sulfonates | thiols | thioethers |
| alkyl sulfonates | carboxylic acids | esters |
| alkyl sulfonates | alcohols/phenols | ethers |
| anhydrides | alcohols/phenols | esters |
| anhydrides | amines/anilines | carboxamides |
| aryl halides | thiols | thiophenols |
| aryl halides | amines | aryl amines |
| aziridines | thiols | thioethers |
| boronates | glycols | boronate esters |
| carbodiimides | carboxylic acids | N-acylureas or anhydrides |
| diazoalkanes | carboxylic acids | esters |
| epoxides | thiols | thioethers |
| haloacetamides | thiols | thioethers |
| haloplatinate | amino | platinum complex |
| haloplatinate | heterocycle | platinum complex |
| haloplatinate | thiol | platinum complex |
| halotriazines | amines/anilines | aminotriazines |
| halotriazines | alcohols/phenols | triazinyl ethers |
| halotriazines | thiols | triazinyl thioethers |
| imido esters | amines/anilines | amidines |
| isocyanates | amines/anilines | ureas |
| isocyanates | alcohols/phenols | urethanes |
| isothiocyanates | amines/anilines | thioureas |
| maleimides | thiols | thioethers |
| phosphoramidites | alcohols | phosphite esters |
| silyl halides | alcohols | silyl ethers |
| sulfonate esters | amines/anilines | alkyl amines |
| sulfonate esters | thiols | thioethers |
| sulfonate esters | carboxylic acids | esters |
| sulfonate esters | alcohols | ethers |
| sulfonyl halides | amines/anilines | sulfonamides |
| sulfonyl halides | phenols/alcohols | sulfonate esters |

| | | |
|---|---|---|
| * Activated esters, as understood in the art, generally have the formula -COΩ, where Ω is a good leaving group (e.g., succinimidyloxy (-OC₄H₄O₂) sulfosuccinimidyloxy (-OC₄H₃O₂-SO₃H), -1-oxybenzotriazolyl (-OC₆H₄N₃); or an aryloxy group or aryloxy substituted one or more times by electron withdrawing substituents such as nitro, fluoro, chloro, cyano, or trifluoromethyl, or combinations thereof, used to form activated aryl esters; or a carboxylic acid activated by a carbodiimide to form an anhydride or mixed anhydride -OCOR^{a} or -OCNR^{e}NHR^{b}, where R^{a} and R^{b}, which may be the same or different, are C₁-C₆ alkyl, C₁-C₆ perfluoroalkyl, or C₁-C₆ alkoxy; or cyclohexyl, 3-dimethylaminopropyl, or N-morpholinoethyl). ** Acyl azides can also rearrange to isocyanates | | |

Choice of the reactive group used to attach the compound to the substance to be conjugated typically depends on the reactive or functional group on the substance to be conjugated and the type or length of covalent linkage desired. The types of functional groups typically present on the organic or inorganic substances (biomolecule or non-biomolecule) include, but are not limited to, amines, amides, thiols, alcohols, phenols, aldehydes, ketones, phosphates, imidazoles, hydrazines, hydroxylamines, disubstituted amines, halides, epoxides, silyl halides, carboxylate esters, sulfonate esters, purines, pyrimidines, carboxylic acids, olefinic bonds, or a combination of these groups. A single type of reactive site may be available on the substance (typical for polysaccharides or silica), or a variety of sites may occur (e.g., amines, thiols, alcohols, phenols), as is typical for proteins.

Typically, the reactive group will react with an amine, a thiol, an alcohol, an aldehyde, a ketone, or with silica. Preferably, reactive groups react with an amine or a thiol functional group, or with silica. In one embodiment, the reactive group is an acrylamide, an activated ester of a carboxylic acid, an acyl azide, an acyl nitrile, an aldehyde, an alkyl halide, a silyl halide, an anhydride, an aniline, an aryl halide, an azide, an aziridine, a boronate, a diazoalkane, a haloacetamide, a halotriazine, a hydrazine (including hydrazides), an imido ester, an isocyanate, an isothiocyanate, a maleimide, a phosphoramidite, a reactive platinum complex, a sulfonyl halide, or a thiol group. By "reactive platinum complex" is particularly meant chemically reactive platinum complexes such as described in U.S. Patent No. 5,714,327.

Where the reactive group is an activated ester of a carboxylic acid, such as a succinimidyl ester of a carboxylic acid, a sulfonyl halide, a tetrafluorophenyl ester or an isothiocyanates, the resulting compound is particularly useful for preparing conjugates of carrier molecules such as proteins, nucleotides, oligonucleotides, or haptens. Where the reactive group is a maleimide, haloalkyl or haloacetamide (including any reactive groups disclosed in US Patent Nos. 5,362,628; 5,352,803 and 5,573,904 *(supra))* the resulting compound is particularly useful for conjugation to thiol-containing substances. Where the reactive group is a hydrazide, the resulting compound is particularly useful for conjugation to periodate-oxidized carbohydrates and glycoproteins, and in addition is an aldehyde-fixable polar tracer for cell microinjection. Where the reactive group is a silyl halide, the resulting compound is particularly useful for conjugation to silica surfaces, particularly where the silica surface is incorporated into a fiber optic probe subsequently used for remote ion detection or quantitation.

In a particular aspect, the reactive group is a photoactivatable group such that the group is only converted to a reactive species after illumination with an appropriate wavelength. An appropriate wavelength is generally a UV wavelength that is less than 400 nm. This method provides for specific attachment to only the target molecules, either in solution or immobilized on a solid or semi-solid matrix. Photoactivatable reactive groups include, without limitation, benzophenones, aryl azides and diazirines.

Preferably, the reactive group is a photoactivatable group, succinimidyl ester of a carboxylic acid, a haloacetamide, haloalkyl, a hydrazine, an isothiocyanate, a maleimide group, an aliphatic amine, a silyl halide, a cadaverine or a psoralen. More preferably, the reactive group is a succinimidyl ester of a carboxylic acid, a maleimide, an iodoacetamide, or a silyl halide. In a particular embodiment the reactive group is a succinimidyl ester of a carboxylic acid, a sulfonyl halide, a tetrafluorophenyl ester, an iosothiocyanates or a maleimide.

The selection of a covalent linkage to attach the reporter molecule to the carrier molecule or solid support typically depends on the chemically reactive group on the component to be conjugated. The discussion regarding reactive groups in the section immediately preceding is relevant here as well. Exemplary reactive groups typically present on the biological or non-biological components include, but are not limited to, amines, thiols, alcohols, phenols, aldehydes, ketones, phosphates, imidazoles, hydrazines, hydroxylamines, disubstituted amines, halides, epoxides, sulfonate esters, purines, pyrimidines, carboxylic acids, or a combination of these groups. A single type of reactive site may be available on the component (typical for polysaccharides), or a variety of sites may occur (e.g. amines, thiols, alcohols, phenols), as is typical for proteins. A carrier molecule or solid support may be conjugated to more than one reporter molecule, which may be the same or different, or to a substance that is additionally modified by a hapten. Although some selectivity can be obtained by careful control of the reaction conditions, selectivity of labeling is best obtained by selection of an appropriate reactive compound.

In another exemplary embodiment, the present compound is covalently bound to a carrier molecule. If the compound has a reactive group, then the carrier molecule can alternatively be linked to the compound through the reactive group. The reactive group may contain both a reactive functional moiety and a linker, or only the reactive functional moiety.

A variety of carrier molecules are useful in the present invention. Exemplary carrier molecules of the disclosure include antigens, steroids, vitamins, drugs, haptens, metabolites, toxins, environmental pollutants, amino acids, peptides, proteins, nucleic acids, nucleic acid polymers, carbohydrates, lipids, and polymers. If the present compound comprises a reactive group or solid support a reactive group may be covalently attached independently to those substituents, allowing for further conjugation to a reactive group, carrier molecule or solid support.

In an exemplary embodiment, the carrier molecule comprises an amino acid, a peptide, a protein, a polysaccharide, a nucleoside, a nucleotide, an oligonucleotide, a hapten, a psoralen, a drug, a hormone, a lipid, a lipid assembly, a synthetic polymer, a polymeric microparticle, a biological cell, a virus and combinations thereof. In another exemplary embodiment, the carrier molecule is selected from a hapten, a nucleotide, an oligonucleotide, a nucleic acid polymer, a protein, a peptide or a polysaccharide. In a preferred embodiment the carrier molecule is amino acid, a peptide, a protein, a polysaccharide, a nucleoside, a nucleotide, an oligonucleotide, a hapten, a psoralen, a drug, a hormone, a lipid, a lipid assembly, a tyramine, a synthetic polymer, a polymeric microparticle, a biological cell. In another preferred embodiment, the carrier molecule is an antibody or fragment thereof, an antigen, an avidin or streptavidin, a biotin, a dextran, an antibody binding protein, a fluorescent protein, agarose, and a non-biological microparticle. Typically, the carrier molecule is an antibody, an antibody fragment, antibody-binding proteins, avidin, streptavidin, a lectin, or a growth factor. Preferred haptens include biotin, digoxigenin and fluorophores.

Antibody binding proteins include, but are not limited to, protein A, protein G, soluble Fc receptor, protein L, lectins, anti-IgG, anti-IgA, anti-IgM, anti-IgD, anti-IgE or a fragment thereof.

In another exemplary embodiment, the carrier molecule is an amino acid (including those that are protected or are substituted by phosphates, carbohydrates, or C₁ to C₂₂ carboxylic acids), or a polymer of amino acids such as a peptide or protein. In a related embodiment, the carrier molecule contains at least five amino acids, more preferably 5 to 36 amino acids. Exemplary peptides include, but are not limited to, neuropeptides, cytokines, toxins, protease substrates, and protein kinase substrates. Other exemplary peptides may function as organelle localization peptides, that is, peptides that serve to target the conjugated compound for localization within a particular cellular substructure by cellular transport mechanisms. Preferred protein carrier molecules include enzymes, antibodies, lectins, glycoproteins, histones, albumins, lipoproteins, avidin, streptavidin, protein A, protein G, phycobiliproteins and other fluorescent proteins, hormones, toxins and growth factors. Typically, the protein carrier molecule is an antibody, an antibody fragment, avidin, streptavidin, a toxin, a lectin, or a growth factor. Exemplary haptens include biotin, digoxigenin and fluorophores.

In another exemplary embodiment, the carrier molecule comprises a nucleoside, nucleotide or a nucleic acid polymer, optionally containing an additional linker or spacer for attachment of a fluorophore or other ligand, such as an alkynyl linkage (U.S. Pat. No. 5,047,519), an aminoallyl linkage (U.S. Pat. No. 4,711,955) or other linkage. In another exemplary embodiment, the nucleotide carrier molecule is a nucleoside or a deoxynucleoside or a dideoxynucleoside.

Exemplary nucleic acid polymer carrier molecules are single- or multi-stranded, natural or synthetic DNA or RNA oligonucleotides, or DNA/RNA hybrids, or incorporating an unusual linker such as morpholine derivatized phosphates (AntiVirals, Inc., Corvallis OR), or peptide nucleic acids such as *N*-(2-aminoethyl)glycine units, where the nucleic acid contains fewer than 50 nucleotides, more typically fewer than 25 nucleotides.

In another exemplary embodiment, the carrier molecule comprises a carbohydrate or polyol that is a polysaccharide, such as dextran, FICOLL, heparin, glycogen, amylopectin, mannan, inulin, starch, agarose and cellulose, or is a polymer such as a poly(ethylene glycol). In a related embodiment, the polysaccharide carrier molecule includes dextran, agarose or FICOLL.

In another exemplary embodiment, the carrier molecule comprises a lipid (typically having 6-25 carbons), including glycolipids, phospholipids, and sphingolipids. Alternatively, the carrier molecule comprises a lipid vesicle, such as a liposome, or is a lipoprotein (see below). Some lipophilic substituents are useful for facilitating transport of the conjugated dye into cells or cellular organelles.

Alternatively, the carrier molecule is cells. Examples of this type of conjugated material include biological cells, such as animal cells, plant cells, bacteria, or yeast.

In another embodiment the carrier molecule is a metal chelating moiety. While any chelator that binds a metal ion of interest and gives a change in its fluorescence properties is a suitable conjugate, preferred metal chelating moieties are crown ethers, including diaryldiaza crown ethers, as described in U.S. Pat. No. 5,405,975 to Kuhn et al. (1995); derivatives of 1,2-bis-(2-aminophenoxyethane)-N,N,N',N'-tetraacetic acid (BAPTA), as described in U.S. Pat. No. 5,453,517 to Kuhn et al. (1995) and U.S. Pat. No. 5,049,673 to Tsien et al. (1991); derivatives of 2-carboxymethoxy-aniline-N,N-diacetic acid (APTRA), as described by Ragu et al., Am. J. Physiol., 256: C540 (1989); and pyridyl-based and phenanthroline metal ion chelators, as described in U.S. Pat. No. 5,648,270 to Kuhn et al. (1997).

Fluorescent conjugates of metal chelating moieties possess utility as indicators for the presence of a desired metal ion. While fluorescent ion-indicators are known in the art, the incorporation of the fluorinated fluorogenic and fluorescent compounds of the present invention imparts the highly advantageous properties of the instant fluorophores onto the resulting ion indicator.

The ion-sensing conjugates of the invention are optionally prepared in chemically reactive forms and further conjugated to polymers such as dextrans to improve their utility as sensors as described in U.S. Pat. Nos. 5,405,975 and 5,453,517.

The carrier molecule may non-covalently associate with organic or inorganic materials. Carrier molecules that possess a lipophilic substituent can be used to target lipid assemblies such as biological membranes or liposomes by non-covalent incorporation of the dye compound within the membrane, *e.g*., for use as probes for membrane structure or for incorporation in liposomes, lipoproteins, films, plastics, lipophilic microspheres or similar materials.

The carrier molecule may comprise a specific binding pair member wherein the present compounds are conjugated to a specific binding pair member and are used to detect an analyte in a sample. Alternatively, the presence of the labeled specific binding pair member indicates the location of the complementary member of that specific binding pair; each specific binding pair member having an area on the surface or in a cavity which specifically binds to, and is complementary with, a particular spatial and polar organization of the other. Exemplary binding pairs are set forth in Table 2.

**Table 2. Representative Specific Binding Pairs**

| | |
|---|---|
| antigen | antibody |
| biotin | avidin (or streptavidin or anti-biotin) |
| IgG* | protein A or protein G |
| drug | drug receptor |
| folate | folate binding protein |
| toxin | toxin receptor |
| carbohydrate | lectin or carbohydrate receptor |
| peptide | peptide receptor |
| protein | protein receptor |
| enzyme substrate | enzyme |
| DNA (RNA) | cDNA (cRNA)† |
| hormone | hormone receptor |
| ion | chelator |
| antibody | antibody-binding proteins |

| | |
|---|---|
| * IgG is an immunoglobulin ^{†} cDNA and cRNA are the complementary strands used for hybridization | |

In an exemplary embodiment, the present compounds of the invention are covalently bonded to a solid support. The solid support may be attached to the compound or through a reactive group, if present, or through a carrier molecule, if present. If the present compound comprises a carrier molecule or reactive group a solid support may be covalently attached independently to those substituents, allowing for further conjugation to a another dye, carrier molecule or solid support.

A solid support suitable for use in the present invention is typically substantially insoluble in liquid phases. Thus, useful solid supports include solid and semi-solid matrixes, such asmicrofluidic chip, a silicon chip, multi-well plates (also referred to as microtitre plates or microplates) and microscope slides. More specific examples of useful solid supports include silica gels, polymeric membranes, particles, derivatized plastic films, glass beads, cotton, plastic beads, alumina gels, polysaccharides such as Sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose, polyvinylchloride, polypropylene, polyethylene (including poly(ethylene glycol)), nylon, latex bead, magnetic bead, paramagnetic bead, superparamagnetic bead, starch and the like.

In some embodiments, the solid support may include a solid support reactive functional group, including, but not limited to, hydroxyl, carboxyl, amino, thiol, aldehyde, halogen, nitro, cyano, amido, urea, carbonate, carbamate, isocyanate, sulfone, sulfonate, sulfonamide, sulfoxide, etc., for attaching the compounds of the invention. Useful reactive groups are disclosed above and are equally applicable to the solid support reactive functional groups herein.

A suitable solid phase support can be selected on the basis of desired end use and suitability for various synthetic protocols. For example, where amide bond formation is desirable to attach the compounds of the invention to the solid support, resins generally useful in peptide synthesis may be employed, such as polystyrene (e.g., PAM-resin obtained from Bachem Inc., Peninsula Laboratories, etc.), POLYHIPE™ resin (obtained from Aminotech, Canada), polyamide resin (obtained from Peninsula Laboratories), polystyrene resin grafted with polyethylene glycol (TentaGel™, Rapp Polymere, Tubingen, Germany), polydimethyl-acrylamide resin (available from Milligen/Biosearch, California), or PEGA beads (obtained from Polymer Laboratories).

### Preparation of Conjugates

Conjugates of components (carrier molecules and solid supports), e.g., drugs, peptides, toxins, nucleotides, phospholipids and other organic molecules are prepared by organic synthesis methods using the reactive dyes, are generally prepared by means well recognized in the art (Haugland, MOLECULAR PROBES HANDBOOK, supra, 2002). Conjugation to form a covalent bond may consist of simply mixing the reactive dyes of the present invention in a suitable solvent in which both the reactive compound and the substance to be conjugated are soluble. The reaction preferably proceeds spontaneously without added reagents at room temperature or below. For those reactive dyes that are photoactivated, conjugation is facilitated by illumination of the reaction mixture to activate the reactive dye. Chemical modification of water-insoluble substances, so that a desired dye-conjugate may be prepared, is preferably performed in an aprotic solvent such as dimethylformamide (DMF), dimethylsulfoxide (DMSO), acetone, ethyl acetate, toluene, or chloroform.

Preparation of peptide or protein conjugates typically comprises first dissolving the protein to be conjugated in aqueous buffer at about. 1-10 mg/mL at room temperature or below. Bicarbonate buffers (pH about 8.3) are especially suitable for reaction with succinimidyl esters, phosphate buffers (pH about 7.2-8) for reaction with thiol-reactive functional groups and carbonate or borate buffers (pH about 9) for reaction with isothiocyanates and dichlorotriazines. The appropriate reactive dye is then dissolved in a nonhydroxylic solvent (usually DMSO or DMF) in an amount sufficient to give a suitable degree of conjugation when added to a solution of the protein to be conjugated. The appropriate amount of compound for any protein or other component is conveniently predetermined by experimentation in which variable amounts of the dye are added to the protein, the conjugate is chromatographically purified to separate unconjugated compound and the compound-protein conjugate is tested in its desired application.

Following addition of the reactive compound to the component solution, the mixture may be incubated for a suitable period (typically about 1 hour at room temperature to several hours on ice), the excess unreacted compound is removed by gel filtration, dialysis, HPLC, adsorption on an ion exchange or hydrophobic polymer or other suitable means. The conjugate is used in solution or lyophilized. In this way, suitable conjugates can be prepared from antibodies, antibody fragments, avidins, lectins, enzymes, proteins A and G, cellular proteins, albumins, histones, growth factors, hormones, and other proteins. The approximate degree of substitution is determined from the long wavelength absorption of the compound-protein conjugate by using the extinction coefficient of the un-reacted compound at its long wavelength absorption peak, the unmodified protein's absorption peak in the ultraviolet and by correcting the UV absorption of the conjugate for absorption by the compound in the UV.

Conjugates of polymers, including biopolymers and other higher molecular weight polymers are typically prepared by means well recognized in the art (for example, Brinkley et al., Bioconjugate Chem., 3: 2 (1992)). In these embodiments, a single type of reactive site may be available, as is typical for polysaccharides or multiple types of reactive sites (e.g. amines, thiols, alcohols, phenols) may be available, as is typical for proteins. Selectivity of labeling is best obtained by selection of an appropriate reactive dye. For example, modification of thiols with a thiol-selective reagent such as a haloacetamide or maleimide, or modification of amines with an amine-reactive reagent such as an activated ester, acyl azide, isothiocyanate or 3,5-dichloro-2,4,6-triazine. Partial selectivity can also be obtained by careful control of the reaction conditions.

When modifying polymers with the compounds, an excess of the compound is typically used, relative to the expected degree of dye substitution. Any residual, un-reacted compound or hydrolysis product is typically removed by dialysis, chromatography or precipitation. Presence of residual, unconjugated compound can be detected by thin layer chromatography using a solvent that elutes the compound away from its conjugate. In all cases it is usually preferred that the reagents be kept as concentrated as practical so as to obtain adequate rates of conjugation.

In an exemplary embodiment, the conjugate is associated with an additional substance that binds either to the compound or the labeled component through noncovalent interaction. In another exemplary embodiment, the additional substance is an antibody, an enzyme, a hapten, a lectin, a receptor, an oligonucleotide, a nucleic acid, a liposome, or a polymer. The additional substance is optionally used to probe for the location of the conjugate, for example, as a means of enhancing the signal of the conjugate.

### Methods of Use

The present nucleic acid reporter molecules may be utilized without limit for the fluorescent detection of nucleic acid polymers in a test sample. The methods for the detection of single, double, triple or quadruple stranded DNA and RNA or a combination thereof comprises contacting a sample with a present nucleic acid reporter molecule to prepare a labeling mixture, incubating the sample with the staining solution for a sufficient amount of time for the present reporter molecules to complex with the nucleic acid, illuminating the sample with an appropriate wavelength and observing the illuminated labeling mixture whereby the nucleic acid polymer is detected.

The compound is typically combined with the sample as a staining solution. The staining solution is typically prepared by dissolving a present nucleic acid reporter molecule in an aqueous solvent such as water, a buffer solution or assay solution, such as phosphate buffered saline, or an organic solvent such as dimethylsulfoxide (DMSO), dimethylformamide (DMF), methanol, ethanol or acetonitrile. Typically, the present nucleic acid reporter molecules are first dissolved in an organic solvent such as DMSO as a stock solution. The stock solution is typically prepared about 100-300X more concentrated that the effective working concentration. Thus, the stock solution is diluted to an effective working concentration in an aqueous solution that optionally includes appropriate buffering components and a detergent. An effective working concentration of the present compounds is the amount sufficient to give a detectable optical response when complexed with nucleic acid polymers. Typically, the effective amount is about 10 nM to 10 µM. Most preferred is about 20 nM to 1 µM. For selected reporter compounds, staining is optimal when the staining solution has a concentration of about 0.04 µM to about 0.1 µM. It is generally understood that the specific amount of the nucleic acid reporter molecules present in a staining solution is determined by the physical nature of the sample and the nature of the analysis being performed.

In an embodiment, the staining solution contains a detergent. This is particularly useful when the nucleic acid is present in an aqueous sample solution. Without wishing to be bound by a theory it appears that a low concentration of detergent stabilizes the present nucleic acid reporter molecule when present in solution. Thus the staining solution can be combined with an aqueous sample providing an optimized solution based detection assay. Detergents include, but are not limited to, CHAPS, Triton™-X, SDS and Tween 20^{®}. The detergent is typically present in an aqueous solution at a concentration from about .0001% to about 0.2% (w/v). More specifically the detergent is present from about 0.0015% to about 0.005% (w/v). In an exemplary embodiment a staining solution comprises a present nucleic acid reporter molecule present at about 0.04 µM and the detergent CHAPS present at about 0.0025% (w/v).

In a further embodiment, the present staining solution contains an agent to reduce the signal to noise ratio. Such an agent improves the linearity of the curve obtained from a range of nucleic acid concentrations. Thus, in an exemplary embodiment, a staining solution for detecting RNA in the presence of DNA, contains a low concentration of DNA. Without wishing to be bound by a theory it appears that this low concentration associates with the present reporter molecules, which do not fluoresce, and lowers the background fluorescent signal. Preferably this DNA is double stranded and in one aspect the DNA is lambda DNA. Thus, in one embodiment, the present staining solution contains DNA in a concentration from about 1.0 µg/ml to about 0.05 µg/ml. More specifically the DNA is present about .05 µg/ml to about .01 µg/ml. Therefore, in an exemplary embodiment a present staining solution comprises a present nucleic acid reporter molecule present at about 0.04 µM and DNA at a concentration of about 0.2 µg/ml. In a further embodiment this staining solution would also include a detergent, as disclosed above.

Therefore, the present disclosure provides a staining solution that comprises a present nucleic acid reporter molecule in a buffer solution. When in an embodiment of the invention this staining solution comprises a detergent and in yet a further embodiment, the staining solution also comprises a low concentration of DNA.

The sample may be combined with the staining solution by any means that facilitates contact between the nucleic acid reporter molecules and the nucleic acid. The contact can occur through simple mixing, as in the case where the sample is a solution. The present reporter molecules may be added to the nucleic acid solution directly or may contact the solution on an inert matrix such as a blot or gel, a testing strip, a microarray, or any other solid or semi-solid surface, for example where only a simple and visible demonstration of the presence of nucleic acids is desired. Any inert matrix used to separate the sample can be used to detect the presence of nucleic acids by observing the fluorescent response on the inert matrix. Thus, in one embodiment is provided a composition comprising a sample and a present nucleic acid reporter molecule of the invention. In one aspect this composition is an aqueous solution.

Alternatively, the sample may include cells and/or cell membranes. While selected examples of the compound disclosed herein may permeate cellular membranes rapidly and completely upon addition of the staining solution, any technique that is suitable for transporting the reporter molecules across cell membranes with minimal disruption of the viability of the cell and integrity of cell membranes is a valid method of combining the sample with the present reporter molecules for detection of intracellular nucleic acid. Examples of suitable processes include action of chemical agents such as detergents, enzymes or adenosine triphosphate; receptor- or transport protein-mediated uptake; pore-forming proteins; microinjection; electroporation; hypoosmotic shock; or minimal physical disruption such as scrape loading or bombardment with solid particles coated with or in the presence of the present reporter molecules.

The sample is incubated in the presence of the nucleic acid reporter molecules for a time sufficient to form the fluorescent nucleic acid-reporter molecule complex. Detectable fluorescence in a solution of nucleic acids is essentially instantaneous. Detectable fluorescence within cell membranes requires the permeation of the dye into the cell. While most present nucleic acid reporter molecules are not cell permeant due to the presence of at least one negatively charged moiety, it is envisioned that the present compounds could be adequately substituted to provide cell permeant versions of the present compounds. In general, visibly detectable fluorescence can be obtained in a wide variety of cells with certain cell permeant embodiments of the present invention within about 10-30 minutes after combination with the sample, commonly within about 10-20 minutes. While permeation and fluorescence should be rapid for all reporter molecules comprising an aromatic substituent on the pyridinium or quinolinium moiety of the D moiety, it is readily apparent to one skilled in the art that the time necessary for sufficient permeation of the dye, or sufficient formation of the fluorescent nucleic acid complex, is dependent upon the physical and chemical nature of the individual sample and the sample medium.

In another embodiment, is provided a complex comprising a present nucleic acid reporter molecule of the invention non-covalently associated with a nucleic acid polymer. To facilitate the detection of the nucleic acid-reporter molecule complex, the excitation or emission properties of the fluorescent complex are utilized. For example, the sample is excited by a light source capable of producing light at or near the wavelength of maximum absorption of the fluorescent complex, such as an ultraviolet or visible lamp, an arc lamp, a laser, or even sunlight. Preferably the fluorescent complex is excited at a wavelength equal to or greater than about 300 nm, more preferably equal to or greater than about 340 nm. The fluorescence of the complex is detected qualitatively or quantitatively by detection of the resultant light emission at a wavelength of greater than about 400 nm, more preferably greater than about 450 nm, most preferred greater than 480 nm. The emission is detected by means that include visible inspection, photographic film, or the use of current instrumentation such as fluorometers, quantum counters, plate readers, epifluorescence microscopes and flow cytometers or by means for amplifying the signal such as a photomultiplier.

In an exemplified embodiment, the present nucleic acid reporter compounds of the invention are used to detect RNA in the presence of DNA, wherein the method comprises the following steps:
a. combining a present nucleic acid reporter molecule with a sample to prepare a labeling mixture, wherein the nucleic acid reporter molecule has a RNA/DNA ratio of fluorescence enhancement greater than about one;
b. incubating the labeling mixture for a sufficient amount of time for the nucleic acid reporter molecule to associate with RNA in the sample to form an incubated mixture;
c. illuminating the incubated mixture with an appropriate wavelength to form an illuminated mixture; and,
d. observing the illuminated mixture whereby the RNA is detected in the presence of DNA.

Typically, the fluorescence of the RNA complex is distinguishable from the fluorescence of a DNA complex with the compound. This difference may be due to any detectable optical property, but in one embodiment, the fluorescence of the RNA complex is brighter than the fluorescence of a corresponding DNA complex with the compound. Therefore, in an exemplary embodiment, by comparing the fluorescence response of the RNA complex with a standard, the amount of RNA in the sample may be quantitated, even in the presence of DNA.

As discussed above, the RNA present in the sample may be present in a solution, or in or on a solid or semisolid support. In a preferred embodiment, the nucleic acid is present in an aqueous solution. The detection of RNA in solution may also be enhanced by the addition of a detergent to the staining solution. Exemplified detergents include, but are not limited to CHAPS, Triton™-X, SDS and Tween 20^{®}. Particularly preferred is CHAPS, wherein the fluorescent signal in an aqueous solution is stabilized for at least 6 hours. The detection of RNA in a solution may also be further enhanced by the addition of a low concentration of DNA to the staining solution.

Typically, the fluorescence of the RNA complex is distinguishable from the fluorescence of a DNA complex with the compound by fluorescence intensity. This difference may be due to any detectable optical property, but in one embodiment, the fluorescence of the RNA complex is brighter than the fluorescence of a corresponding DNA complex with the compound.

By comparing the fluorescence response of the RNA complex with a standard, the amount of RNA in the sample may be quantitated, even in the presence of DNA.

As discussed above, the RNA present in the sample may be present in a solution, or in or on a solid or semisolid support. The RNA itself may be selected from one or more of mRNA, tRNA, and rRNA.

The method may also be enhanced by the addition of an additional detection reagent that exhibits a greater fluorescence response when associated with DNA than when associated with RNA. A variety of nucleic acid stains that fluoresce brightly when complexed with DNA are known in the art.

The present nucleic acid reporter molecules that are capable of producing a fluorescent intensity signal that is greater on RNA than on DNA are determined empirically. The relative selectivity of the present compounds for differentiating RNA and DNA may be readily evaluated as set out in Examples 2, and 6-12.

The foregoing methods having been described it is understood that the many and varied compounds of the present invention can be utilized with the many methods. The compounds not being limited to just those that are specifically disclosed.

In an exemplary embodiment the present methods employ a nucleic acid reporter molecule that comprises the formula 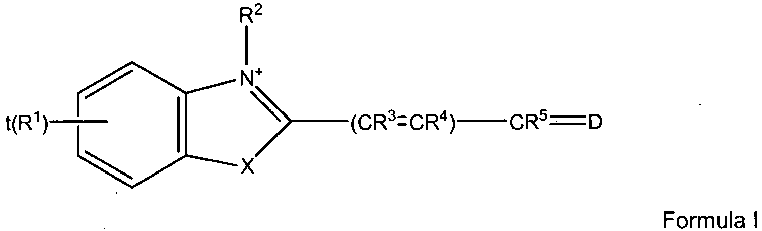 wherein each R¹ is independently hydrogen, carboxy, sulfo, phosphate, phosphonate, amino, hydroxyl, trifluoromethyl, halogen, alkyl, substituted alkyl, alkoxy, substituted alkoxy, alkylamino, substituted alkylamino, dialkylamino, substituted dialkylamino, aminoalkyl, substituted aminoalkyl, fused benzene, substituted fused benzene, reactive group, solid support or carrier molecule;
wherein the reactive group is an acrylamide, a carboxylic acid, an activated ester of a carboxylic acid, a succinimidyl ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a
haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group;
wherein the carrier molecule is an amino acid, an antibody or fragment thereof, an avidin, streptavidin, a biotin, a blood component protein, a dextran, a drug, an enzyme, an enzyme inhibitor, a hapten, a hormone, an IgG binding protein, a fluorescent protein, a growth factor, a lectin, a lipid, a lipid assembly, a lipopolysaccharide, a microorganism, a metal binding protein, a metal chelating moiety, a non-biological microparticle, a polymeric microparticle, a nucleoside, a nucleotide, a nucleic acid polymer, an oligonucleotide, a peptide, a peptide toxin, a phosphotidylserine-binding protein, a protein, a polysaccharide, a psoralen, a structural protein, a small-molecule drug, a synthetic polymer, a tyramide, a biological cell or a virus;
wherein the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, superparamagnetic bead, sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch;
t is an integer from 1 to 4;
wherein R² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium;
at least one of R³ and R⁵ is an alkyl, substituted alkyl, a 5-, 6- or 7- membered heterocycloalkyl, a substituted 5-, 6- or 7- membered heterocycloalkyl, a 5-, 6- or 7-membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl; and the remaining R³ or R⁵ is hydrogen; or R³ and R⁵ are both hydrogen;
R⁴ is a phenyl substituent, substituted by one or more of F, Cl, CF₃, -CO₂CH₃, NO₂, amino, C₁-C₆ alkoxy, phenoxy, and C₁-C₆ alkyl that is itself optionally further substituted by amino, sulfo, or carboxy;
X is S, O, or Se; and
D is a substituted pyridinium, unsubstituted pyridinium, substituted quinolinium, unsubstituted quinolinium, substituted benzazolium or unsubstituted benzazolium moiety.

These nucleic acid reporter molecules exhibit a fluorescence enhancement when non-covalently associated with a nucleic acid molecule. In one aspect, the fluorescence enhancement is greater when the nucleic acid is RNA than when the nucleic acid is DNA.

In one aspect R¹ is alkoxy or halogen. In another aspect R¹ is methoxy, Br, Cl, or F.

In one aspect R² is methyl, ethyl, propyl, or - (CH₂)₃SO₃⁻.

In an exemplary embodiment, D has the formula: 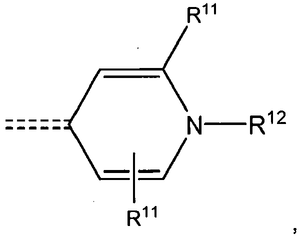 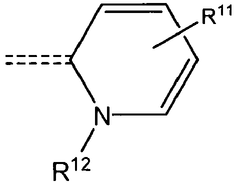 or 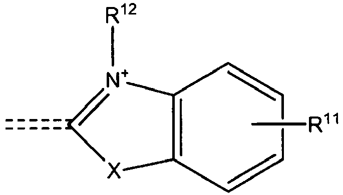 wherein R¹¹ is hydrogen, substituted alkyl, unsubstituted alkyl, substituted heteroalkyl, unsubstituted heteroalkyl, substituted aryl, unsubstituted aryl, substituted arylalkyl, unsubstituted arylalkyl, substituted heteroarylalkyl; unsubstituted heteroarylalkyl, substituted heteroaryl, unsubstituted heteroaryl substituted cycloalkyl, unsubstituted cycloalkyl, substituted heterocycloalkyl, unsubstituted heterocycloalkyl, halogen, alkoxy, substituted alkylamino, unsubstituted alkylamino, substituted alkylthio, unsubstituted alkylthio, reactive group, solid support, or carrier molecule and R¹² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium. Alternatively, R¹¹ in combination with an adjacent R¹¹ or R¹², together with the atoms to which they are joined, form a ring which is a 5-, 6- or 7-membered heterocycloalkyl, a substituted 5-, 6- or 7- membered heterocycloalkyl, a 5-, 6- or 7- membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl.

In an exemplary embodiment of the methods, the nucleic acid reporter molecule has the formula: 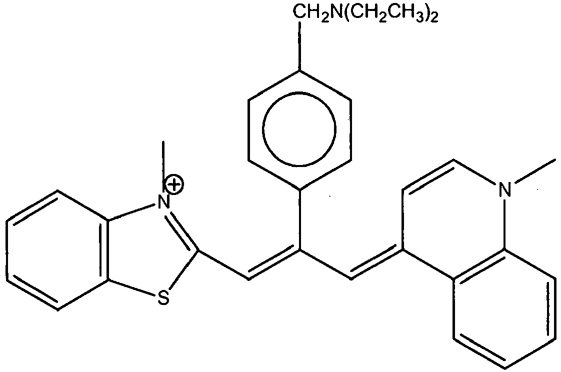 or the formula

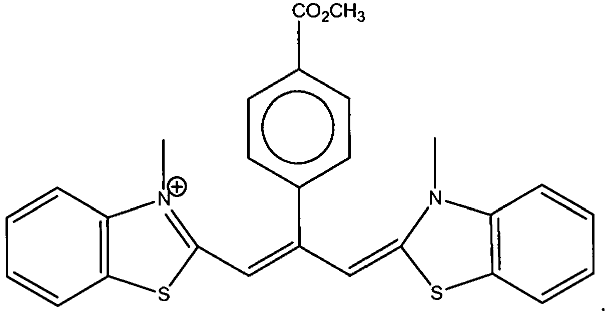

The nucleic acid reporter molecule of the methods of the disclosure may comprise a reactive group, solid support and carrier molecule wherein these substituents independently comprise a linker that is a single covalent bond, or a covalent linkage that is linear or branched, cyclic or heterocyclic, saturated or unsaturated, having 1-20 nonhydrogen atoms selected from the group consisting of C, N, P, O and S; and are composed of any combination of ether, thioether, amine, ester, carboxamide, sulfonamide, hydrazide bonds and aromatic or heteroaromatic bonds.

In an exemplary embodiment, the reactive group is an acrylamide, an activated ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group. In a further aspect, the reactive group is carboxylic acid, succinimidyl ester of a carboxylic acid, hydrazide, amine or a maleimide.

In an exemplary embodiment the carrier molecule is an amino acid, a peptide, a protein, a polysaccharide, a nucleoside, a nucleotide, an oligonucleotide, a nucleic acid polymer, a hapten, a psoralen, a drug, a hormone, a lipid, a lipid assembly, a synthetic polymer, a polymeric microparticle, a biological cell or a virus. In a further aspect, the carrier molecule is an antibody or fragment thereof, an avidin or streptavidin, a biotin, a blood component protein, a dextran, an enzyme, an enzyme inhibitor, a hormone, an IgG binding protein, a fluorescent protein, a growth factor, a lectin, a lipopolysaccharide, a microorganism, a metal binding protein, a metal chelating moiety, a non-biological microparticle, a peptide toxin, a phosphotidylserine-binding protein, a structural protein, a small-molecule drug, or a tyramide.

In an exemplary embodiment, the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, or superparamagnetic bead. In a further aspect, the solid support is Sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch.

### Sample Preparation

The sample may be prepared using methods well known in the art for isolating nucleic acid for *in vitro* and solution based assay detection or well know methods for live cell or fixed cells for intracellular and/or *in vivo* detection of nucleic acids. The sample includes, without limitation, any biological derived material that is thought to contain a nucleic acid polymer. Alternatively, samples also include material that nucleic acid polymers have been added to such as a PCR reaction mixture, a polymer gel such as agarose or polyacrylamide gels or a microfluidic assay system. In another aspect of the present disclosure, the sample can also include a buffer solution that contains nucleic acid polymers to determine the present reporter molecules that are ideal under different assay conditions or to determine the present reporter molecules that are preferential RNA reporters.

The sample can be a biological fluid such as whole blood, plasma, serum, nasal secretions, sputum, saliva, urine, sweat, transdermal exudates, cerebrospinal fluid, or the like. Biological fluids also include tissue and cell culture medium wherein an analyte of interest has been secreted into the medium. Alternatively, the sample may be whole organs, tissue or cells from the animal. Examples of sources of such samples include muscle, eye, skin, gonads, lymph nodes, heart, brain, lung, liver, kidney, spleen, thymus, pancreas, solid tumors, macrophages, mammary glands, mesothelium, and the like. Cells include without limitation prokaryotic cells such as bacteria, yeast, fungi, mycobacteria and mycoplasma, and eukaryotic cells such as nucleated plant and animal cells that include primary cultures and immortalized cell lines. Typically prokaryotic cells include E. coli and S. aureus. Eukaryotic cells include without limitation ovary cells, epithelial cells, circulating immune cells, β cells, hepatocytes, and neurons.

In an exemplary embodiment, the sample comprises biological fluids, buffer solutions, live cells, fixed cells, eukaryotic cells, prokaryotic cells, nucleic acid polymers, nucleosides, nucleotides, a polymeric gel or tissue sections. In a further aspect, the sample comprises nucleic acid polymers in an aqueous buffer.

The nucleic acid may be either natural (biological in origin) or synthetic (prepared artificially). The nucleic acid may be present as nucleic acid fragments, oligonucleotides, or nucleic acid polymers. The nucleic acid may be present in a condensed phase, such as a chromosome. The presence of the nucleic acid in the sample may be due to a successful or unsuccessful experimental methodology, undesirable contamination, or a disease state. Nucleic acid may be present in all, or only part, of a sample, and the presence of nucleic acids may be used to distinguish between individual samples, or to differentiate a portion or region within a single sample.

The nucleic acid may be enclosed in a biological structure, for example contained within a viral particle, an organelle, or within a cell. The nucleic acids enclosed in biological structures may be obtained from a wide variety of environments, including cultured cells, organisms or tissues, unfiltered or separated biological fluids such as urine, cerebrospinal fluid, blood, lymph fluids, tissue homogenate, mucous, saliva, stool, or physiological secretions or environmental samples such as soil, water and air. The nucleic acid may be endogenous or introduced as foreign material, such as by infection or by transfection. The present nucleic acid reporter molecules can also be used for staining nucleic acids in a cell or cells that is fixed and treated with routine histochemical or cytochemical procedures.

Alternatively, the nucleic acid is not enclosed within a biological structure, but is present as a sample solution. The sample solution can vary from one of purified nucleic acids to crude mixtures such as cell extracts, biological fluids and environmental samples. In some cases it is desirable to separate the nucleic acids from a mixture of biomolecules or fluids in the solution prior to combination with the present reporter molecules. Numerous, well known, techniques exist for separation and purification of nucleic acids from generally crude mixtures with other proteins or other biological molecules. These include such means as electrophoretic techniques and chromatographic techniques using a variety of supports.

The sample may be incubated in the presence of the nucleic acid reporter molecules for a time sufficient to form a nucleic acid-reporter molecule complex. While permeation and complexation may be more or less rapid for the compounds disclosed herein, largely depending on the nature of the substituents present on the compound. It should be apparent to one skilled in the art that the time necessary for sufficient permeation of the dye, or sufficient formation of the resulting nucleic acid complex, is dependent upon the physical and chemical nature of the individual sample and the sample medium (see for example U.S. Patent no. 5,658,751).

### Illumination

The sample containing a nucleic acid-reporter molecule complex may be illuminated with a wavelength of light selected to give a detectable optical response, and observed with a means for detecting the optical response. By optical response is meant any detectable colorimetric or luminescent property of the complex. Typically, the optical response is related to the excitation or emission properties of the complex.

For example, the sample may be excited by a light source capable of producing light at or near the wavelength of maximum absorption of the fluorescent complex, such as an ultraviolet or visible lamp, an arc lamp, a laser, or even sunlight. The optical response is optionally detected by visual inspection, or by use of any of the following devices: CCD camera, video camera, photographic film, laser-scanning devices, fluorometers, photodiodes, quantum counters, epifluorescence microscopes, scanning microscopes, flow cytometers, fluorescence microplate readers, or by means for amplifying the signal such as photomultiplier tubes. Where the sample is examined using a flow cytometer, examination of the sample optionally includes sorting portions of the sample according to their fluorescence response.

The wavelengths of the excitation and emission bands of the nucleic acid reporter molecules vary with reporter molecule composition to encompass a wide range of illumination and detection bands. This allows the selection of individual reporter molecules for use with a specific excitation source or detection filter. In particular, present reporter molecules can be selected that possess excellent correspondence of their excitation band with the 633/647 nm band of the commonly used argon-ion laser or emission bands which are coincident with preexisting filters.

The presence, location, and distribution of nucleic acid, particularly RNA, may be detected using the spectral properties of the compound-nucleic acid complex. Once the dye-nucleic acid complex is formed, its presence may be detected and used as an indicator of the presence, location, or type of nucleic acids in the sample, or as a basis for sorting cells, or as a key to characterizing the sample or cells in the sample. Such characterization may be enhanced by the use of additional reagents, including fluorescent reagents. The nucleic acid concentration in a sample can also be quantified by comparison with known relationships between the fluorescence of the nucleic acid-dye complex and concentration of nucleic acids in the sample. In particular, fluorescence intensity may be compared to a standard curve prepared from samples containing known nucleic acid concentrations, particularly RNA concentrations.

### Kits

Suitable kits for forming a nucleic acid-reporter molecule complex and detecting the nucleic acid also form part of the present disclosure. Such kits can be prepared from readily available materials and reagents and can come in a variety of embodiments. The contents of the kit will depend on the design of the assay protocol or reagent for detection or measurement. All kits will contain instructions, appropriate reagents, and one or more of the presently disclosed nucleic acid reporter molecules. Typically, instructions include a tangible expression describing the reagent concentration or at least one assay method parameter such as the relative amounts of reagent and sample to be added together, maintenance time periods for reagent/sample admixtures, temperature, buffer conditions and the like to allow the user to carry out any one of the methods or preparations described above. In one aspect, the kit is formulated to facilitate the high-throughput screening of multiple samples, such as may be accomplished using automated methods.

Thus, a kit for detecting nucleic acid in a sample may comprise a compound as described above. The kit may further include instructions for performing one or more of the above disclosed methods, including the detection and/or quantitation of RNA in the presence of DNA.

The kit may optionally further include one or more of the following; sample preparation reagents, a buffering agent, a nucleic acid reporter molecule dilution buffer, an organic solvent or an additional detection reagent, particularly where the additional detection reagent is an additional distinct nucleic acid reporter molecule. Where the additional nucleic acid reporter is a DNA-selective nucleic acid stain, the kit may be useful for detecting and/or quantitating RNA in the presence of DNA. In one aspect the dilution buffer (for the present reporter molecules) comprises a detergent and/or a low concentration of DNA.

In an exemplary embodiment the present kits comprise a nucleic acid reporter molecule that comprises the formula 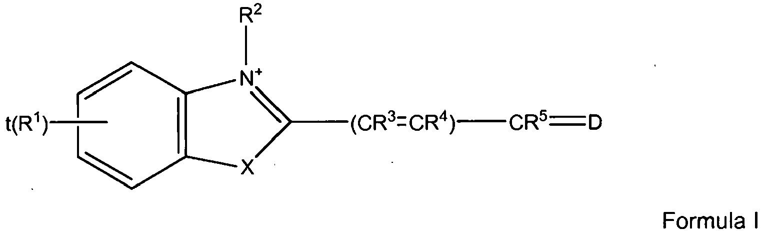 each R¹ is independently hydrogen, carboxy, sulfo, phosphate, phosphonate, amino, hydroxyl, trifluoromethyl, halogen, alkyl, substituted alkyl, alkoxy, substituted alkoxy, alkylamino, substituted alkylamino, dialkylamino, substituted dialkylamino, aminoalkyl, substituted aminoalkyl, fused benzene, substituted fused benzene, reactive group, solid support or carrier molecule;
wherein the reactive group is an acrylamide, a carboxylic acid, an activated ester of a carboxylic acid, a succinimidyl ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group;
wherein the carrier molecule is an amino acid, an antibody or fragment thereof, an avidin, streptavidin, a biotin, a blood component protein, a dextran, a drug, an enzyme, an enzyme inhibitor, a hapten, a hormone, an IgG binding protein, a fluorescent protein, a growth factor, a lectin, a lipid, a lipid assembly, a lipopolysaccharide, a microorganism, a metal binding protein, a metal chelating moiety, a non-biological microparticle, a polymeric microparticle, a nucleoside, a nucleotide, a nucleic acid polymer, an oligonucleotide, a peptide, a peptide toxin, a phosphotidylserine-binding protein, a protein, a polysaccharide, a psoralen, a structural protein, a small-molecule drug, a synthetic polymer, a tyramide, a biological cell or a virus;
wherein the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, superparamagnetic bead, sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch;
t is an integer from 1 to 4;
wherein R² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium;
at least one of R³ and R⁵ is an alkyl, substituted alkyl, a 5-, 6- or 7- membered heterocycloalkyl, a substituted 5-, 6- or 7- membered heterocycloalkyl, a 5-, 6- or 7-membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl; and the remaining R³ or R⁵ is hydrogen; or R³ and R⁵ are both hydrogen;
R⁴ is a phenyl substituent, substituted by one or more of F, Cl, CF₃, -CO₂CH₃, NO₂, amino, C₁-C₆ alkoxy, phenoxy, and C₁-C₆ alkyl that is itself optionally further substituted by amino, sulfo, or carboxy;
X is S, O, or Se; and
D is a substituted pyridinium, unsubstituted pyridinium, substituted quinolinium, unsubstituted quinolinium, substituted benzazolium or unsubstituted benzazolium moiety.

These nucleic acid reporter molecules exhibit a fluorescence enhancement when non-covalently associated with a nucleic acid molecule. In one aspect, the fluorescence enhancement is greater when the nucleic acid is RNA than when the nucleic acid is DNA.

In one aspect R¹ is alkoxy or halogen. In another aspect R¹ is methoxy, Br, Cl, or F.

In one aspect R² is methyl, ethyl, propyl, or - (CH₂)₃SO₃⁻.

In an exemplary embodiment, D has the formula: 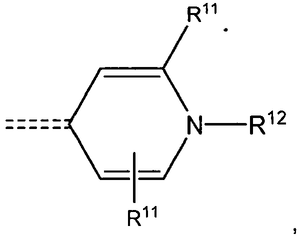 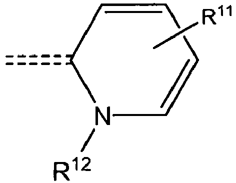 or 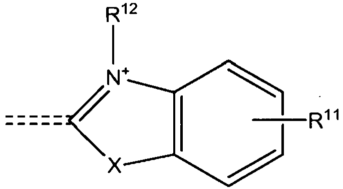 wherein R¹¹ is hydrogen, substituted alkyl, unsubstituted alkyl, substituted heteroalkyl, unsubstituted heteroalkyl, substituted aryl, unsubstituted aryl, substituted arylalkyl, unsubstituted arylalkyl, substituted heteroarylalkyl; unsubstituted heteroarylalkyl, substituted heteroaryl, unsubstituted heteroaryl substituted cycloalkyl, unsubstituted cycloalkyl, substituted heterocycloalkyl, unsubstituted heterocycloalkyl, halogen, alkoxy, substituted alkylamino, unsubstituted alkylamino, substituted alkylthio, unsubstituted alkylthio, reactive group, solid support, or carrier molecule and R¹² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium. Alternatively, R¹¹ in combination with an adjacent R¹¹ or R¹², together with the atoms to which they are joined, form a ring which is a 5-, 6- or 7-membered heterocycloalkyl, a substituted 5-, 6- or 7- membered heterocycloalkyl, a 5-, 6- or 7- membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl.

In an exemplary embodiment of the kits, the nucleic acid reporter molecule has the formula: 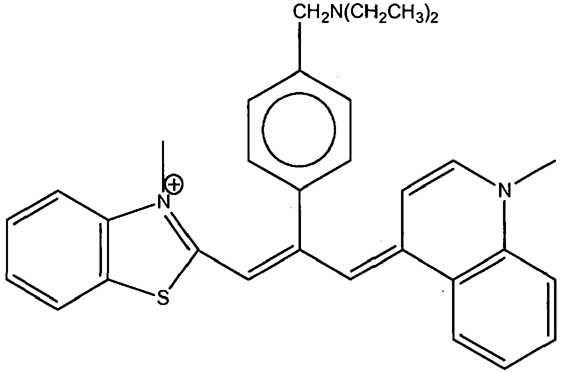 or the formula

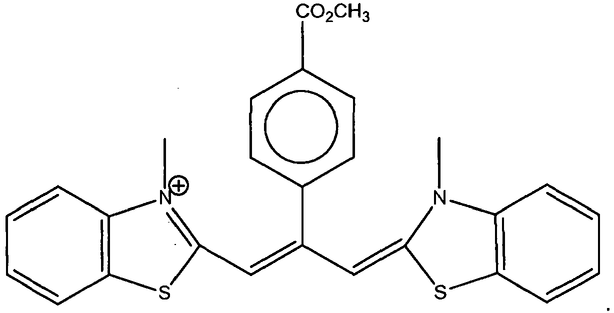

The nucleic acid reporter molecule of the kits of the disclosure may comprise a reactive group, solid support and carrier molecule wherein these substituents independently comprise a linker that is a single covalent bond, or a covalent linkage that is linear or branched, cyclic or heterocyclic, saturated or unsaturated, having 1-20 nonhydrogen atoms selected from the group consisting of C, N, P, O and S; and are composed of any combination of ether, thioether, amine, ester, carboxamide, sulfonamide, hydrazide bonds and aromatic or heteroaromatic bonds.

In an exemplary embodiment, the reactive group is an acrylamide, an activated ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group. In a further aspect, the reactive group is carboxylic acid, succinimidyl ester of a carboxylic acid, hydrazide, amine or a maleimide.

In an exemplary embodiment the carrier molecule is an amino acid, a peptide, a protein, a polysaccharide, a nucleoside, a nucleotide, an oligonucleotide, a nucleic acid polymer, a hapten, a psoralen, a drug, a hormone, a lipid, a lipid assembly, a synthetic polymer, a polymeric microparticle, a biological cell or a virus. In a further aspect, the carrier molecule is an antibody or fragment thereof, an avidin or streptavidin, a biotin, a blood component protein, a dextran, an enzyme, an enzyme inhibitor, a hormone, an IgG binding protein, a fluorescent protein, a growth factor, a lectin, a lipopolysaccharide, a microorganism, a metal binding protein, a metal chelating moiety, a non-biological microparticle, a peptide toxin, a phosphotidylserine-binding protein, a structural protein, a small-molecule drug, or a tyramide.

In an exemplary embodiment, the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, or superparamagnetic bead. In a further aspect, the solid support is Sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch.

A detailed description of the compounds and methods of the disclosure having been provided above, the following examples are given for the purpose of illustration, and shall not be construed as being a limitation on the scope of the invention or of the appended claims.

### EXAMPLES

### Example 1: Preparation of Compound 1 (2-(3-methyl-3H-benzothiazol-2-ylidene)-1-phenyl-ethanone)

A mixture of 0.58 g of 2,3-dimethylbenzothiazolium iodide and 0.42 g of benzoyl chloride in 20 mL of pyridine is heated at 60 °C for ten minutes. The pyridine is evaporated under reduced pressure and the residue is partitioned between chloroform and 1N HCl. Silica gel column with ethyl acetate hexane yields 0.25 g of Compound 1.

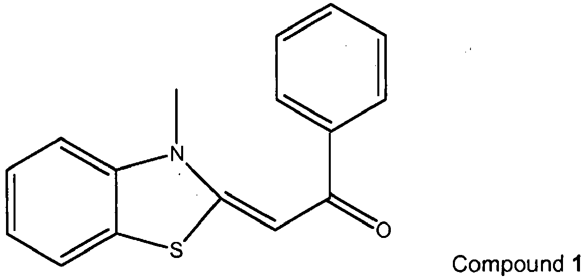

Other 2-(3-methyl-3H-benzothiazol-2-ylidene)-1-aryl/alkyl-ethanones may be prepared in an analogous fashion as Compound 1 with a corresponding acid chloride, as shown generally in the following synthetic scheme:

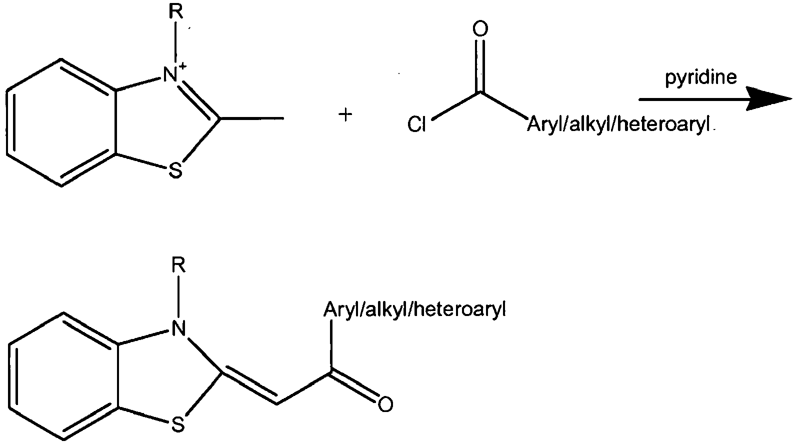

In particular, Compounds **5-10** and **12-15** may be prepared using the above synthetic strategy, among other compounds.

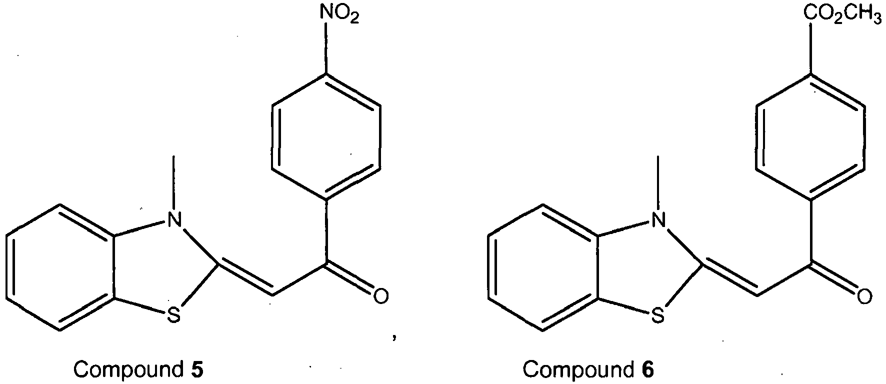

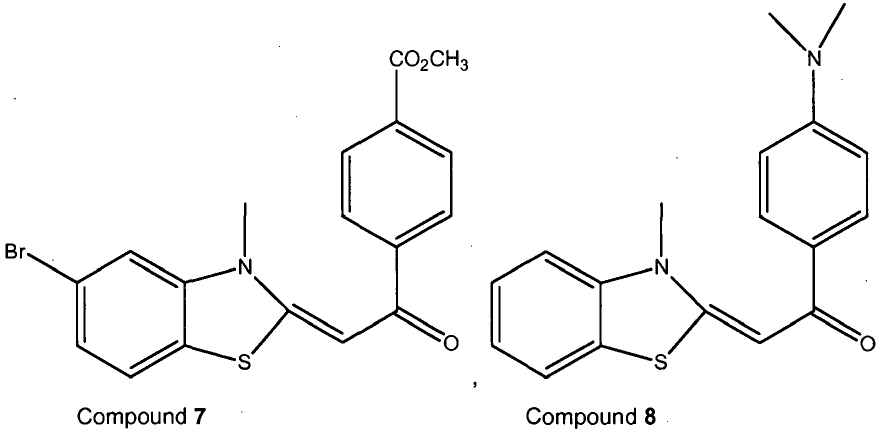

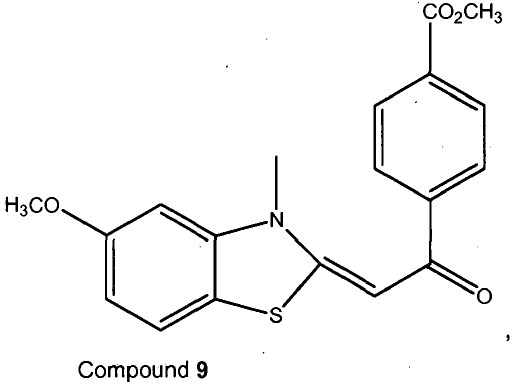

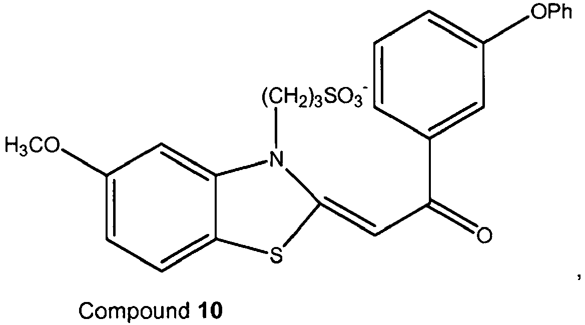

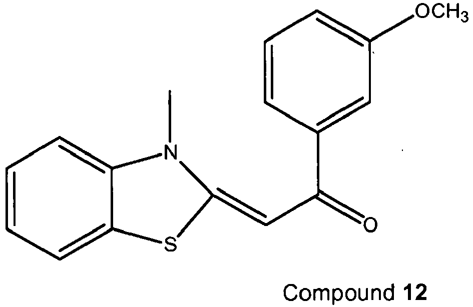

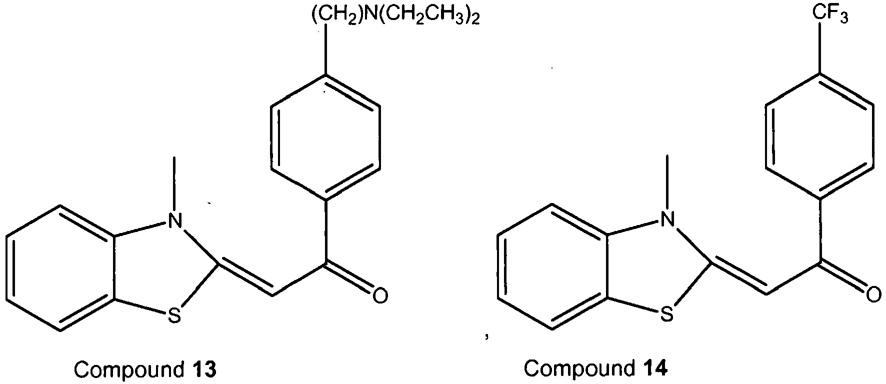

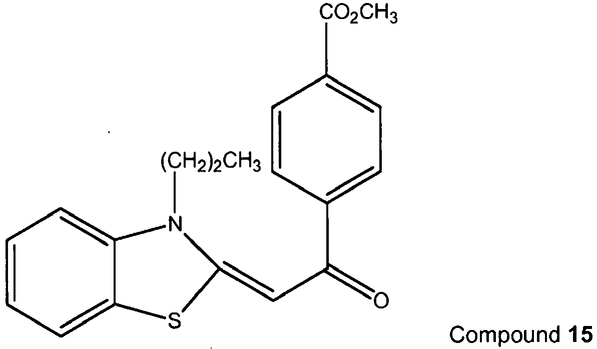

### Example 2: Preparation of Comparative Compound 16

A mixture of 0.135 g of 2-(3-methyl-3H-benzothiazol-2-ylidene)-1-phenyl-ethanone and 0.15 mL of phosphorous oxychloride is stirred in 5 mL of dichloroethane at reflux for 2 hours. At the end of the period the dichloroethane is removed by evaporation and the residue is stirred in 30 mL of ethyl acetate and filtered to yield 0.16 g of the intermediate 2-(2-chloro-2-phenylvinyl)-3-methyl-benzothiazolium chloride, which is then reacted with 0.165 g of 1,4-dimethylquinolinium tosylate in 15 mL of methylene chloride in the presence of 0.14 g of triethylamine to generate the desired product.

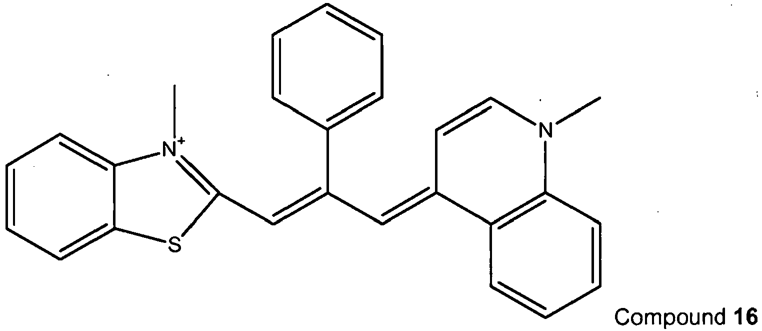

The following dye compounds (Compounds **18-28, 30, 34-38 and 41-45)** are prepared in an analogous manner as Comparative Compound **16.** The corresponding 2-(3-methyl-3H-benzothiazol-2-ylidene)-1-aryl/alkyl-ethanones are first treated with phosphorous oxychloride, and the resulting benzothiazolium chloride compound is then coupled with an appropriate quinolinium, pyridinium or benzazolium in the presence of an appropriate base (e.g. triethylamine) to generate Compounds **18-28, 30, 34-38** and **41-45.** (See, Table 3)

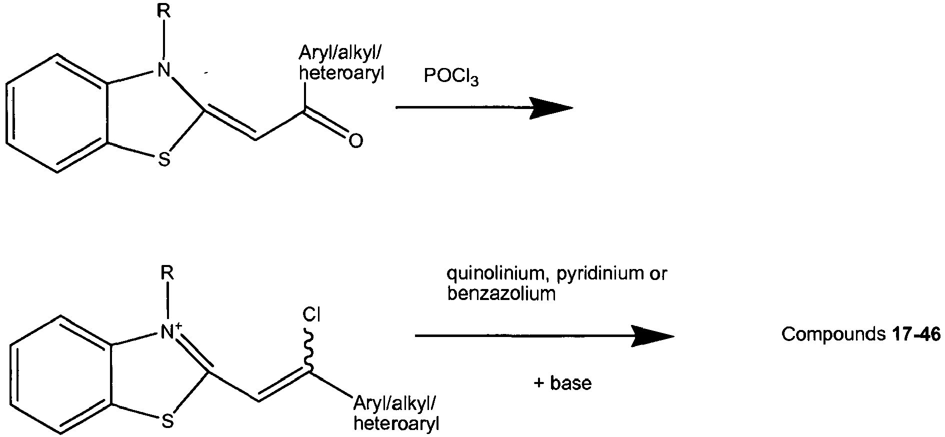

**Table 3:**

| Compound | **Ex/Em (nm)¹** | **Fluorescence Enhancement Ratio (RNA/DNA)²** |
|---|---|---|
| 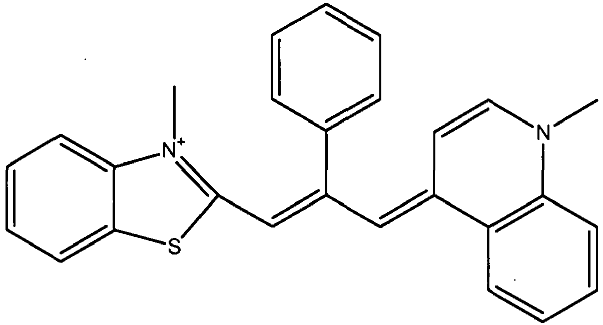 | 642/662 | 7 |
| Comparative Compound **16** | | |
| 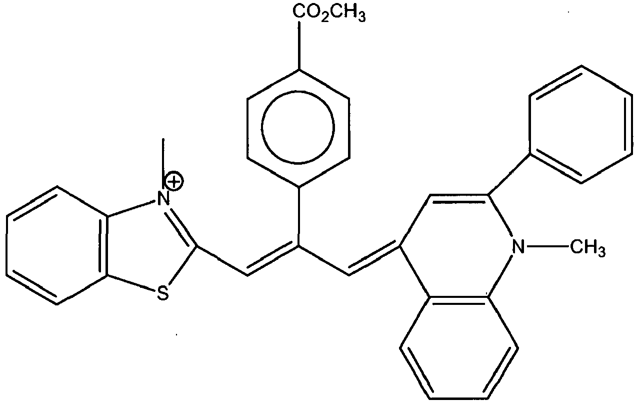 | 597/689 | 7.8 |
| Compound **18** | | |
| 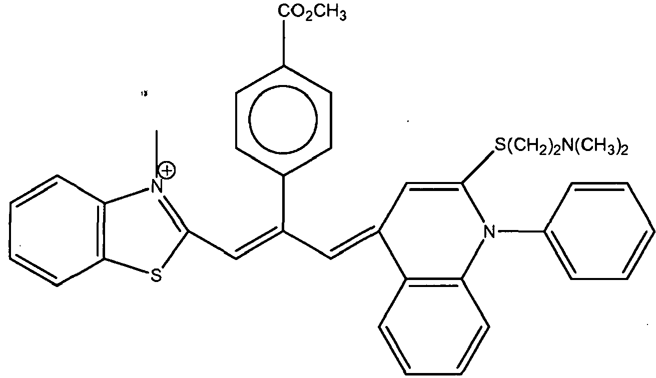 | 644/686 | 14.7 |
| Compound **19** | | |
| 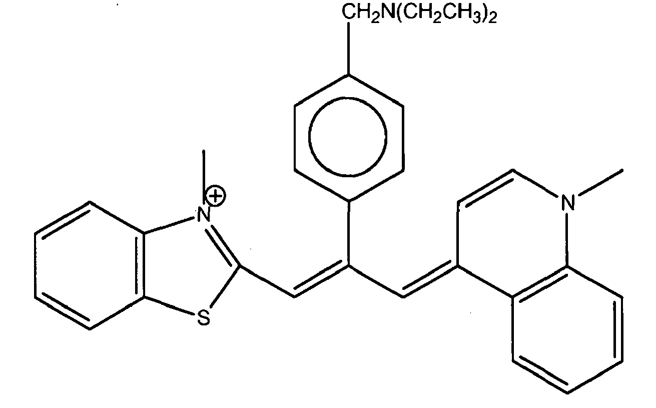 | 631/670 | 69 |
| Compound **20** | | |
| 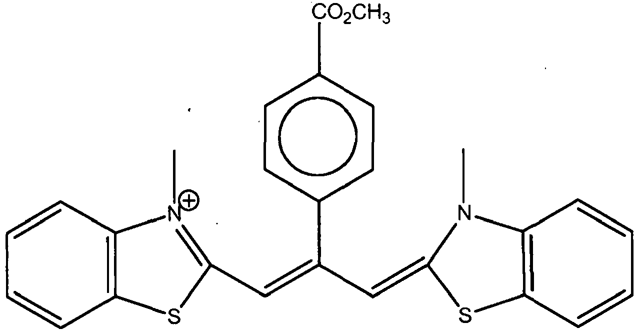 | 557/598 | 6.6 |
| Compound **21** | | |
| 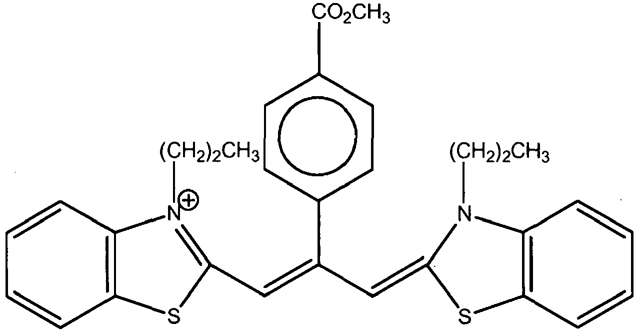 | 560/599 | 1.7 |
| Compound **22** | | |
| 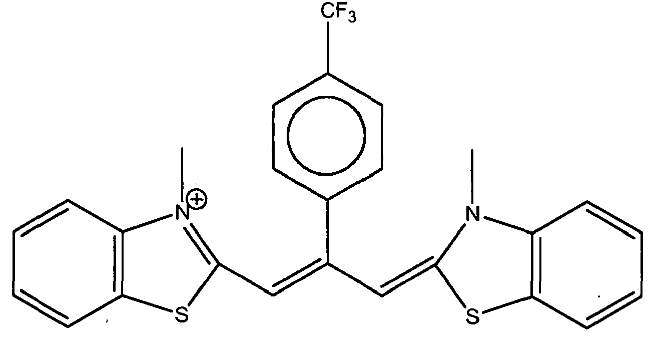 | 557/590 | 4.2 |
| Compound **23** | | |
| 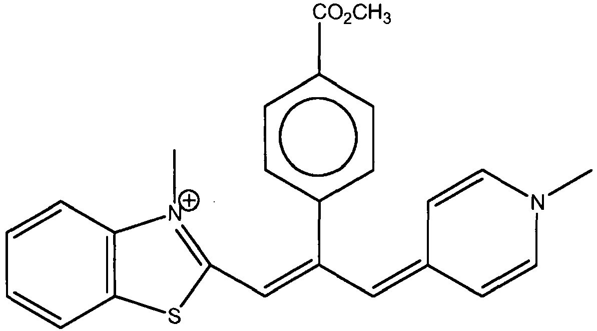 | 554/609 | 6.4 |
| Compound **24** | | |
| 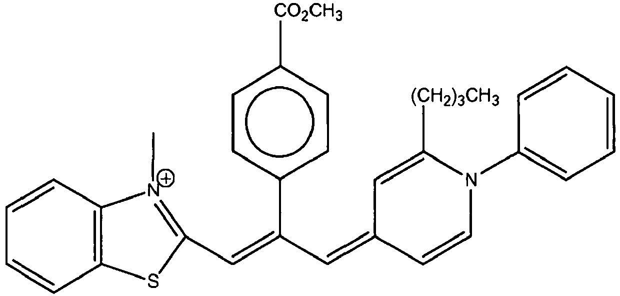 | 573/618 | 1.9 |
| Compound **25** | | |
| 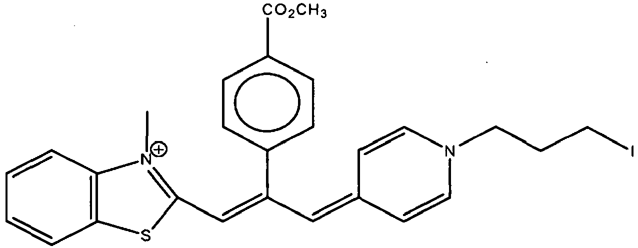 | 562/614 | 1.7 |
| Compound **26** | | |
| 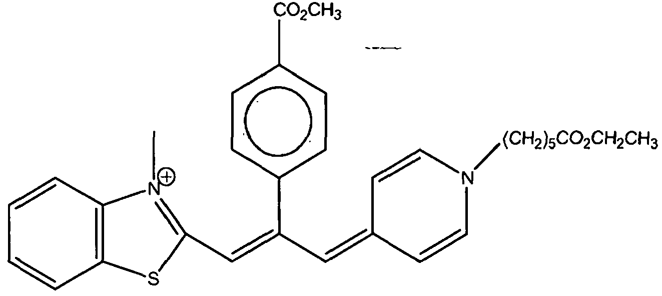 | | 1.67 |
| Compound **27** | | |
| 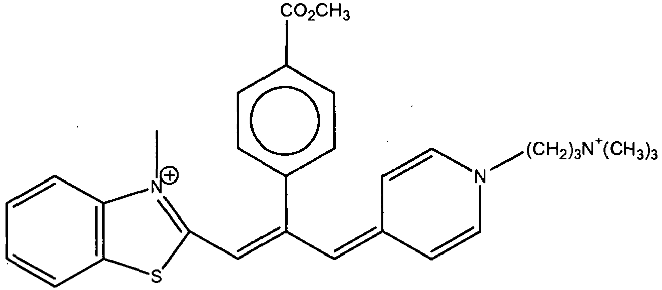 | | 2.16 |
| Compound **28** | | |
| 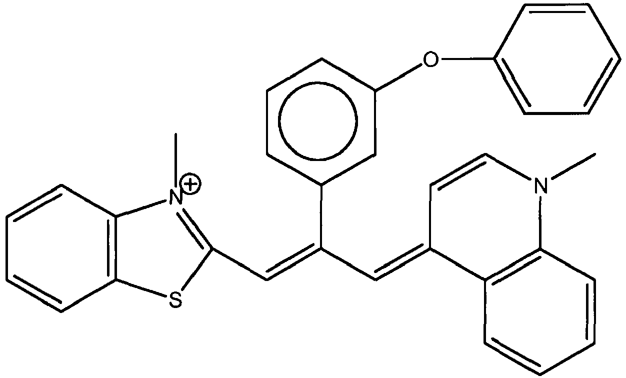 | 631/665 | 3.6 |
| Compound **30** | | |
| 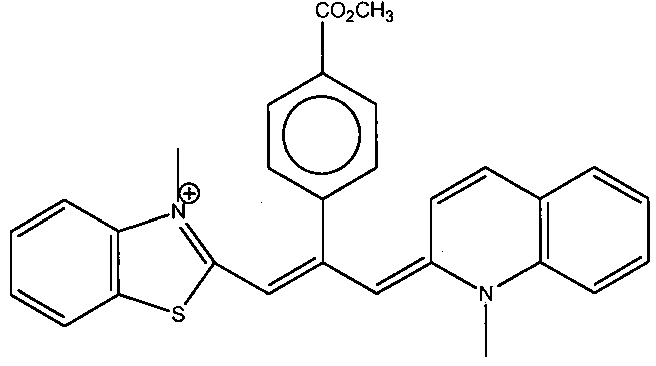 | 605/630 | 11.1 |
| Compound **34** | | |
| 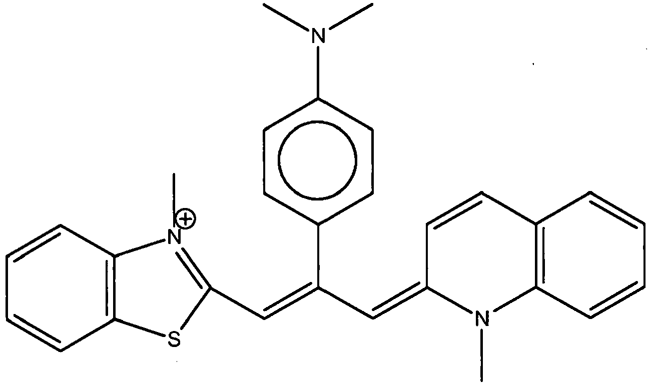 | 590/629 | 3.2 |
| Compound **35** | | |
| 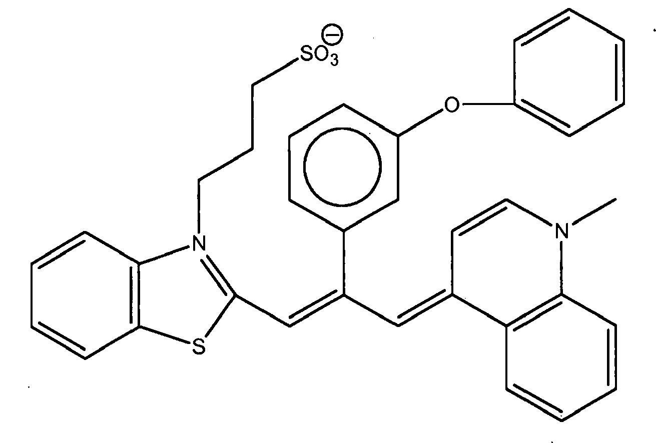 | 640/670 | 6 |
| Compound **36** | | |
| 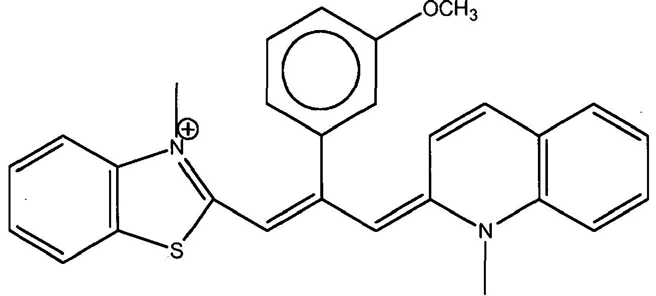 | 592/631 | 7.7 |
| Compound **37** | | |
| 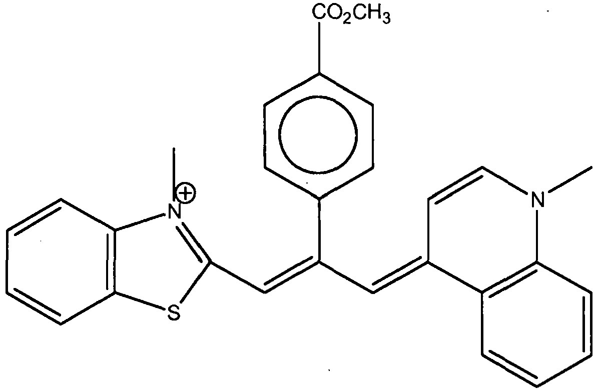 | 631/667 | 165 |
| Compound **38** | | |
| 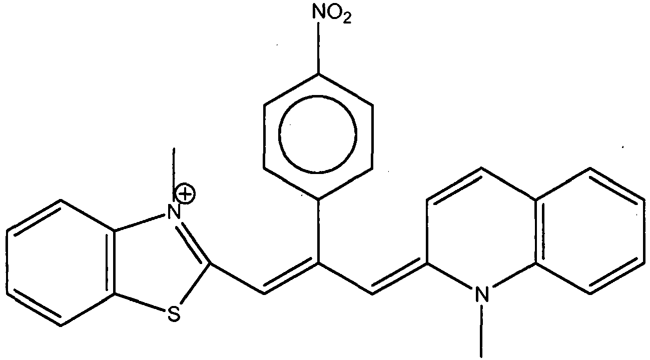 | 601/613 | 1.2 |
| Compound **41** | | |
| 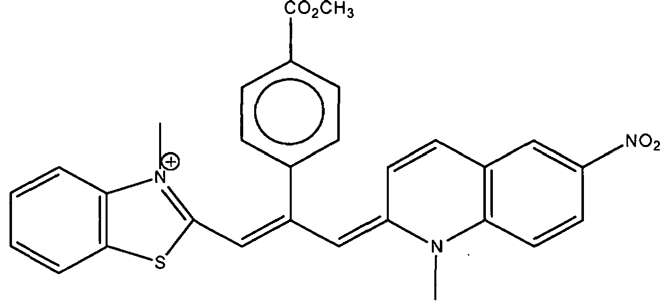 | 526/598 | 6 |
| Compound **42** | | |
| 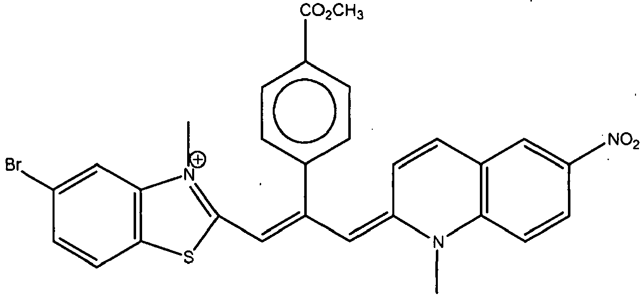 | 603/630 | 7 |
| Compound **43** | | |
| 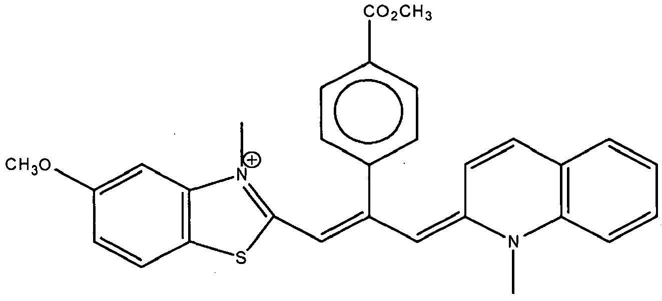 | 618/643 | 10 |
| Compound **44** | | |
| 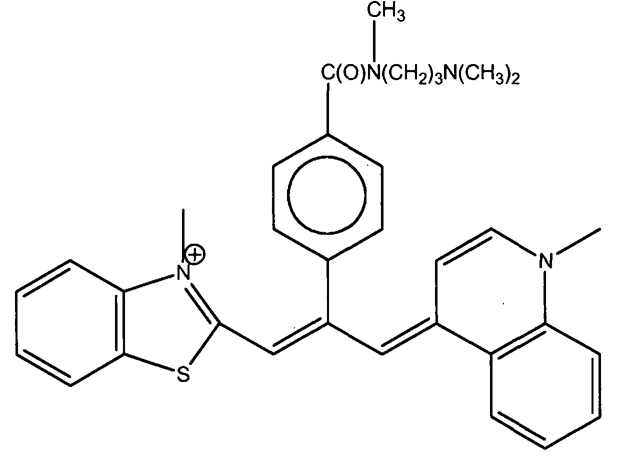 | 631/664 | 26.8 |
| Compound **45** | | |

| | | |
|---|---|---|
| ¹ Complex with nucleic acid ² The ratio of the fluorescence enhancement of the compound when associated with RNA to the fluorescence enhancement of the compound when associated with DNA | | |

### Example 3: Preparation of Compound 50

A mixture of 50 mg of Compound **20** and 0.5 mL of methyl iodide is heated in 3 mL of methanol in the presence of 0.01 mL of diisopropylethylamine at 50 °C for approximately 4 hours. The product (Compound **50**) is recovered via filtration.

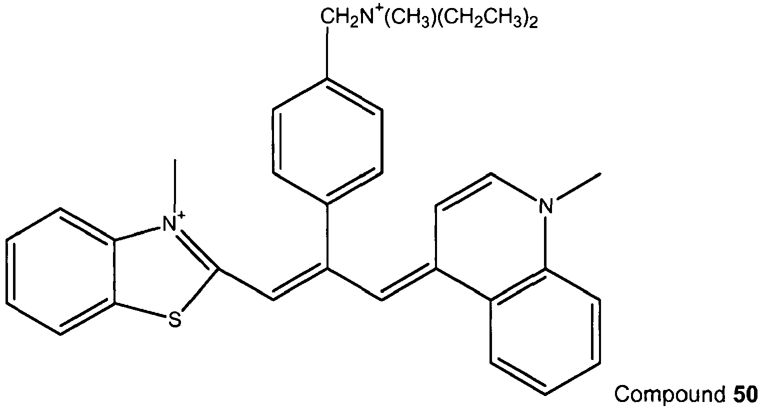

**Table 4:**

| **Compound** | **Excitation/Emission (nm)¹** | **Fluorescence Enhancement Ratio (RNA/DNA)²** |
|---|---|---|
| **50** | 631/667 | 200 |

| | | |
|---|---|---|
| ¹ Complex with nucleic acid ² The ratio of the fluorescence enhancement of the compound when associated with RNA to the fluorescence enhancement of the compound when associated with DNA | | |

### Example 4: Enhanced fluorescence emission of Compound 20 when associated with rRNA vs DNA.

A stock solution of Compound **20** is made by dissolving about 0.1 to about 0.3 mg of the compound in 1 mL of DMF. The stock solution is then diluted in 10 mM TRIS, 1 mM EDTA (pH 7.2) with 20 µL of stock solution. This dilute solution exhibits an optical density (OD) of ∼0.29562 and an extinction coefficient of 45,000, yielding a working concentration of ∼1.3-3.8 µM. Compound **21,** at a concentration of about 1.3-3.8 µM, is added to the test samples (1) rRNA and 2) DNA calf thymus. The RNA and DNA are present at a final concentration of about 104 µg/mL. After addition of the dye and the nucleic acid the samples are excited at 631 nm and the resulting fluorescence emission is recorded. The results are shown in Fig. 1.

Using this or similar methodology, a variety of compounds as described herein may be screened for their fluorescence properties when associated with nucleic acids. Similarly, compounds may be screened based upon their relative fluorescence enhancement when associated with RNA versus DNA. Compounds can be readily screened for a particular desired intensity, wavelength, or selectivity for RNA and/or DNA.

### Example 5: Association of Compound 20 with selected nucleic acids

A buffer solution of 200 µL of 10 mM TRIS, 1 mM EDTA (pH7.2) is added to the wells of a 96-well microplate. RNA and DNA (calf thymus) dilutions in TE (pH 7.2) are added to the appropriate wells to yield final concentrations of 0-2,000 ng/mL. In separate wells the following combinations of RNA and DNA are prepared:

| RNA (ng/mL) | DNA (ng/mL) |
|---|---|
| 0 | 2,000 |
| 400 | 1,600 |
| 800 | 1,200 |
| 1,200 | 800 |
| 1,600 | 400 |
| 2,000 | 0 |

Compound **20,** from a stock solution in DMF, is added to the microplate wells at a final concentration of 0.1 µM. The wells are read at 631 nm/ 665 nm Ex/Em. Compound **20** demonstrates an increased fluorescent intensity signal with increasing concentrations of RNA but little to no signal when combined with DNA alone. These results are confirmed wherein the combined RNA + DNA results in the same signal intensity for the corresponding concentration of RNA. These results are shown in Fig. 2.

Using this or similar methodology, a variety of compounds as described herein may be screened for utility in detecting RNA in the presence of DNA.

### Example 6: Binding of Compound 20 to RNA

A buffer solution of 200 µL of 10 mM TRIS, 1 mM EDTA (pH7.2) is added to the wells of a 96-well microplate. rRNA, tRNA and mRNA dilutions in TE (pH7.2) are added to the appropriate wells to yield final concentrations of 0-2,000 ng/mL. Compound **20,** as a stock solution in DMF, is added to the microplate wells to a final concentration of 0.1 µM. The samples in each well are excited at 631 nm, and the fluorescence emission at 665 nm is observed. Compound **20** exhibits comparable fluorescent signal when associated with each variety of RNA tested. The results are shown in Fig. 3.

### Example 7: Binding of Compound 20 to RNA, and a mixture of RNA and DNA

A buffer solution of 200 µL of 10 mM TRIS, 1 mM EDTA (pH 7.2) is added to the wells of a 96-well microplate. RNA and DNA (calf thymus) dilutions in TE (pH 7.2) are added to the appropriate wells to yield final concentrations of 0-200 ng/mL. In separate wells RNA and DNA are combined so that the combined nucleic acid concentration is always 200 ng/mL (For example, RNA and DNA respectively, 0 ng/mL + 200 ng/mL, 40 ng/mL + 160 ng/mL, 80 ng/mL + 120 ng/mL, 120 ng/mL + 80 ng/mL, 160 ng/mL + 40 ng/mL, and 200 ng/mL + 0 ng/mL. Compound **20,** prepared using a stock solution in DMF, is added to the microplate wells to a final concentration of 0.025 µM. The wells are excited at 631 nm, and the fluorescence recorded at 665 nm. Compound **20** demonstrates strong selectivity for RNA, as shown in Figs. 4 and 4A.

### Example 8: Detection of nucleic acids in electrophoretic gels

### Compound 20 stock solution

A stock solution of Compound **20** is prepared by dissolving 2.1 mg of Compound **20** in 2.0 mL DMSO.

### Loading Dye stock solution

A loading dye stock solution is prepared by adding 50 µL of Fermentas 6x loading dye solution (s/n R0611) to 550 µL 0.5X TBE.

### DNA Stock solution

3 µL DNA (λ *Hind*III, Roche, 0.25 µg/µL) is added to 57 µL of loading dye stock solution, and the resulting DNA stock solution is used to prepare a dilution series of DNA in 0.5X TBE.

### RNA stock solution

1 µL of ribosomal RNA (16S and 23S, Roche, 4 µg/µl) is added to 128 µL loading dye stock solution, and the resulting RNA stock solution is used to prepare a dilution series of RNA in 0.5X TBE.

A precast 1% agarose gel (Embi tec GE-4040) is then loaded with the respective dilution series as follows:

| | |
|---|---|
| Lane 1 | 125 ng DNA |
| Lane 2 | 62.5 ng DNA |
| Lane 3 | 31.2 ng DNA |
| Lane 4 | 15.6 ng DNA |
| Lane 5 | 7.8 ng DNA |
| Lane 6 | 3.9 ng DNA |
| Lane 7 | Blank |
| Lane 8 | 125 ng RNA |
| Lane 9 | 62.5 ng RNA |
| Lane 10 | 31.2 ng RNA |
| Lane 11 | 15.6 ng RNA |
| Lane 12 | 7.8 ng RNA |
| Lane 13 | 3.9 ng RNA |

The gel is electrophoresed for 15 minutes at 50 V in 0.5X TBE. The gel is then removed from the electrophoresis apparatus and placed directly in a staining solution prepared by adding 25 µL of the Compound **20** stock solution to 50 mL 0.5X TBE, and the gel is stained for 20 minutes. The stained nucleic acid bands are recorded using a Fuji FLA-3000 gel scanner, using 633 nm laser illumination, and a 675 nm filter. The fluorescence intensity of each band is then quantified, with a correction for background fluorescence. The stained RNA bands exhibit a fluorescence signal that is 60-200% more intense than the corresponding DNA bands.

### Example 9: Detection of single-stranded DNA on a microarray

A microarray consisting of a dilution series (208 pg, 104 pg, 52 pg, 26 pg, 13 pg, 6.5 pg) of a pUC DNA marker (pUC19 DNA digested with *Msp*I and pUC57 DNA digested with *Dra*I and *Hind*III, corresponding to pUC Mix Marker 8 supplied by MBI Fermentas, Hanover, MD) is printed on a slide using a Packard BioChip Piezo microarray spotter. The dilution series is printed using either 50% DMSO/50% H₂O to denature the DNA and render it single stranded, or using 3x SSC to retain double-strandedness. The slide is equilibrated in 0.1x SSC to remove any excess printing buffer, and then soaked in the stain solution at a concentration of 1 µM for the staining compound in ½X TBE for 5 minutes, followed by a 5 minute wash in ½X TBE to remove any excess compound. The slide is then imaged using the Packard ScanArray 5000XL using 633nm laser excitation. The resulting image clearly shows the top row of ssDNA is stained by the dye down to a concentration of 52 pg, while the dsDNA spots remained undetectable. This suggests that the compound has a higher affinity for ssDNA immobilized on solid supports compared to dsDNA. This affinity may be correlated to a corresponding affinity for RNA that is single stranded.

The preceding examples may be repeated similarly by substituting the specifically described nucleic acid reporter molecules of the preceding examples with those alternative compounds either generically or specifically described in the foregoing description.

## Claims

1. A compound having the formula: 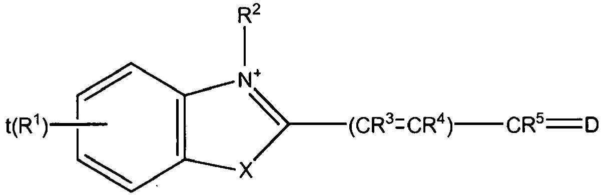
each R¹ is independently hydrogen, carboxy, sulfo, phosphate, phosphonate, amino, hydroxyl, trifluoromethyl, halogen, alkyl, substituted alkyl, alkoxy, substituted alkoxy, alkylamino, substituted alkylamino, dialkylamino, substituted dialkylamino, aminoalkyl, substituted aminoalkyl, fused benzene, substituted fused benzene, reactive group, solid support or carrier molecule;
wherein the reactive group is an acrylamide, a carboxylic acid, an activated ester of a carboxylic acid, a succinimidyl ester of a carboxylic acid, a carboxylic ester, an acyl azide, an acyl nitrile, an aldehyde, an alkyl halide, an anhydride, an aniline, an amine, an aryl halide, an azide, an aziridine, a boronate, a diazoalkane, a haloacetamide, a haloalkyl, a halotriazine, a hydrazine, an imido ester, an isocyanate, an isothiocyanate, a maleimide, a phosphoramidite, a reactive platinum complex, a silyl halide, a sulfonyl halide, a thiol or a photoactivatable group;
wherein the carrier molecule is an amino acid, an antibody or fragment thereof, an avidin, streptavidin, a biotin, a blood component protein, a dextran, a drug, an enzyme, an enzyme inhibitor, a hapten, a hormone, an IgG binding protein, a fluorescent protein, a growth factor, a lectin, a lipid, a lipid assembly, a lipopolysaccharide, a microorganism, a metal binding protein, a metal chelating moiety, a non-biological microparticle, a polymeric microparticle, a nucleoside, a nucleotide, a nucleic acid polymer, an oligonucleotide, a peptide, a peptide toxin, a phosphotidylserine-binding protein, a protein, a polysaccharide, a psoralen, a structural protein, a small-molecule drug, a synthetic polymer, a tyramide, a biological cell or a virus;
wherein the solid support is a microfluidic chip, a silicon chip, a microscope slide, a microplate well, silica gels, polymeric membranes, particles, derivatized plastic films, glass beads, cotton, plastic beads, alumina gels, polysaccharides, polyvinylchloride, polypropylene, polyethylene, nylon, latex bead, magnetic bead, paramagnetic bead, superparamagnetic bead, sepharose, poly(acrylate), polystyrene, poly(acrylamide), polyol, agarose, agar, cellulose, dextran, starch, FICOLL, heparin, glycogen, amylopectin, mannan, inulin, nitrocellulose, diazocellulose or starch;
t is an integer from 1 to 4;
wherein R² is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium;
at least one of R³ and R⁵ is an alkyl, substituted alkyl, a 5-, 6- or 7- membered heterocycloalkyl, a substituted 5-, 6- or 7- membered heterocycloalkyl, a 5-, 6- or 7-membered cycloalkyl, a substituted 5-, 6- or 7- membered cycloalkyl, a 5-, 6- or 7-membered heteroaryl, a substituted 5-, 6- or 7- membered heteroaryl, a 5-, 6- or 7-membered aryl or a substituted 5-, 6- or 7- membered aryl; and the remaining R³ or R⁵ is hydrogen; or R³ and R⁵ are both hydrogen;
R⁴ is a phenyl substituent, substituted by one or more of F, Cl, CF₃, -CO₂CH₃, NO₂, amino, C₁-C₆ alkoxy, phenoxy, and C₁-C₆ alkyl that is itself optionally further substituted by amino, sulfo, or carboxy;
X is S, O, or Se; and
D is a substituted pyridinium, unsubstituted pyridinium, substituted quinolinium, unsubstituted quinolinium, substituted benzazolium or unsubstituted benzazolium moiety.

2. The compound of claim 1, wherein D comprises: 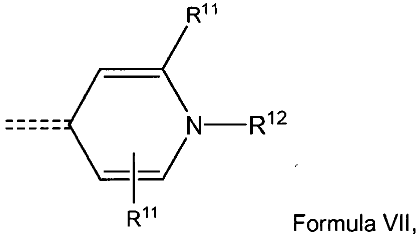 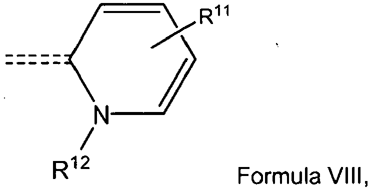 or 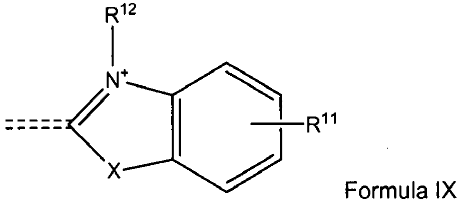
wherein each R¹¹ is hydrogen, substituted alkyl, unsubstituted alkyl, substituted heteroalkyl, unsubstituted heteroalkyl, substituted aryl, unsubstituted aryl, substituted arylalkyl, unsubstituted arylalkyl, substituted heteroarylalkyl; unsubstituted heteroarylalkyl, substituted heteroaryl, unsubstituted heteroaryl, substituted cycloalkyl, unsubstituted cycloalkyl, substituted heterocycloalkyl, unsubstituted heterocycloalkyl, halogen, alkoxy, substituted alkylamino, unsubstituted alkylamino, substituted alkylthio, unsubstituted alkylthio, reactive group, solid support, or carrier molecule, wherein said reactive group, solid support or carrier molecule is as defined in claim 1;
R¹² substituent is an alkyl, substituted alkyl, arylalkyl, substituted arylalkyl, heteroalkyl, substituted heteroalkyl, alkoxy, substituted alkoxy, carboxy, carboxyalkyl, hydroxy, hydroxyalkyl, sulfo, sulfoalkyl, amino, aminoalkyl, alkylamino, dialkylamino, or trialkylammonium;
or R¹¹ in combination with an adjacent R¹¹ or R¹², together with the atoms to which they are joined, form a ring which is a 5-, 6- or 7- membered heterocycloalkyl, a substituted 5-, 6- or 7- membered heterocycloalkyl, a 5-, 6- or 7- membered cycloalkyl, a substituted 5-, 6- or 7- membered cycloalkyl, a 5-, 6- or 7- membered heteroaryl, a substituted 5-, 6- or 7- membered heteroaryl, a 5-, 6- or 7- membered aryl or a substituted 5-, 6- or 7- membered aryl; and
X is S, O, orSe.

3. The compound according to Claim 1 or 2, wherein the compound exhibits a fluorescence enhancement when non-covalently associated with a nucleic acid, optionally wherein the fluorescence enhancement is greater when the nucleic acid is RNA than when the nucleic acid is DNA.

4. The compound according to Claim 1 or 2, wherein:
R⁶ is hydrogen, alkyl, substituted alkyl, alkoxy, substituted alkoxy, sulfoalkyl or aminoalkyl;
R⁷ is hydrogen, alkyl, substituted alkyl, alkoxy, substituted alkoxy, sulfoalkyl or aminoalkyl; and
R⁸ is hydrogen, alkyl, substituted alkyl, alkoxy, substituted alkoxy, sulfoalkyl or aminoalkyl.

5. The compound according to any preceding claim, wherein:
X is S; and/or
R¹ is alkoxy or halogen, and/or at least one R¹ is methoxy, Br, Cl, or F; and/or
R² is methyl, ethyl, propyl, or -(CH₂)₃SO₃⁻; and/or
the reactive group, solid support and carrier molecule comprise a linker that is a single covalent bond, or a covalent linkage that is linear or branched, cyclic or heterocyclic, saturated or unsaturated, having 1-20 nonhydrogen atoms selected from the group consisting of C, N, P, O and S; and are composed of any combination of ether, thioether, amine, ester, carboxamide, sulfonamide, hydrazide bonds, and aromatic or heteroaromatic bonds.

6. The compound according to Claim 1, having the formula

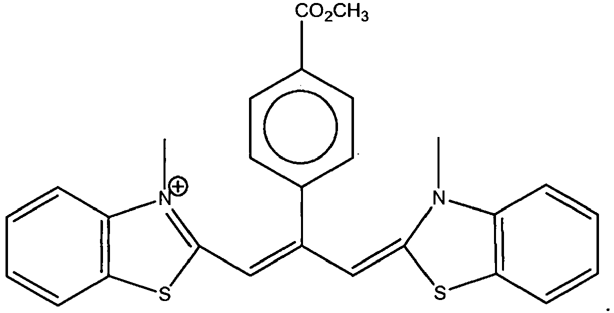

7. A composition comprising a nucleic acid reporter molecule of any of the preceding claims and a sample, optionally
wherein the sample comprises biological fluids, buffer solutions, live cells, fixed cells, eukaryotic cells, prokaryotic cells, nucleic acid polymer, nucleosides, nucleotides, a polymeric gel or tissue sections, further optionally
wherein the nucleic acid polymer is single stranded RNA, double stranded RNA, single stranded DNA or double stranded DNA.

8. A complex comprising a nucleic acid reporter molecule of any of claims 1-6 non-covalently associated with a nucleic acid molecule, optionally further comprising at least one of the following:
wherein the nucleic acid molecule is single stranded RNA, double stranded RNA, single stranded DNA or double stranded DNA;
wherein the nucleic acid comprises mRNA, tRNA, or rRNA;
wherein the complex is present in a biological sample;
wherein the complex is present in an aqueous or aqueous miscible solution; and
wherein the complex is present in an electrophoretic matrix or polymeric gel.

9. A method for detecting the presence or absence of nucleic acid in a sample, wherein the method comprises:
a) combining a nucleic acid reporter molecule of any of claims 1-6 with the sample to prepare a labeling mixture;
b) incubating the labeling mixture for a sufficient amount of time for the nucleic acid reporter molecule to associate with the nucleic acid in the sample to form an incubated mixture;
c) illuminating the incubated mixture with an appropriate wavelength to form an illuminated mixture; and,
d) observing the illuminated mixture whereby the presence or absence of the nucleic acid in the sample is detected.

10. The method according to Claim 9, further comprising quantifying the nucleic acid present in the sample; and/or
wherein the nucleic acid is RNA; and/or
wherein the nucleic acid comprises mRNA, tRNA, or rRNA; and/or
wherein the sample comprises biological fluids, buffer solutions, live cells, fixed cells, eukaryotic cells, prokaryotic cells, nucleic acid polymers, nucleotides, nucleosides, a polymeric gel or tissue sections; and/or
wherein the sample comprises a cell, tissue, or biological fluid, optionally wherein the sample is present in or on a microarray or a microwell plate.

11. A method for detecting RNA in the presence of DNA, wherein the method comprises the steps:
a) combining a nucleic acid reporter molecule of any of claims 1-6 with a sample to prepare a labeling mixture, wherein the nucleic acid reporter molecule has a RNA/DNA ratio of fluorescence enhancement greater than about one;
b) incubating the labeling mixture for a sufficient amount of time for the nucleic acid reporter molecule to associate with RNA in the sample to form an incubated mixture;
c) illuminating the incubated mixture with an appropriate wavelength to form an illuminated mixture; and,
d) observing the illuminated mixture whereby the RNA is detected in the presence of DNA.

12. The method according to Claim 11, further comprising quantifying the RNA present in the sample; and/or
wherein the sample comprises biological fluids, buffer solutions, live cells, fixed cells, eukaryotic cells, prokaryotic cells, nucleic acid polymers, nucleotides, nucleosides, a polymeric gel or tissue sections; and/or
wherein the sample comprises a cell, tissue, or biological fluid; and/or
wherein the sample is present in or on a microarray or a microwell plate; and/or wherein the fluorescence of the nucleic acid reporter molecule when non-covalently associated with RNA is distinguishable from the fluorescence of the nucleic acid reporter molecule when non-covalently associated with DNA; and/or
wherein the RNA comprises mRNA, tRNA, or rRNA.

13. A kit for detecting nucleic acid in a sample, wherein the kit comprises a nucleic acid reporter molecule of any of claims 1-6.

14. The kit according to Claim 17, further comprising instructions for detecting RNA in the presence of DNA; and/or
further comprising one or more of a sample preparation reagent, a buffering agent, an aqueous nucleic acid reporter molecule dilution buffer, an organic solvent, nucleic acid control, or an additional detection reagent; and/or
wherein the nucleic acid reporter dilution buffer contains a low concentration of DNA; and/or
further comprising a microarray or a microwell plate; and/or
wherein the kit comprises a nucleic acid reporter molecule dilution buffer which contains a detergent, optionally the detergent is present in a final concentration of about 0.0001% to about 0.005% (w/v), and/or the detergent is 3-[(3-cholamidopropyl)dimethylammonio]-propanesulfonate (CHAPS), Tween 20^{®}, Triton™-X or sodium dodecyl sulfate (SDS).

15. A staining solution comprising a nucleic acid reporter molecule of any of claims 1-6 and a detergent, optionally:
wherein the detergent present at a concentration of about 0.0001% to about 0.05%, optionally wherein the detergent is present at a concentration from about 0.0015% to about 0.005%; and/or
wherein the detergent is 3-[(3-cholamidopropyl)dimethylammonio]-propanesulfonate (CHAPS), Triton™-X, sodium dodecyl sulfate (SDS) or Tween 20^{®}; and/or
further comprising a low concentration of DNA, optionally wherein the DNA is present at a concentration of about 0.1 µg/ml to about 0.5 µg/ml.

## Patentansprüche

1. Verbindung der Formel: 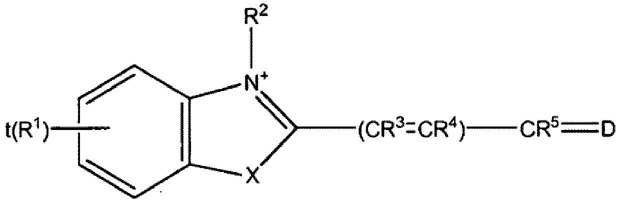
wobei jedes R¹ unabhängig für Wasserstoff, Carboxy, Sulfo, Phosphat, Phosphonat, Amino, Hydroxyl, Trifluormethyl, Halogen, Alkyl, substituiertes Alkyl, Alkoxy, substituiertes Alkoxy, Alkylamino, substituiertes Alkylamino, Dialkylamino, substituiertes Dialkylamino, Aminoalkyl, substituiertes Aminoalkyl, fusioniertes Benzol, substituiertes fusioniertes Benzol, eine reaktive Gruppe, einen festen Träger oder ein Trägermolekül steht;
wobei die reaktive Gruppe ein Acrylamid, eine Carboxylsäure, ein aktivierter Ester einer Carboxylsäure, ein Succinimidylester einer Carboxylsäure, ein Carboxylsäureester, ein Acylazid, ein Acylnitril, ein Aldehyd, ein Alkylhalogen, ein Anhydrid, ein Anilin, ein Amin, ein Arylhalogen, ein Azid, ein Aziridin, ein Boronat, ein Diazoalkan, ein Halogenacetamid, ein Halogenalkyl, ein Halogentriazin, ein Hydrazin, ein Imidoester, ein Isocyanat, ein Isothiocyanat, ein Maleimid, ein Phosphoramidit, ein reaktiver Platinkomplex, ein Silylhalogen, ein Sulfonylhalogen, ein Thiol oder eine fotoaktivierbare Gruppe ist;
wobei das Trägermolekül eine Aminosäure, ein Antikörper oder Fragment davon, ein Avidin, Streptavidin, ein Biotin, ein Blutkomponenten-Protein, ein Dextran, ein Arzneimittel, ein Enzym, ein Enzym-Inhibitor, ein Hapten, ein Hormon, ein IgG-bindendes Protein, ein fluoreszierendes Protein, ein Wachstumsfaktor, ein Lektin, ein Lipid, eine Lipid-Gruppe, ein Lipopolysaccharid, ein Mikroorganismus, ein Metall-bindendes Protein, eine Metall-chelatierende Gruppe, ein nicht-biologisches Mikropartikel, ein Polymer-Mikropartikel, ein Nukleosid, ein Nukleotid, ein Nukleinsäure-Polymer, ein Oligonukleotid, ein Peptid, ein Peptid-Toxin, ein Phosphotidylserin-bindendes Protein, ein Protein, ein Polysaccharid, ein Psoralen, ein Strukturprotein, ein niedermolekulares Arzneimittel, ein synthetisches Polymer, ein Tyramid, eine biologische Zelle oder ein Virus ist;
wobei der feste Träger ein mikrofluidischer Chip, ein Silizium-Chip, ein Mikroskop-Objektträger, ein Mikroplatten-Well, Silica-Gele, Polymer-Membranen, Partikel, derivatisierte Kunststofffilme, Glas-Beads, Baumwolle, Kunststoff-Beads, Aluminiumoxid-Gele, Polysaccharide, Polyvinylchlorid, Polypropylen, Polyethylen, Nylon, Latex-Beads, Magnet-Beads, paramagnetische Beads, superparamagnetische Beads, Sepharose, Polyacrylat, Polystyrol, Polyacrylamid, Polyol, Agarose, Agar, Cellulose, Dextran, Stärke, FICOLL, Heparin, Glycogen, Amylopectin, Mannan, Inulin, Nitrocellulose, Diazocellulose oder Stärke ist;
wobei t für eine ganze Zahl von 1 bis 4 steht;
wobei R² für Alkyl, substituiertes Alkyl, Arylalkyl, substituiertes Arylalkyl, Heteroalkyl, substituiertes Heteroalkyl, Alkoxy, substituiertes Alkoxy, Carboxy, Carboxyalkyl, Hydroxy, Hydroxyalkyl, Sulfo, Sulfoalkyl, Amino, Aminoalkyl, Alkylamino, Dialkylamino oder Trialkylammonium steht;
wobei mindestens einer aus R³ und R⁵ für ein Alkyl, substituiertes Alkyl, ein 5-, 6-oder 7-elementiges Heterocycloalkyl, ein substituiertes 5-, 6- oder 7-elementiges Heterocycloalkyl, ein 5-, 6- oder 7-elementiges Cycloalkyl, ein substituiertes 5-, 6- oder 7-elementiges Cycloalkyl, ein 5-, 6- oder 7-elementiges Heteroaryl, ein substituiertes 5-, 6- oder 7-elementiges Heteroaryl, ein 5-, 6- oder 7-elementiges Aryl oder ein substituiertes 5-, 6- oder 7-elementiges Aryl steht; und das verbleibende R³ oder R⁵ für Wasserstoff steht; oder R³ und R⁵ beide für Wasserstoff stehen;
wobei R⁴ für einen Phenyl-Substituenten steht, der durch eine oder mehrere aus F, Cl, CF₃, -CO₂CH₃, NO₂, Amino, C₁-C₆-Alkoxy, Phenoxy und C₁-C₆-Alkyl substituiert ist, das selbst optional ferner durch Amino, Sulfo oder Carboxy substituiert ist;
wobei X für S, O oder Se steht; und
wobei D für einen substituierten Pyridinium-, unsubstituierten Pyridinium-, substituierten Chinolinium-, unsubstituierten Chinolinium-, substituierten Benzazolium- oder unsubstituierten Benzazolium-Rest steht.

2. Verbindung nach Anspruch 1, wobei D Folgendes umfasst: 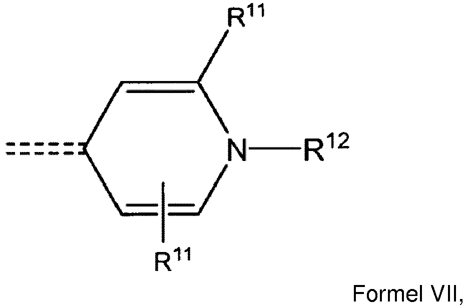 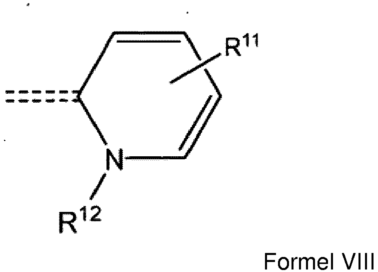 oder 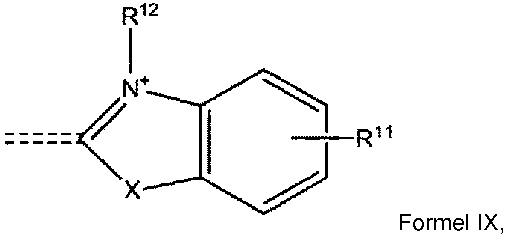
wobei jedes R¹¹ für Wasserstoff, substituiertes Alkyl, unsubstituiertes Alkyl, substituiertes Heteroalkyl, unsubstituiertes Heteroalkyl, substituiertes Aryl, unsubstituiertes Aryl, substituiertes Arylalkyl, unsubstituiertes Arylalkyl, substituiertes Heteroarylalkyl, unsubstituiertes Heteroarylalkyl, substituiertes Heteroaryl, unsubstituiertes Heteroaryl, substituiertes Cycloalkyl, unsubstituiertes Cycloalkyl, substituiertes Heterocycloalkyl, unsubstituiertes Heterocycloalkyl, Halogen, Alkoxy, substituiertes Alkylamino, unsubstituiertes Alkylamino, substituiertes Alkylthio, unsubstituiertes Alkylthio, eine reaktive Gruppe, ein fester Träger oder ein Trägermolekül steht, wobei die reaktive Gruppe, der feste Träger oder das Trägermolekül wie in Anspruch 1 definiert ist;
wobei der R¹²-Substituent für ein Alkyl, substituiertes Alkyl, Arylalkyl, substituiertes Arylalkyl, Heteroalkyl, substituiertes Heteroalkyl, Alkoxy, substituiertes Alkoxy, Carboxy, Carboxyalkyl, Hydroxy, Hydroxyalkyl, Sulfo, Sulfoalkyl, Amino, Aminoalkyl, Alkylamino, Dialkylamino oder Trialkylammonium steht;
oder R¹¹ in Kombination mit einem benachbarten R¹¹ oder R¹² zusammen mit den Atomen, mit denen sie verbunden sind, einen Ring bilden, der ein 5-, 6- oder 7-elementiges Heterocycloalkyl, ein substituiertes 5-, 6- oder 7-elementiges Heterocycloalkyl, ein 5-, 6- oder 7-elementiges Cycloalkyl, ein substituiertes 5-, 6- oder 7-elementiges Cycloalkyl, ein 5-, 6- oder 7-elementiges Heteroaryl, ein substituiertes 5-, 6- oder 7-elementiges Heteroaryl, ein 5-, 6- oder 7-elementiges Aryl oder ein substituiertes 5-, 6- oder 7-elementiges Aryl ist; und
wobei X für S, O oder Se steht.

3. Verbindung nach Anspruch 1 oder 2, wobei die Verbindung eine Fluoreszenzverstärkung aufweist, wenn sie nicht kovalent mit einer Nukleinsäure verknüpft ist, wobei die Fluoreszenzverstärkung optional größer ist, wenn die Nukleinsäure RNA anstelle von DNA ist.

4. Verbindung nach Anspruch 1 oder 2, wobei:
R⁶ für Wasserstoff, Alkyl, substituiertes Alkyl, Alkoxy, substituiertes Alkoxy, Sulfoalkyl oder Aminoalkyl steht;
R⁷ für Wasserstoff, Alkyl, substituiertes Alkyl, Alkoxy, substituiertes Alkoxy, Sulfoalkyl oder Aminoalkyl steht;
R⁸ für Wasserstoff, Alkyl, substituiertes Alkyl, Alkoxy, substituiertes Alkoxy, Sulfoalkyl oder Aminoalkyl steht.

5. Verbindung nach einem der vorangehenden Ansprüche, wobei
X für S steht; und/oder
R¹ für Alkoxy oder Halogen, und/oder mindestens ein R¹ für Methoxy, Br, Cl oder F steht; und/oder
R² für Methyl, Ethyl, Propyl oder -(CH₂)₃SO₃⁻ steht; und/oder
die reaktive Gruppe, der feste Träger und das Trägermolekül einen Linker umfassen, der eine einfache kovalente Bindung oder eine kovalente Verknüpfung ist, die verzweigt oder unverzweigt, zyklisch oder heterozyklisch, gesättigt oder ungesättigt mit 1 bis 20 Nicht-Wasserstoff-Atomen, ausgewählt aus der Gruppe, die aus C, N, P, O und S besteht, ist; und die zusammengesetzt sind aus einer beliebigen Kombination aus Ether, Thioether, Amin, Ester, Carboxamid, Sulfonamid, Hydrazid-Bindungen und aromatischen oder heteroaromatischen Bindungen.

6. Verbindung nach Anspruch 1 mit der Formel:

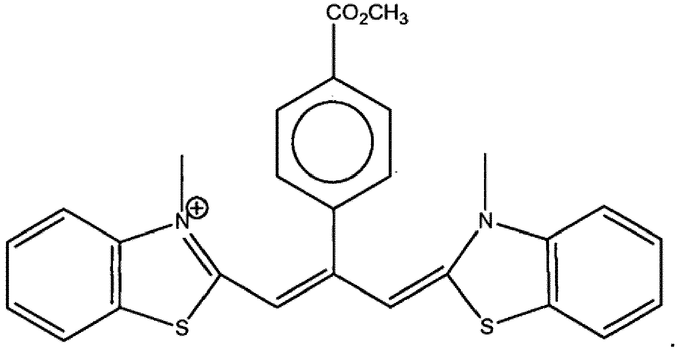

7. Zusammensetzung, die ein Nukleinsäure-Reportermolekül nach einem der vorangehenden Ansprüche und optional eine Probe umfasst,
wobei die Probe biologische Fluide, Pufferlösungen, lebende Zellen, fixierte Zellen, eukaryotische Zellen, prokaryotische Zellen, Nukleinsäure-Polymere, Nukleoside, Nukleotide, ein Polymergel oder Gewebeschnitte umfasst,
wobei ferner optional das Nukleinsäure-Polymer einzelsträngige RNA, doppelsträngige RNA, einzelsträngige DNA oder doppelsträngige DNA ist.

8. Komplex, der ein Nukleinsäure-Reportermolekül nach einem der Ansprüche 1 bis 6 umfasst, das nicht kovalent mit einem Nukleinsäure-Molekül verknüpft ist und optional mindestens eins aus Folgendem umfasst:
wobei das Nukleinsäure-Molekül einzelsträngige RNA, doppelsträngige RNA, einzelsträngige DNA oder doppelsträngige DNA ist;
wobei die Nukleinsäure mRNA, tRNA oder rRNA umfasst;
wobei der Komplex in einer biologischen Probe vorliegt;
wobei der Komplex in einer wässrigen oder mit Wasser mischbaren Lösung vorliegt; und
wobei der Komplex in einer Elektrophorese-Matrix oder einem Polymergel vorliegt.

9. Verfahren zur Detektion der Gegenwart oder des Fehlens einer Nukleinsäure in einer Probe, wobei das Verfahren Folgendes umfasst:
a) Kombinieren eines Nukleinsäure-Reportermoleküls nach einem der Ansprüche 1 bis 6 mit der Probe, um eine Markierungsmischung darzustellen;
b) Inkubieren der Markierungsmischung für eine ausreichende Zeitdauer, damit sich das Nukleinsäure-Reportermolekül an der Nukleinsäure in der Probe anlagern kann, um eine inkubierte Mischung zu bilden;
c) Beleuchten der inkubierten Mischung mit einer geeigneten Wellenlänge, um eine beleuchtete Mischung zu bilden; und
d) Beobachten der beleuchteten Mischung, wobei die Gegenwart oder das Fehlen der Nukleinsäure in der Probe detektiert wird.

10. Verfahren nach Anspruch 9, das ferner das Quantifizieren der in der Probe vorliegenden Nukleinsäure umfasst; und/oder
wobei die Nukleinsäure RNA ist; und/oder
wobei die Nukleinsäure mRNA, tRNA oder rRNA umfasst; und/oder wobei die Probe biologische Fluide, Pufferlösungen, lebende Zellen, fixierte Zellen, eukaryotische Zellen, prokaryotische Zellen, Nukleinsäure-Polymere, Nukleoside, Nukleotide, ein Polymergel oder Gewebeschnitte umfasst; und/oder wobei die Probe eine Zelle, ein Gewebe oder ein biologisches Fluid umfasst, wobei die Probe optional in oder auf einem Microarray oder einer Mikrowell-Platte vorliegt.

11. Verfahren zur Detektion von RNA in Gegenwart von DNA, wobei das Verfahren die folgenden Schritte umfasst:
a) Kombinieren eines Nukleinsäure-Reportermoleküls nach einem der Ansprüche 1 bis 6 mit einer Probe, um eine Markierungsmischung darzustellen, wobei das Nukleinsäure-Reportermolekül ein RNA/DNA-Verhältnis einer Fluoreszenzverstärkung von mehr als ca. 1 aufweist;
b) Inkubieren der Markierungsmischung für eine ausreichende Zeitdauer, damit sich das Nukleinsäure-Reportermolekül an RNA in der Probe anlagern kann, um eine inkubierte Mischung zu bilden;
c) Beleuchten der inkubierten Mischung mit einer geeigneten Wellenlänge, um eine beleuchtete Mischung zu bilden; und
d) Beobachten der beleuchteten Mischung, wobei die RNA in Gegenwart von DNA detektiert wird.

12. Verfahren nach Anspruch 11, das ferner das Quantifizieren der in der Probe vorliegenden RNA umfasst; und/oder
wobei die Probe biologische Fluide, Pufferlösungen, lebende Zellen, fixierte Zellen, eukaryotische Zellen, prokaryotische Zellen, Nukleinsäure-Polymere, Nukleoside, Nukleotide, ein Polymergel oder Gewebeschnitte umfasst; und/oder
wobei die Probe eine Zelle, ein Gewebe oder ein biologisches Fluid umfasst; und/oder
wobei die Probe in oder auf einem Microarray oder einer Microwell-Platte vorliegt; und/oder
wobei die Fluoreszenz des Nukleinsäure-Reportermoleküls bei nicht kovalenter Verknüpfung mit RNA von der Fluoreszenz des Nukleinsäure-Reportermoleküls bei nicht kovalenter Verknüpfung mit DNA unterscheidbar ist; und/oder
wobei die RNA mRNA, tRNA oder rRNA umfasst.

13. Kit zur Detektion von Nukleinsäure in einer Probe, wobei der Kit ein Nukleinsäure-Reportermolekül nach einem der Ansprüche 1 bis 6 umfasst.

14. Kit nach Anspruch 17, der ferner Anweisungen zur Detektion von RNA in Gegenwart von DNA umfasst; und/oder
der ferner ein oder mehrere aus einem Proben-Zubereitungsreagenz, einem puffernden Agens, einem wässrigen Nukleinsäure-Reportermolekül-Verdünnungspuffer, einem organischen Lösungsmittel, einer Kontroll-Nukleinsäure oder einem zusätzlichen Detektionsmittel umfasst; und/oder
wobei der Nukleinsäure-Reporter-Verdünnungspuffer eine geringe Konzentration von DNA enthält; und/oder
der ferner einen Microarray oder eine Microwell-Platte umfasst; und/oder
wobei der Kit einen Nukleinsäure-Reportermolekül-Verdünnungspuffer umfasst, der optional ein Divergenz enthält, wobei das Divergenz in einer Endkonzentration von ca. 0,0001% bis ca. 0,005% (w/v) vorliegt und/oder das Divergenz 3-[(3-Cholamidopropyl)dimethylammonio]-propansulfonat (CHAPS), Tween 20®, Triton™-X oder Natriumdodecylsulfat (SDS) ist.

15. Färbelösung, die ein Nukleinsäure-Reportermolekül nach einem der Ansprüche 1 bis 6 und optional ein Divergenz umfasst,
wobei das Divergenz optional in einer Konzentration von ca. 0,0001% bis ca. 0,05% vorliegt, wobei das Divergenz in einer Konzentration von ca. 0,0015% bis ca. 0,005% vorliegt; und/oder
wobei das Divergenz 3-[(3-Cholamidopropyl)dimethylammonio]-propansulfonat (CHAPS), Triton™-X, Natriumdodecylsulfat (SDS) oder Tween 20® ist; und/oder ferner optional umfassend eine geringe Konzentration von DNA, wobei die DNA optional in einer Konzentration von ca. 0,1µg/ml bis ca. 0,5 µg/ml vorliegt.

## Revendications

1. Composé de formule : 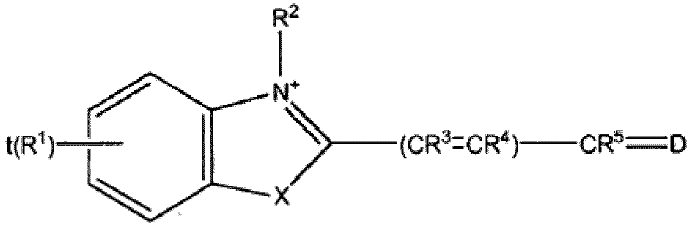
chaque R¹ étant indépendamment hydrogène, carboxy, sulfo, phosphate, phosphonate, amino, hydroxyle, trifluorométhyle, halogène, alkyle, alkyle substitué, alcoxy, alcoxy substitué, alkylamino, alkylamino substitué, dialkylamino, dialkylamino substitué, aminoalkyle, aminoalkyle substitué, benzène fusionné, benzène fusionné substitué, un groupe réactif, un support solide ou une molécule support ;
le groupe réactif étant un acrylamide, un acide carboxylique, un ester activé d'un acide carboxylique, un ester de succinimidyle d'un acide carboxylique, un ester carboxylique, un azoture d'acyle, un acylnitrile, un aldéhyde, un halogénure d'alkyle, un anhydride, une aniline, une amine, un halogénure d'aryle, un azoture, une aziridine, un boronate, un diazoalcane, un haloacétamide, un halogénure d'alkyle, une halotriazine, une hydrazine, un imidoester, un isocyanate, un isothiocyanate, un maléimide, un phosphoramidite, un complexe réactif du platine, un halogénure de silyle, un halogénure de sulfonyle, un thiol ou un groupe photoactivable ;
la molécule support étant un acide aminé, un anticorps ou un fragment d'anticorps, une avidine, une streptavidine, une biotine, une protéine constituant du sang, un dextrane, un médicament, une enzyme, un inhibiteur d'enzyme, un haptène, une hormone, une protéine se liant à un IgG, une protéine fluorescente, un facteur de croissance, une lectine, un lipide, un assemblage de lipides, un lipopolysaccharide, un microorganisme, une protéine se liant à un métal, une entité chélatant un métal, une microparticule non-biologique, une microparticule polymère, un nucléoside, un nucléotide, un polymère d'acide nucléique, un oligonucléotide, un peptide, une toxine peptidique, une protéine se liant à la phosphotidylsérine, une protéine, un polysaccharide, un psoralène, une protéine structurelle, une petite molécule médicamenteuse, un polymère synthétique, un tyramide, une cellule biologique ou un virus ;
le support solide étant une puce microfluidique, une puce en silicium, une lame de microscope, un puits de microplaque, des gels de silice, des membranes polymères, des particules, des films plastiques dérivatisés, des billes de verre, du coton, des billes de plastique, des gels d'alumine, des polysaccharides, du polychlorure de vinyle, de polypropylène, du polyéthylène, du nylon, une bille de latex, une bille magnétique, une bille paramagnétique, une bille superparamagnétique, du sépharose, du polyacrylate, du polystyrène, du polyacrylamide, un polyol, de l'agarose, de l'agar, de la cellulose, du dextrane, de l'amidon, du ficoll, de l'héparine, du glycogène, de l'amylopectine, un mannane, de l'inuline, de la nitrocellulose, de la diazocellulose ou de l'amidon ;
t étant un entier entre 1 et 4 ;
où R² est un alkyle, un alkyle substitué, un arylalkyle, un arylalkyle substitué, un hétéroalkyle, un hétéroalkyle substitué, un alcoxy, un alcoxy substitué, un carboxy, un carboxyalkyle, un hydroxy, un hydroxyalkyle, un sulfo, un sulfoalkyle, un amino, un aminoalkyle, un alkylamino, un dialkylamino ou un trialkylammonium ;
au moins un parmi R³ et R⁵ est un alkyle, un alkyle substitué, un hétérocycloalkyle à 5, 6 ou 7 chaînons, un hétérocycloalkyle à 5, 6 ou 7 chaînons substitué, un cycloalkyle à 5, 6 ou 7 chaînons, un cycloalkyle à 5, 6 ou 7 chaînons substitué, un hétéroaryle à 5, 6 ou 7 chaînons, un hétéroaryle à 5, 6 ou 7 chaînons substitué, un aryle à 5, 6 ou 7 chaînons, un hétéroaryle à 5, 6 ou 7 chaînons substitué ; et l'autre de R³ et R⁵ est hydrogène ; ou R³ et R⁵ sont tous les deux hydrogène ;
R⁴ est un substituant phényle, substitué par un ou plusieurs parmi -F, -CI, -CF₃,-CO₂CH₃, -NO₂, amino, un alcoxy en C₁₋₆, un phénoxy, et un alkyle en C₁₋₆ facultativement substitué par amino, sulfo ou carboxy ;
X est S, 0 ou Se ; et
D est un pyridinium substitué, un pyridinium non-substitué, un quinolinium substitué, un quinolinium non-substitué, un benzazolium substitué ou un benzazolium non-substitué.

2. Composé selon la revendication 1, dans lequel D comprend : 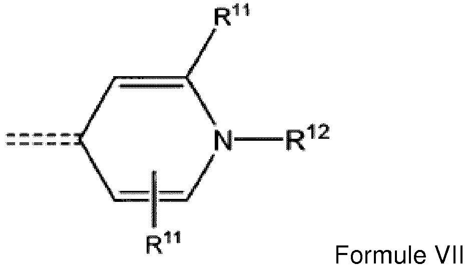 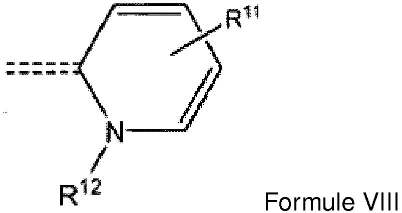 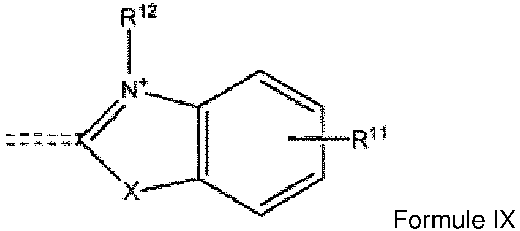
où chaque R¹¹ est hydrogène, alkyle substitué, alkyle non-substitué, hétéroalkyle substitué, hétéroalkyle non-substitué, aryle substitué, aryle non-substitué, arylalkyle substitué, arylalkyle non-substitué, hétéroarylalkyle substitué, hétéroarylalkyle non-substitué, hétéroaryle substitué, hétéroaryle non-substitué, cycloalkyle substitué, cycloalkyle non-substitué, hétérocycloalkyle substitué, hétérocycloalkyle non-substitué, halogène, alcoxy, alkylamino substitué, alkylamino non-substitué, alkylthio substitué, alkylthio non-substitué, un groupe réactif, un support solide ou une molécule support, ledit groupe réactif, support solide ou molécule support étant comme défini à la revendication 1 ;
le substituant R¹² est alkyle substitué, alkyle non-substitué, arylalkyle substitué, arylalkyle non-substitué, alcoxy, alcoxy substitué, carboxy, carboxyalkyle, hydroxy, hydroxyalkyle, sulfo, sulfoalkyle, amino, aminoalkyle, alkylamino, dialkylamino ou trialkylammonium ;
ou R¹¹, en association avec un R¹¹ ou R¹² adjacent, ensemble avec les atomes auxquels ils sont joints, forment un cycle qui est un hétérocycloalkyle à 5, 6 ou 7 chaînons, un hétérocycloalkyle à 5, 6 ou 7 chaînons substitué, un cycloalkyle à 5, 6 ou 7 chaînons, un cycloalkyle à 5, 6 ou 7 chaînons substitué, un hétéroaryle à 5, 6 ou 7 chaînons, un hétéroaryle à 5, 6 ou 7 chaînons substitué, un aryle à 5, 6 ou 7 chaînons, un hétéroaryle à 5, 6 ou 7 chaînons substitué ; et
X est S, O ou Se.

3. Composé selon la revendication 1 ou 2, le composé présentant une amélioration de sa fluorescence quand il est associé de façon non-covalente avec un acide nucléique, l'amélioration de sa fluorescence étant facultativement supérieure quand l'acide nucléique est un ARN plutôt qu'un ADN.

4. Composé selon la revendication 1 ou 2, dans lequel :
R⁶ est hydrogène, alkyle, alkyle substitué, alcoxy, alcoxy substitué, sulfoalkyle ou aminoalkyle ;
R⁷ est hydrogène, alkyle, alkyle substitué, alcoxy, alcoxy substitué, sulfoalkyle ou aminoalkyle ;
R⁸ est hydrogène, alkyle, alkyle substitué, alcoxy, alcoxy substitué, sulfoalkyle ou aminoalkyle.

5. Composé selon l'une quelconque des revendications précédentes, dans lequel :
X est S ; et/ou
R¹ est alcoxy ou halogène ; et/ou au moins un R¹ est méthoxy, Br, Cl ou F ; et/ou R² est méthyl, éthyle, propyle, ou -(CH₂)₃SO₃⁻ ; et/ou
le groupe réactif, support solide ou molécule support comprend un coupleur qui est une liaison covalente simple ou un coupleur covalent linéaire ou ramifié, cyclique ou hétérocyclique, saturé ou insaturé, comportant 1 à 20 atomes non hydrogènes choisis dans le groupe constitué de C, N, P, O et S, et composés de toute combinaison d'éther, thioéther, amine, ester, carboxamine, sulfonamine, hydrazide et de liaisons aromatiques et hétéroaromatiques.

6. Composé selon la revendication 1, de formule :

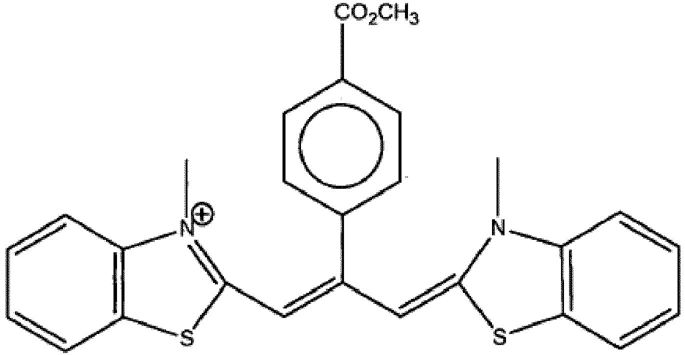

7. Composition comprenant une molécule rapporteuse d'acide nucléique selon l'une quelconque des revendications précédentes, et un échantillon, facultativement,
dans laquelle l'échantillon comprend des fluides biologiques, des solutions tampons, des cellules vivantes, des cellules immobilisées, des cellules eucaryotes, des cellules procaryotes, un polymère d'acide nucléique, des nucléosides, des nucléotides, un gel polymère ou des sections tissulaires ; en outre facultativement
dans laquelle le polymère d'acide nucléique est un ARN monocaténaire, un ARN bicaténaire, un ADN monocaténaire ou un ADN bicaténaire.

8. Complexe comprenant une molécule rapporteuse d'acide nucléique selon l'une quelconque des revendications 1 à 6 associée de façon non-covalente à une molécule d'acide nucléique, comprenant en outre facultativement au moins un parmi les points suivants :
la molécule d'acide nucléique est un ARN monocaténaire, un ARN bicaténaire, un ADN monocaténaire ou un ADN bicaténaire ;
l'acide nucléique comprend un mARN, tARN ou rARN ;
le complexe est présent dans un échantillon biologique ;
le complexe est présent dans une solution aqueuse ou miscible à une solution aqueuse ; et
le complexe est présent dans une matrice d'électrophorèse ou un gel polymère.

9. Procédé de détection de la présence ou de l'absence d'acide nucléique dans un échantillon, le procédé comprenant les étapes suivantes :
a) combiner une molécule rapporteuse d'acide nucléique selon l'une quelconque des revendications 1 à 6 avec un échantillon pour préparer le mélange de marquage ;
b) laisser incuber le mélange de marquage assez longtemps pour que la molécule rapporteuse d'acide nucléique s'associe avec l'acide nucléique dans l'échantillon pour former un mélange incubé ;
c) illuminer le mélange incubé à une longueur d'onde adéquate pour former un mélange illuminé ; et
d) observer le mélange illuminé, et ainsi détecter la présence ou l'absence d'acide nucléique dans l'échantillon.

10. Procédé selon la revendication 9, comprenant en outre la quantification de l'acide nucléique présent dans l'échantillon ; et/ou
où l'acide nucléique est un ARN ; et/ou
où l'acide nucléique comprend un mARN, tARN ou rARN ; et/ou
l'échantillon comprend des fluides biologiques, des solutions tampons, des cellules vivantes, des cellules immobilisées, des cellules eucaryotes, des cellules procaryotes, des polymères d'acide nucléique, des nucléosides, des nucléotides, un gel polymère ou des sections tissulaires ; et/ou où l'échantillon contient un cellule, un tissu ou un fluide biologique, facultativement où l'échantillon est présent dans ou sur une biopuce ou une plaque à micropuits.

11. Procédé de détection d'ARN dans la présence d'ADN, le procédé comprenant les étapes de :
a) combiner une molécule rapporteuse d'acide nucléique selon l'une quelconque des revendications 1 à 6 avec un échantillon pour préparer un mélange de marquage, la molécule rapporteuse d'acide nucléique ayant un rapport d'amélioration de fluorescence ARN/ADN supérieur à environ 1 ;
b) incuber le mélange de marquage assez longtemps pour que la molécule rapporteuse d'acide nucléique s'associe avec l'ARN dans l'échantillon pour former un mélange incubé ;
c) illuminer le mélange incubé à une longueur d'onde adéquate pour former un mélange illuminé ; et
d) observer le mélange illuminé, et ainsi détecter la présence ou l'absence d'ARN en présence d'ADN.

12. Procédé selon la revendication 11, comprenant en outre la quantification de l'ARN présent dans l'échantillon ; et/ou
où l'échantillon comprend des fluides biologiques, des solutions tampons, des cellules vivantes, des cellules immobilisées, des cellules eucaryotes, des cellules procaryotes, des polymères d'acide nucléique, des nucléosides, des nucléotides, un gel polymère ou des sections tissulaires ; et/ou où l'échantillon contient un cellule, un tissu ou un fluide biologique ; et/ou où l'échantillon est présent dans ou sur une biopuce ou une plaque à micropuits ; et/ou
où la fluorescence de la molécule rapporteuse d'acide nucléique quand elle est associée de façon non-covalente avec de l'ARN est distinguable de la fluorescence de la molécule rapporteuse d'acide nucléique quand elle est associée de façon non-covalente avec de l'ADN ; et/ou
où l'acide nucléique comprend un mARN, tARN ou rARN.

13. Kit de détection d'acide nucléique dans un échantillon, le kit comprenant une molécule rapporteuse d'acide nucléique selon l'une quelconque des revendications 1 à 6.

14. Kit selon la revendication 17, comprenant en outre des instructions pour détecter de l'ARN en présence d'ADN ; et/ou
comprenant en outre un ou plusieurs réactifs de préparation d'échantillon, un agent tampon, un tampon de dilution aqueux de la molécule rapporteuse d'acide nucléique, un solvant organique, un contrôle d'acide nucléique ou un réactif supplémentaire de détection ; et/ou
où le tampon de dilution aqueux de la molécule rapporteuse d'acide nucléique contient une faible concentration d'ADN ; et/ou
comprenant en outre une biopuce ou une plaque à micropuits ; et/ou où le kit comprend un tampon de dilution de la molécule rapporteuse d'acide nucléique qui contient un détergent, le détergent étant facultativement présent dans une concentration finale d'environ 0,0001 % à environ 0,005 % en poids volumique, et/ou le détergent est du 3-[(3-cholamidopropyl)diméthylammonio]propanesulfonate (CHAPS), du Tween 20^{®}, du Triton™-X ou du dodécylsulfate de sodium (SDS).

15. Solution colorante contenant une molécule rapporteuse d'acide nucléique selon l'une quelconque des revendications 1 à 6 et un détergent, facultativement :
où le détergent est présent dans une concentration d'environ 0,0001 % à environ 0,05 %, facultativement le détergent est présent dans une concentration d'environ 0,0015 % à environ 0,005 % ; et/ou
le détergent est du 3-[(3-cholamidopropyl)diméthylammonio]propanesulfonate (CHAPS), du Tween 20^{®}, du Triton™-X ou du dodécylsulfate de sodium (SDS) ; et/ou
contenant en outre une faible concentration d'ADN, facultativement où l'ADN est présent dans une concentration d'environ 0,1 µm/ml à environ 0,5 µm/ml.
